(19) Europäisches Patentamt
European Patent Office
Office européen des brevets

(11) **EP 2 944 568 B1**

(12) **EUROPEAN PATENT SPECIFICATION**

(45) Date of publication and mention
of the grant of the patent:
**13.10.2021 Bulletin 2021/41**

(51) Int Cl.:
***B64C 27/00*** *(2006.01)*

(21) Application number: **15166476.0**

(22) Date of filing: **02.05.2011**

(54) **HELICOPTER HUB MOUNTED VIBRATION CONTROL AND CIRCULAR FORCE GENERATION SYSTEMS FOR CANCELING VIBRATIONS**

AN EINER HUBSCHRAUBERNABE MONTIERTE VIBRATIONSSTEUERUNGS- UND DREHKRAFTERZEUGUNGSSYSTEME ZUR VIBRATIONSUNTERDRÜCKUNG

SYSTÈME DE CONTRÔLE DE VIBRATIONS MONTÉ SUR LE MOYEU D'UN HÉLICOPTÈRE ET SYSTÈMES DE GÉNÉRATION DE FORCE CIRCULAIRE PERMETTANT DE SUPPRIMER LES VIBRATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2010 US 329701 P**

(43) Date of publication of application:
**18.11.2015 Bulletin 2015/47**

(62) Document number(s) of the earlier application(s) in accordance with Art. 76 EPC:
**11719940.6 / 2 563 658**

(73) Proprietor: **LORD Corporation
Cary, NC 27511 (US)**

(72) Inventors:
• **Jolly, Mark
Raleigh, NC North Carolina 27609 (US)**
• **Black, Paul
Fuquay-Varina, NC North Carolina 27526 (US)**

(74) Representative: **Murgitroyd & Company
Murgitroyd House
165-169 Scotland Street
Glasgow G5 8PL (GB)**

(56) References cited:
WO-A2-2009/126608     US-A1- 2006 083 617
US-A1- 2010 034 655

• **None**

## Description

### Field of the Invention

The invention relates to the field of vibration control systems for actively minimizing vibrations in structures. The invention relates to the field of methods/systems for actively controlling vibrations in vehicles. More particularly the invention relates to the field of controlling vibrations in aircraft vehicles having a nonrotating body and a rotating member, and more particularly the invention relates to helicopter vibration control systems.

### Background

U.S. Patent Publication No. 2010/0034655 A1 discloses an aircraft vibration control system, comprising: a helicopter having a gear box transmission; a nonrotating aerostructure body of said helicopter; a rotating hub driven by said gear box transmission to rotate about a center Z axis of rotation of said rotating hub ; a hub mounted vibration control system (HMVCS), said HMVCS mounted to said rotating hub with said HMVCS rotating about said center Z axis of creating a force in an XV plane, wherein said HMVCS includes: at least a first HMVCS rotor with a first imbalance mass concentration , said first HMVCS rotor driven to rotate at a first rotation speed greater than an operational rotation frequency of said rotating hub ; and at least a second HMVCS rotor with a second imbalance mass concentration , said second HMVCS rotor driven to rotate at said first rotation speed greater than said operational rotation frequency of said rotating hub ; a tachometer sensor providing data correlating to said relative rotation of said rotating hub rotating relative to said nonrotating aerostructure body ; at least a first vibration sensor , attached to said nonrotating aerostructure body , said first vibration sensor and outputting vibration sensor data correlating to vibrations of said nonrotating aerostructure body , a vibration control system controller to control at least three circular force generators (CFGs) and said vibration controller receives input from said tachometer sensor and said first vibration sensor ; characterised in that the at least three CFGs are fixedly coupled to said nonrotating aerostructure body; said first CFG has a first rotating masses axis , with said first rotating masses axis perpendicular to said center Z axis of rotation ; said second CFG has a second rotating masses axis , said second rotating masses axis perpendicular to said center Z axis of rotation and said first rotating masses axis nonparallel to said second rotating masses axis ; said third CFG has a third rotating masses axis, said third rotating masses axis perpendicular to said center Z axis of rotation ; wherein said vibration control system controller controls said first CFG to produce a first rotating force centered about said first circular force generator rotating masses axis with a controllable rotating force magnitude and a controllable rotating force phase, said controllable rotating force magnitude controlled from a minimal force magnitude up to a maximum force magnitude, and with said controllable rotating force phase controlled in reference to said aircraft member sensor data correlating to said relative rotation of said rotating hub rotating relative to said nonrotating aerostructure body ; wherein said vibration control system controller controls said second CFG to produce a second rotating force centered about said second nonrotating body circular force generator rotating masses axis with a controllable rotating force magnitude and a controllable rotating force phase, said controllable rotating force magnitude controlled from a minimal force magnitude up to a maximum force magnitude, and with said controllable rotating force phase controlled in reference to said aircraft member sensor data correlating to said relative rotation of said rotating hub rotating relative to said nonrotating aerostructure body ; wherein said vibration control system controller controls said third CFG to produce a third rotating force centered about said third force generator rotating masses axis with a controllable rotating force magnitude and a controllable rotating force phase, said controllable rotating force magnitude controlled from a minimal force magnitude up to a maximum force magnitude, and said controllable rotating force phase controlled in reference to said aircraft member sensor data correlating to said relative rotation of said rotating hub rotating relative to said nonrotating aerostructure body.

U.S. Patent Publication No. 2006/0083617 A1 discloses a helicopter rotating hub mounted vibration control system for a helicopter rotary wing hub having a periodic vibration while rotating at a helicopter operational rotation frequency. The helicopter rotating hub mounted vibration control system includes an annular ring rotary housing attachable to the helicopter rotary wing hub and rotating with the helicopter rotary wing hub at the helicopter operational rotation frequency. The annular ring housing is centered about the rotary wing hub axis of rotation and has an electronics housing cavity subsystem and preferably an adjacent coaxial rotor housing cavity subsystem. The rotor housing cavity subsystem contains a first coaxial frameless AC ring motor having a first rotor with a first imbalance mass and a second coaxial frameless AC ring motor having a second rotor with a second imbalance mass. The electronics housing cavity subsystem contains an electronics control system which receives sensor outputs and electrically controls and drives the first coaxial frameless AC ring motor and the second coaxial frameless AC ring motor such that the first imbalance mass and the second imbalance mass are directly driven at a vibration canceling rotation frequency greater than the helicopter operational rotation frequency wherein the helicopter rotary wing hub periodic vibration is reduced.

PCT Patent Publication No. WO/2009/126608 A2 discloses 1 vehicle a nonrotating vehicle body, a rotating machine member, and including a vehicle vibration control system, the vehicle vibration control system including a vehicle vibration control system controller, a vehicle rotating machine member sensor for inputting vehicle rotating machine member data correlating to the relative rotation of the vehicle rotating machine member rotating relative to the nonrotating vehicle body into the vehicle vibration control system controller, at least a first nonrotating vehicle body vibration sensor, the at least first nonrotating vehicle body vibration sensor inputting at least first nonrotating vehicle body vibration sensor data correlating to vehicle vibrations into the vehicle vibration control system controller, at least a first nonrotating vehicle body circular force generator, the at least a first nonrotating vehicle body circular force generator fixedly coupled with the nonrotating vehicle body, the at least first nonrotating vehicle body circular force generator controlled to produce a rotating force with a controllable rotating force magnitude and a controllable rotating force phase, the controllable rotating force magnitude controlled from a minimal force magnitude up to a maximum force magnitude, and with the controllable rotating force phase controlled in reference to the vehicle rotating machine member sensor data correlating to the relative rotation of the vehicle rotating machine member rotating relative to the nonrotating vehicle body wherein the vehicle vibration sensed by the at least first nonrotating vehicle body vibration sensor is reduced.

## Summary of the Invention

According to the present invention there is provided an aircraft vibration control system as recited in claim 1.

It is to be understood that both the foregoing general description and the following detailed description are exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principals and operation of the invention.

## Brief Description of the Drawings

FIG. 1A-B illustrates methods/systems for controlling helicopter vibrations.

FIG. 2 illustrates methods/systems for controlling helicopter vibrations with a communications bus and CFGs (Circular Force Generators) producing rotating force with controlled rotating force magnitude and controlled rotating force phase.

FIG. 3 illustrates circular force generation with two co-rotating imbalanced rotors creating a circular force with controllable magnitude and phase.

FIG. 4 illustrates Circular Force Generators (CFGs) with co-rotating imbalanced rotors.

FIG. 5A-G illustrates CFGs (Circular Force Generators) for producing rotating force with controlled rotating force magnitude and controlled rotating force phase.

FIG. 6A-F illustrates methods/systems with multiple oriented Circular Force Generators (CFGs).

FIG. 7A-E illustrates helicopter systems/methods for controlling vibration with control accelerometer sensors and CFGs located, mounted and oriented relative to a helicopter floor, sidewall, roof, and vehicle frames.

FIG. 8A-L illustrate helicopter Active Vibration Control with CFGs (Circular Force Generators) mounted on helicopter transmissions, with FIG. 8F-L illustrating computer modeled simulated performance of CFGs (Circular Force Generators) oriented with the axis of rotation of a rotating Hub Mounted Vibration control System (HMVS).

FIG. 9 illustrates a CFG (Circular Force Generator) with internal bearings, imbalance masses, motors, rotating mass sensor targets and sensors.

FIG. 10 illustrates methods/systems with multiple Circular Force Generators (CFGs) and accelerometers.

FIG. 11A-G illustrate CFGs (Circular Force Generators) with motor driven master rotating mass imbalance rotors and slave rotating mass imbalance rotors.

FIG. 12A-C illustrate CFGs (Circular Force Generators) with master rotating mass imbalance rotors and slave rotating mass imbalance rotors.

FIG. 13A-D illustrates methods/systems for controlling helicopter vibrations with a rotating Hub Mounted Vibration control System (HMVS), a communications bus and CFGs (Circular Force Generators).

FIG. 14 illustrates methods/systems for controlling helicopter vibrations with a HMVS, a communications bus and CFGs (Circular Force Generators).

FIG. 15 illustrates methods/systems for controlling helicopter vibrations with a HMVS, a communications bus and CFGs (Circular Force Generators).

FIG. 16 illustrates methods/systems for controlling helicopter vibrations with a HMVS, a communications bus and CFGs (Circular Force Generators).

FIG. 17 illustrates methods/systems for controlling helicopter vibrations with a HMVS, a communications bus and

FIG. 18 illustrates methods/systems for controlling helicopter vibrations with a Dual Frequency HMVS, a communications bus and CFGs (Circular Force Generators).

FIG. 19A-B illustrates methods/systems for controlling helicopter vibrations with a communications bus and actuators.

FIG. 20A-C illustrates a dual frequency Hub Mounted Vibration control System (HMVS) with a 3P frequency stage and a 5P frequency stage.

FIG. 21 illustrates a dual frequency Hub Mounted Vibration control System (HMVS).

FIG. 22A-B illustrates HMVS imbalance rotors for generating a first rotating net force vector and a second rotating net force vector.

FIG. 23A-C illustrates dual frequency (3P and 5P) Hub Mounted Vibration control System (HMVS) control convergence properties, 3P and 5P rotor position commands, 3P and 5P tones .

FIG. 24A-B illustrates methods/systems for controlling helicopter vibrations with a dual frequency HMVS with 3 Rev and 5 Rev control.

FIG. 25A-C illustrates dual frequency (3P and 5P) HMVS for a helicopter rotor head.

FIG. 26A-B illustrates a single frequency (3P) HMVS for a helicopter rotor head.

FIG. 27A-B illustrates a dual frequency HMVS for a helicopter rotor head.

FIG. 28A-D illustrates HMVS imbalance rotors for generating two frequencies.

FIG. 29 illustrates HMVS control methods/systems.

FIG. 30A-B illustrates a dual frequency HMVS on a helicopter rotor head.

FIG. 31 illustrates an imbalance rotor with an imbalance mass concentration.

FIG. 32 illustrates an imbalance rotor with an imbalance mass concentration.

## Detailed Description

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

Reference will now be made in detail to the present invention, examples of which are illustrated in the accompanying drawings.

The invention includes a rotary wing aircraft vehicle, the vehicle having a nonrotating vehicle structure frame body and a rotating machine member, the vehicle including a vehicle vibration control system, the vehicle vibration control system including a vehicle vibration control system controller. The vehicle includes a vehicle rotating machine member sensor for inputting vehicle rotating machine member data correlating to the relative rotation of the vehicle rotating machine member rotating relative to the nonrotating vehicle body into the vehicle vibration control system controller. The vehicle includes at least a first nonrotating vehicle body vibration sensor, the at least first nonrotating vehicle body vibration sensor inputting at least first nonrotating vehicle body vibration sensor data correlating to vehicle vibrations into the vehicle vibration control system controller. The vehicle includes at least a first nonrotating vehicle body circular force generator, the at least a first nonrotating vehicle body circular force generator fixedly coupled with the nonrotating vehicle body, the at least first nonrotating vehicle body circular force generator controlled by the controller to produce a rotating force with a controllable rotating force magnitude and a controllable rotating force phase, the controllable rotating force magnitude controlled from a minimal force magnitude up to a maximum force magnitude, and with the controllable rotating force phase controlled in reference to the vehicle rotating machine member sensor data correlating to the relative rotation of the vehicle rotating machine member rotating relative to the nonrotating vehicle body wherein the vehicle vibration sensed by the at least first nonrotating vehicle body vibration sensor is reduced.

The invention includes aircraft vibration control systems for aircraft vehicles having nonrotating aerostructure bodies and rotating rotary wing hubs. The systems include a rotating hub mounted means for controlling vibrations, the rotating hub mounted means for controlling vibrations mounted to the rotating rotary wing hub with the rotating hub mounted means for controlling vibrations rotating with the rotating rotary wing hub, a rotary wing aircraft member sensor for outputting rotary wing aircraft member data correlating to the relative rotation of the rotating rotary wing hub member rotating relative to the nonrotating body, at least a first nonrotating body vibration sensor, the at least first nonrotating body vibration sensor outputting at least first nonrotating body vibration sensor data correlating to vibrations. The systems include at least a first nonrotating body force generator, the at least first nonrotating body force generator fixedly coupled with the nonrotating body. The systems include a means for linking together the first nonrotating body force generator and the rotating hub mounted means for controlling vibrations wherein the rotating hub mounted means for controlling vibrations and the first nonrotating body force generator communicate and share force generation vibration control data through the means for linking, the at least first nonrotating body force generator controlled to produce a force with a controllable magnitude and a controllable phase, the controllable force magnitude controlled from a minimal force magnitude up to a maximum force magnitude, and with the controllable force phase controlled in reference to the rotary wing aircraft member sensor data correlating to the relative rotation of the rotating rotary wing hub rotating relative to the nonrotating body and, wherein the vibration sensed by the at least first nonrotating body vibration sensor is reduced.

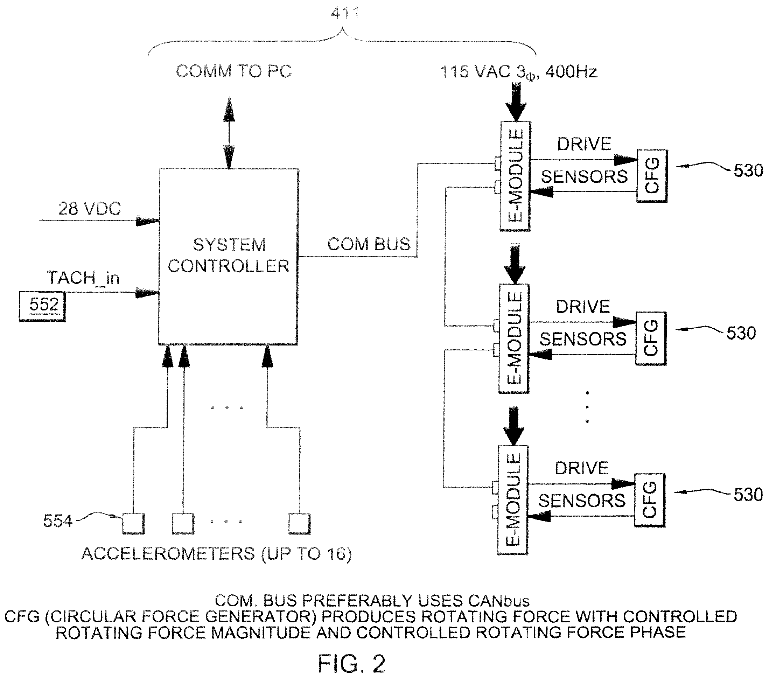

The rotary wing aircraft vehicle 520 includes a nonrotating vehicle body 524, the helicopter structure frame, and a rotating machine member 522, the helicopter rotating rotary wing hub. The rotating vehicle machine member 522 produces vibrations, with vibration disturbances at a vibration frequency, in the nonrotating vehicle body 524. The rotating machine member 522 rotating relative to the vehicle body 524 and producing troublesome vibrations in the vehicle body 524. The vehicle 520 includes a vehicle vibration control system 409, the vehicle vibration control system 409 including a vehicle vibration control system controller 411. The vehicle vibration control system controller 411 is comprised of at least one computer with inputs and outputs and at least one computer processor, with the vehicle vibration control system controller computer system for reducing vibrations including computer media and utilizing computer programs with computer program instructions. The controller operates on one or more electronic devices connected and integrated together and communicating with each other. As illustrated in FIG. 2, controller 411 operates within the system controller electronic devices and with the electronic modules (E-Modules) communicating through the communications bus. The vehicle 520 includes a vehicle rotating machine member sensor 552 for inputting vehicle rotating machine member data correlating to the relative rotation of the vehicle rotating machine member 522 rotating relative to the nonrotating vehicle body 524 into the vehicle vibration control system controller, a tach output from a tachometer sensor 524 with tach inputs inputted into the controller 411. The vehicle rotating machine member sensor 552 is a reference sensor for generating a persistent signal indicative of the vibration disturbance, and senses a harmonic of the rotating speed of the rotating vehicle machine member 522 producing vibrations in the vehicle.

The vehicle 520 includes at least a first nonrotating vehicle body vibration sensor 554, the at least first nonrotating vehicle body vibration sensor 554 inputting at least first nonrotating vehicle body vibration sensor data correlating to vehicle vibrations into the vehicle vibration control system controller 411, the vibration sensors 554 are accelerometers coupled to the vehicle nonrotating body such that the accelerometers senses the vibrations and output vibrations signals into the vibration controller 411.

The vehicle 520 includes at least a first nonrotating vehicle body circular force generator 530, the at least a first nonrotating vehicle body circular force generator 530 fixedly coupled with the nonrotating vehicle body 524 with the at least first nonrotating vehicle body circular force generator controlled by the controller 411 to produce a rotating force with a controllable rotating force magnitude and a controllable rotating force phase, the controllable rotating force magnitude controlled from a minimal force magnitude up to a maximum force magnitude. The at least a first nonrotating vehicle body circular force generator 530 is mechanically mounted to the frame structure body 524 of the vehicle 520 wherein the produced rotating force is transferred there into it with the controllable rotating force phase controlled in reference to the vehicle rotating machine member sensor data correlating to the relative rotation of the vehicle rotating machine member rotating relative to the nonrotating vehicle body (tach input) wherein the vehicle vibration sensed by the at least first nonrotating vehicle body vibration sensor is reduced. this includes producing zero magnitude forces with 180° mass separations and maximum force magnitude with 0° mass separation controlled by the controller 411. Vibration is reduced at a frequency correlating to rotating machine member 522, with vibrations reduced at harmonics of the rotating machine member. Methods include controlling harmonic vibrations of the rotating machine member with the generated rotating force emanating from the circular force generator 530, preferably the circular force generator 530 driving rotating moving masses at a harmonic of the vehicle rotating machine member. The system 409 generates rotating force as compared to linear component force, with the rotating force rotating at a harmonic of the vehicle rotating machine member 522, and the rotating force phase is controlled relative to avehicle rotating machine member sensor persistent signal harmonic reference tachometer sine wave utilized in the system controller 411 obtained from a sensor 552 input.

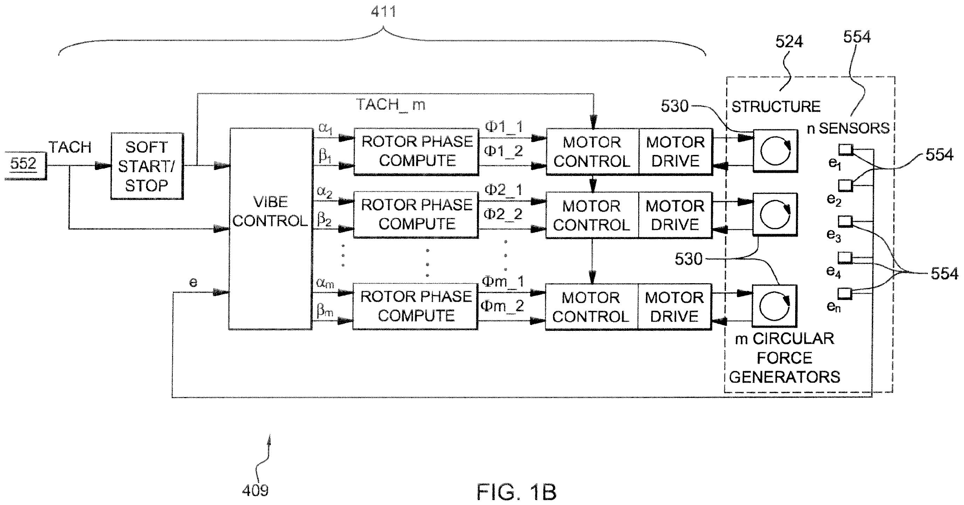

The vehicle 520 includes n nonrotating vehicle body vibration sensors 554 and m nonrotating vehicle body circular force generators 530 wherein n>m. The rotating force is controlled to rotate at a vibration disturbance frequency that is a harmonic of the rotating machine member 522 rotating speed with the system 409 and producing circular forces which are not specifically or intentionally controlled to produce linear forces. The methods/systems inhibit and avoid calculating linear forces and outputting such. The vehicle vibration control system controller 411 generates a rotating reference signal from the vehicle rotating machine member data correlating to the relative rotation of the vehicle rotating machine member rotating relative to the nonrotating vehicle body. The vehicle vibration control system controller 411 calculates in reference to the rotating reference signal the rotating force with a real part $\alpha$ and an imaginary part $\beta$. The systems/methods avoid and inhibit calculating linear forces for controlling the vibration, and the vibration control system 409 controller 411 includes a vibe control subsystem (such as Vibe Control - FIG. 1B) which calculates real parts $\alpha_m$ and imaginary parts $\beta_m$ in generating circular force command signals which command/describe desired rotating force vectors, such circular force command signals $\alpha_m$ $\beta_m$ are sent to rotor phase computer subsystem (such as Rotor Phase Compute - FIG. 1B) which in turn computes mass phase signals, which are sent to motor control/motor drive subsystem (such as Motor Control/Motor Drive - FIG. 1B) which generates motor drive signals that drive rotatingmasses around their circular paths, with motor drive signals that drive the masses to generate the circular forces.

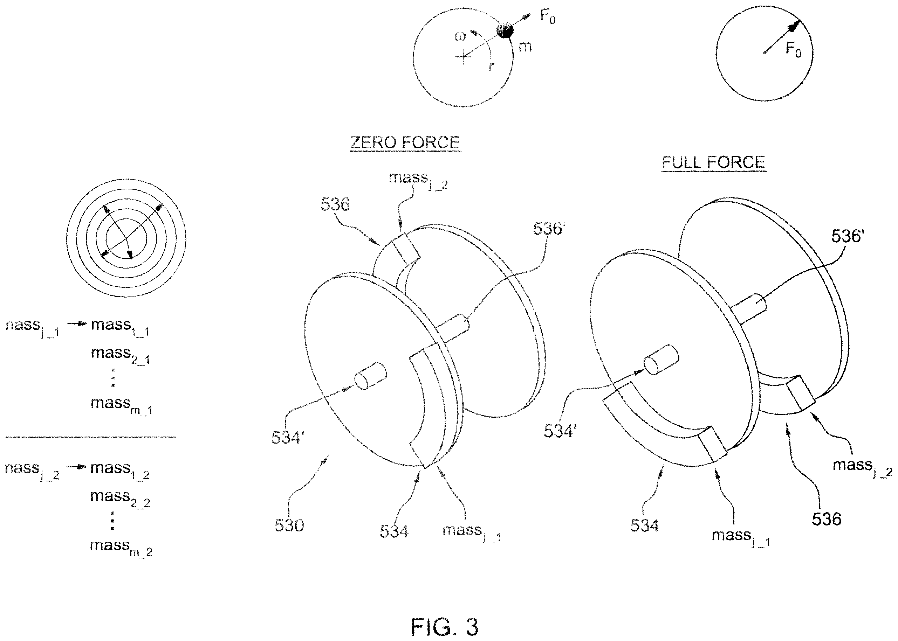

The vehicle 520 includes at least first nonrotating vehicle body circular force generator 530 including at least a first rotating mass (mass$_{1\_1}$) 534 controllably driven about a first rotating mass axis 534' with a first rotating mass controllable rotating imbalance phase $\Phi_{1\_1}$ and at least a second corotating mass (mass$_{1\_2}$) 536 controllably driven about a second rotating mass axis 536' with a rotating mass controllable rotating imbalance phase $\Phi_{1\_2}$. As shown in FIG. 3, axes 534' and 536' are overlapping, with the first ((mass$_{m\_1}$) and second mass (mass$_{m\_2}$) (with m whole number equal to or greater than one) adjacent each other, with duplicate mass arcs of duplicate arcuate shape and arcuate size oriented about the overlapping axes. The duplicate mass arcs of duplicate arcuate shape and arcuate size oriented about the overlapping axes adjacent each other, are unnested rotating masses. The rotating mass arc has an outer circumference curvature and an inner circular circumference curvature, and a center of mass. The circular force generator 530 has two of the rotating mass arcs, with each rotating mass arc having a center of mass and a mass line going normal from the center of mass to its rotating mass axis providing a center of mass rotation axis track line, with the first and second rotating mass arcs center of mass rotation axis track lines not crossing or interecting but parallel, and approximately adj acent.

The vehicle 520 includes n nonrotating vehicle body vibration sensors 554 and m nonrotating vehicle body circular force generators 530 wherein n>m and (with m whole number equal to or greater than one). The vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 includes the first rotating mass (mass$_{1\_1}$) 534 controllably driven about a first rotating mass axis 534' with a first rotating mass controllable rotating imbalance phase $\Phi_{1}$_1 and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal. The m$^{th}$ nonrotating vehicle body circular force generator 530 including a first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal, the rotating reference signal based on the tach input of the rotating machine rotor head member 522.

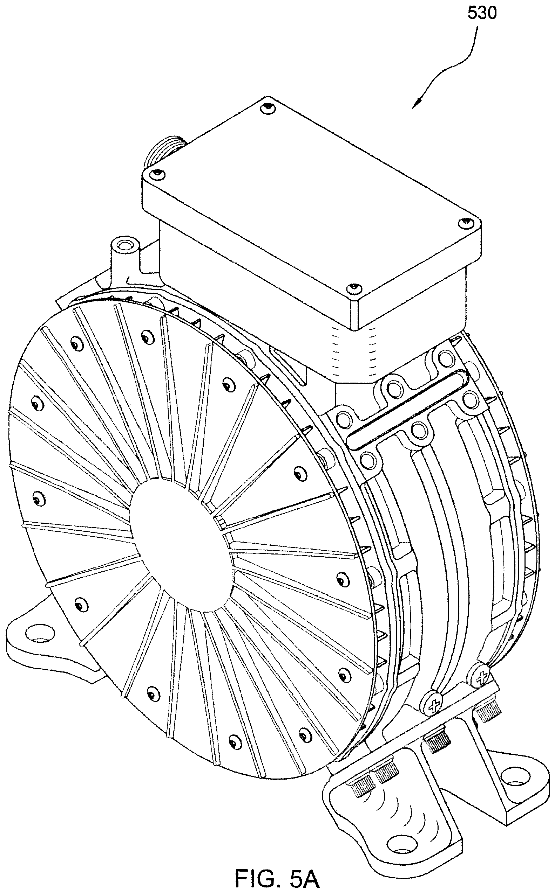

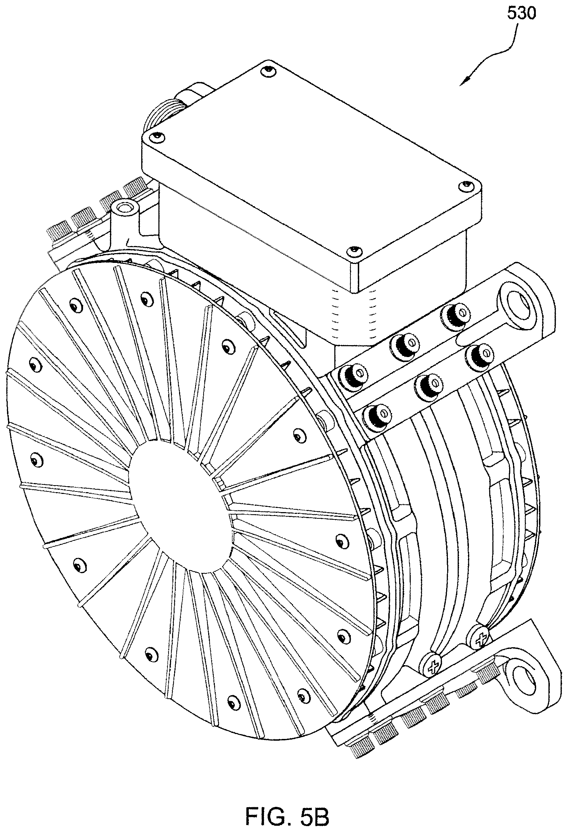

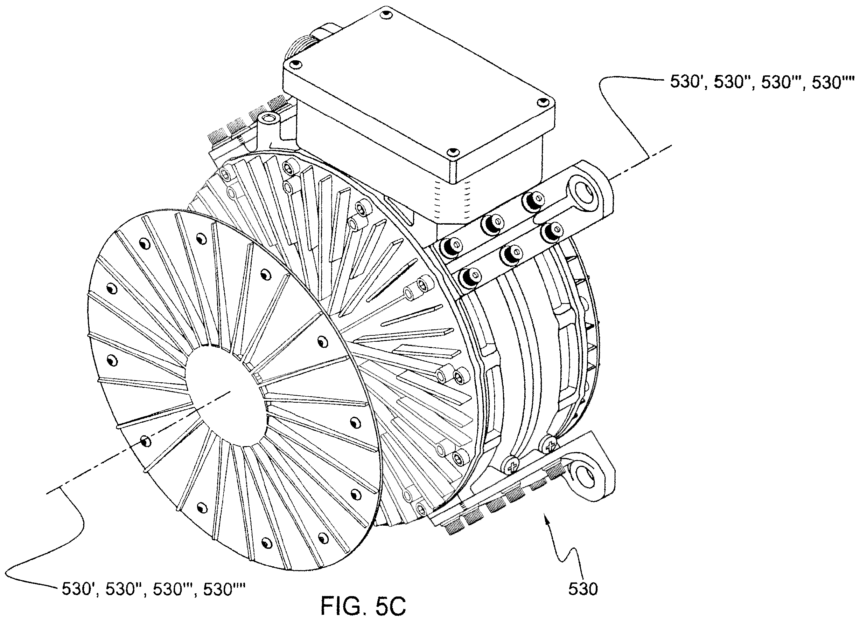

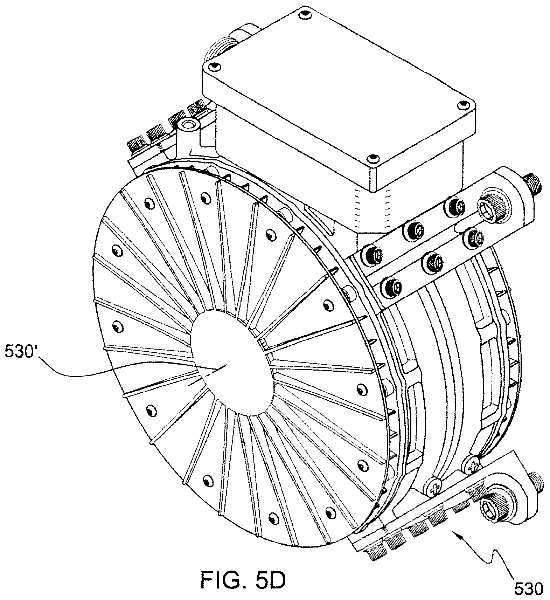

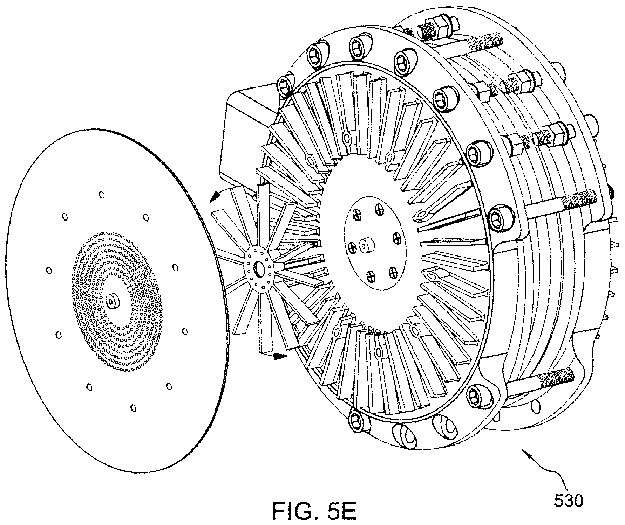

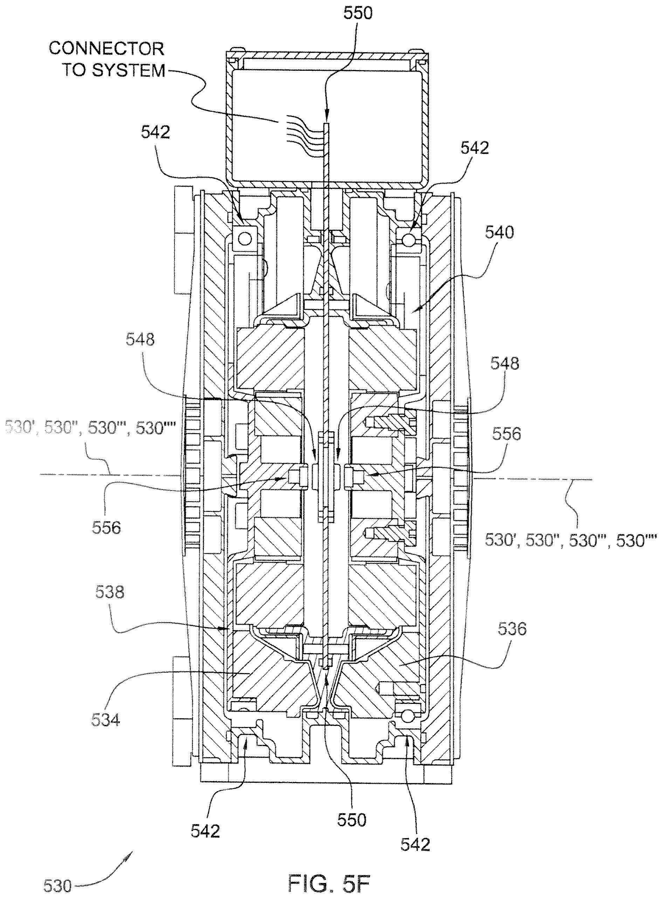

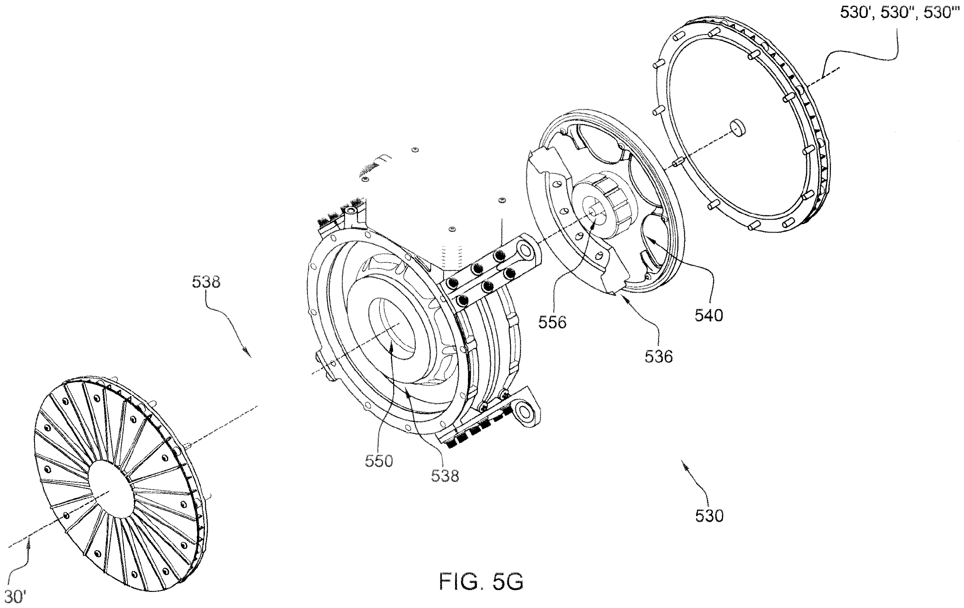

The first nonrotating vehicle body circular force generator 530 includes a first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$. The first rotating mass (mass$_{1\_1}$) is driven with a first motor and the second corotating mass (mass$_{1\_2}$) is driven with a second motor. As shown in FIG. 5, nonrotating vehicle body circular force generator 530 includes the first rotating mass (mass$_{1\_1}$) 534 is driven with a first motor 538 and the second corotating mass (mass$_{1\_2}$) 536 is driven with a second motor 540.

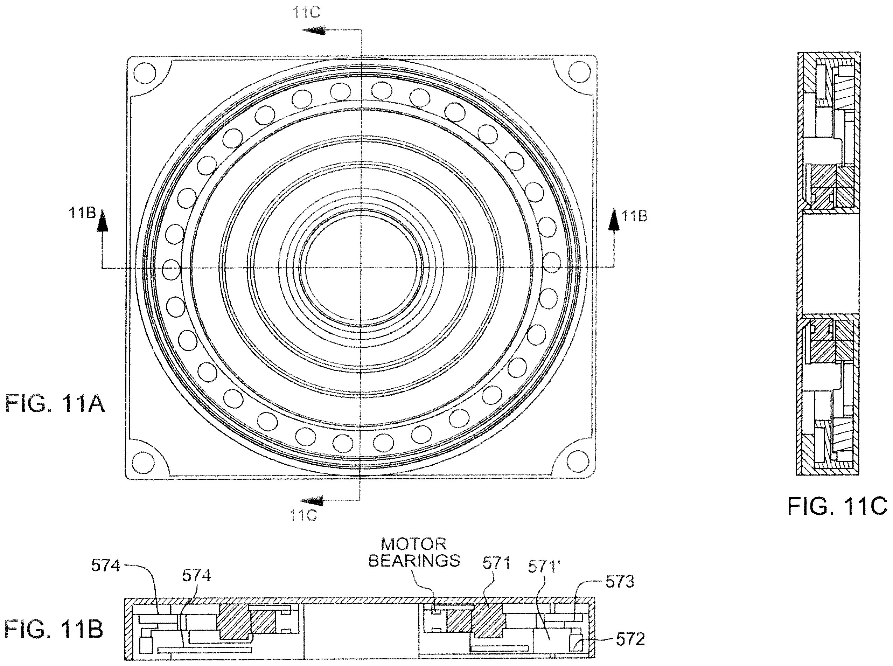

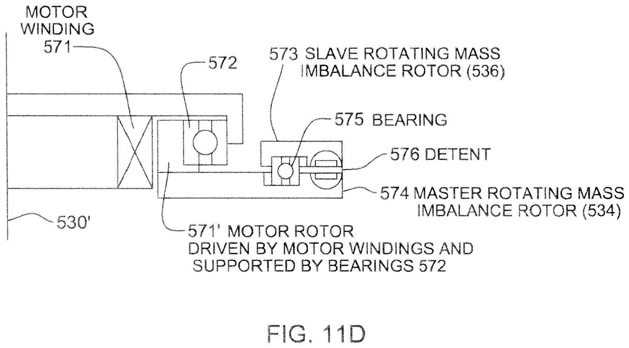

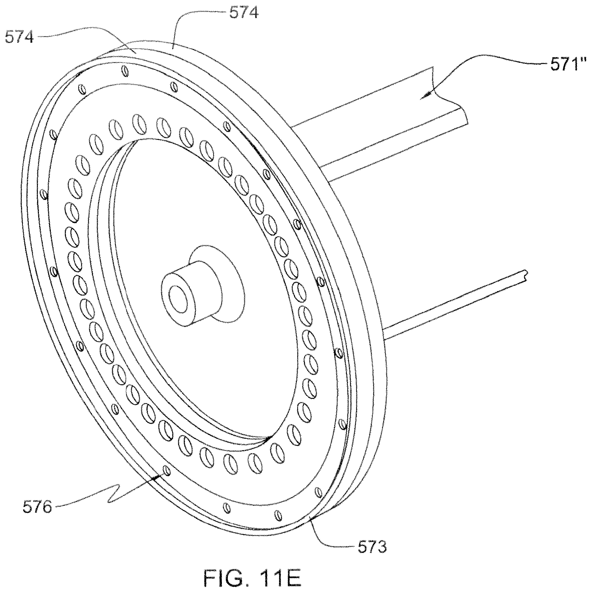

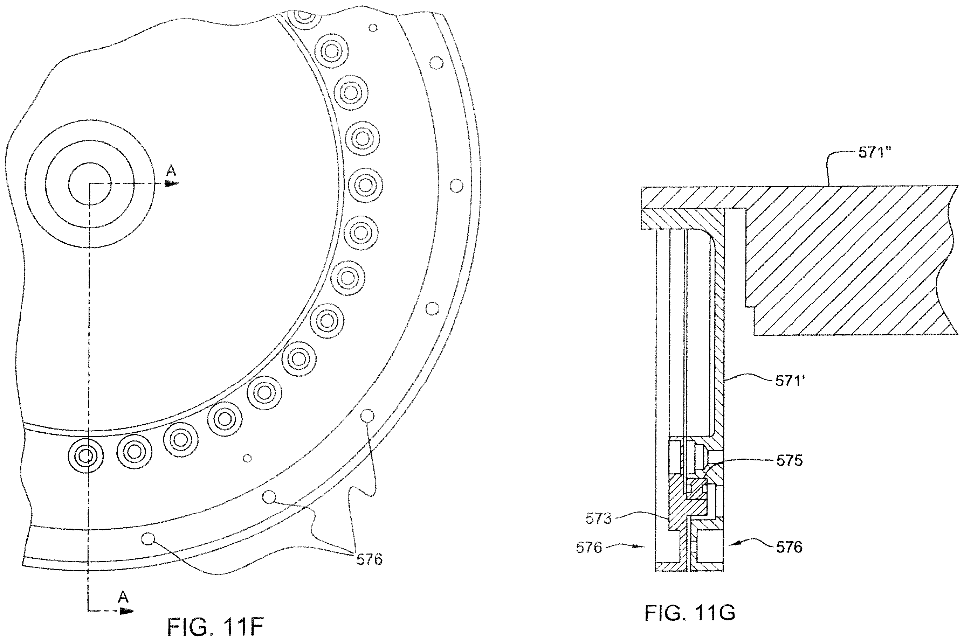

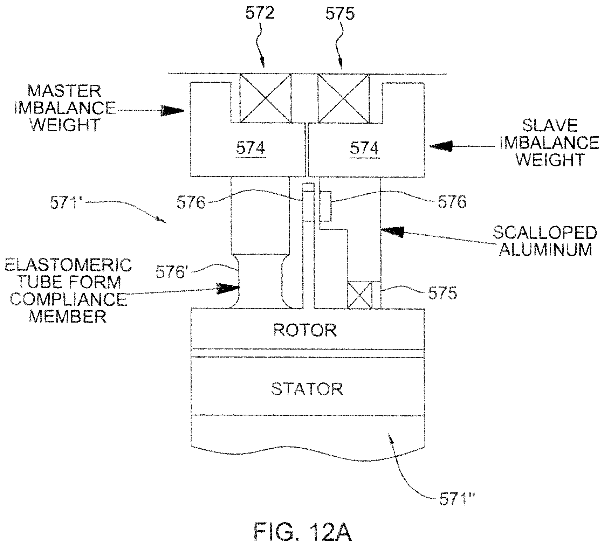

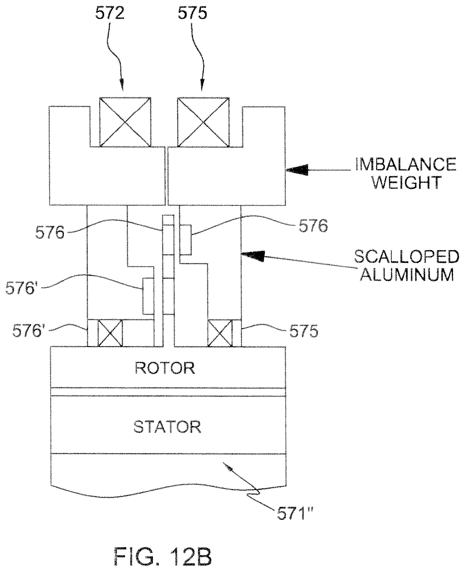

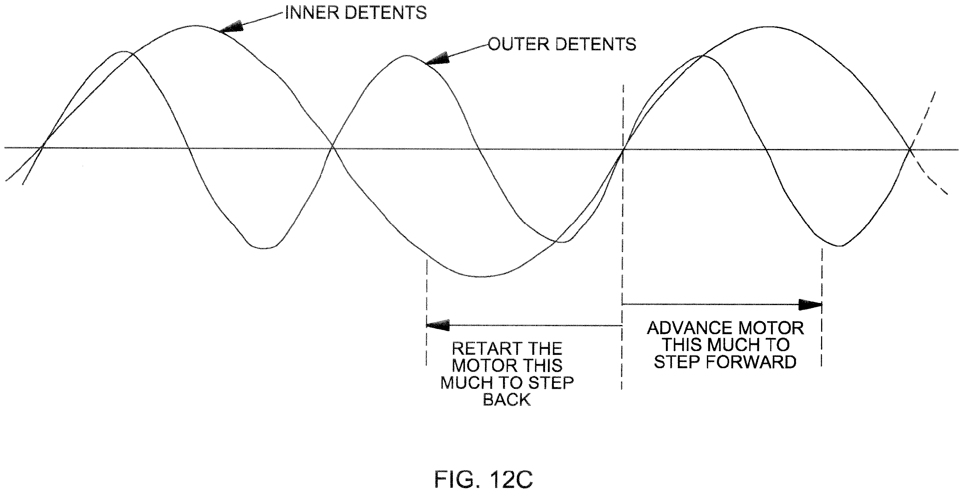

The first nonrotating vehicle body circular force generator 530 includes a first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$, with a detent 576 linking between the first rotating mass (mass$_{m\_1}$) and the second corotating mass (mass$_{m\_2}$), and a single motor for driving the first rotating mass (mass$_{m\_1}$), wherein the first rotating mass (mass$_{m\_1}$) comprises a master rotating mass (mass$_{m\_1}$) with a master rotating mass controllable rotating imbalance phase $\Phi_{1\_1}$, and the second corotating mass (mass$_{m\_2}$) comprises a slave corotating mass (mass$_{m\_2}$) with a slave rotating mass controllable rotating imbalance phase $\Phi_{1\_2}$ with the detent 576 controlling the slave rotating mass controllable rotating imbalance phase $\Phi_{1\_2}$ relative to the master rotating mass controllable rotating imbalance phase $\Phi_{1\_1}$. As illustrated in FIG. 11, one motor 571" with motor windings 571 drives both the master rotating mass 574 and the slave rotating mass 574. The motor windings 571 drive a motor rotor 571' supported by bearings 572 with that motor rotor coupled with the master rotating mass imbalance rotor 574 (first rotating mass 534) with the second slave rotating mass imbalance rotor 573 coupled with the master rotor 574 with bearing 575 and detent 576 wherein the phase between the two rotors can be adjusted with controllably forcing slippage across the detent 576. The rotors are magnetically detented with a plurality of distributed magnets coupling the two rotors together, with motor torque pulses controllably clocking the relative phases of the imbalance phases to control force magnitude with slipping of the detents 576. Detents 576 include magnetically detented magnets on magnets detent and magnets on steel. The rotors are mechanically detented such as with mechanical ball detent, quill detent, and friction interface detent, with elastomeric detents, with engaging surface effect elastomers. FIG. 12 illustrates further examples of detented master and slave rotating masses. As shown in FIG. 12A-B, the master slave rotating mass rotor is compliantly coupled and driven by the motor 571", with a compliance member 576'. A compliance member 576', is provided between the motor and the master rotor imbalance. The compliance member 576' is a spring member. As shown in FIG. 12A, the compliance member 576' is an elastomeric spring member, an elastomeric tubeform compliance member. As shown in FIG. 12B, the compliance member 576' is a magnetic detent spring and bearing member, with the magnetic detents with lower step resolution than the above existing detents 576 between the master and slave rotating mass rotors or with the magnetic detents with higher step maximum torque than the above existing detents 576 between the master and slave rotating mass rotors. In additional examples, the compliance member 576' is a metal spring member, such as a spoke style metal spring, or other flexing metal spring member. In additional examples, the compliance member 576' is a torsional spring member. The compliance member 576' is provided between the motor 571" and the master rotating imbalance rotor and then the detent 576 is provided between the compliant master rotating imbalance mass and the detented slave rotor. FIG. 12C show the detent torque versus relative angular displacement for two detents.

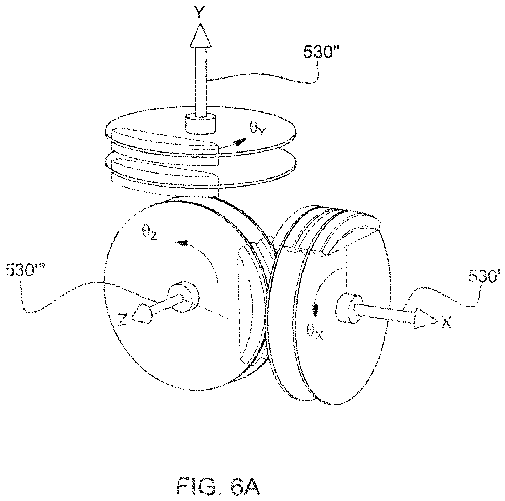

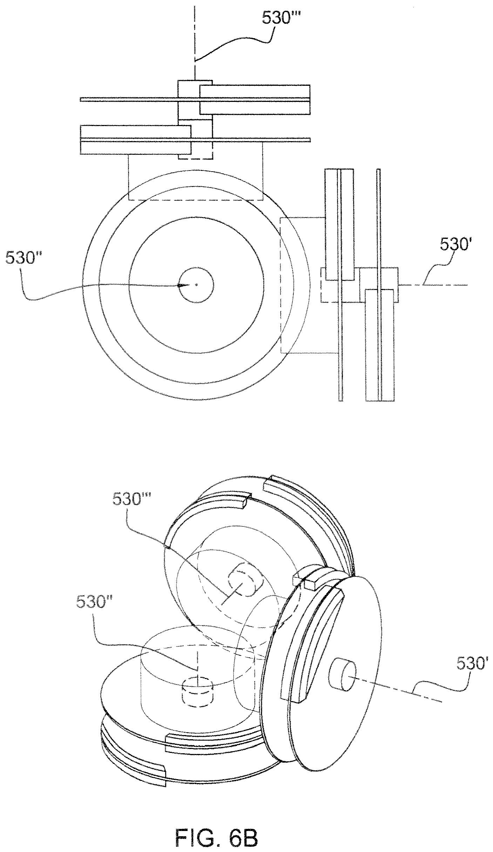

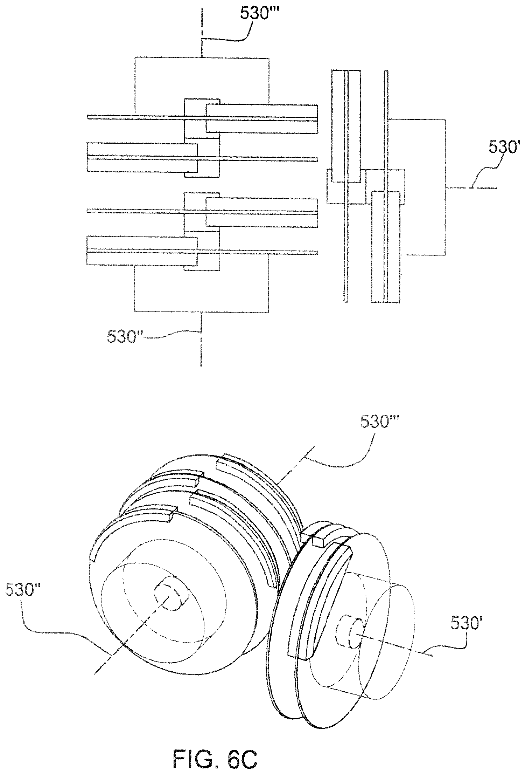

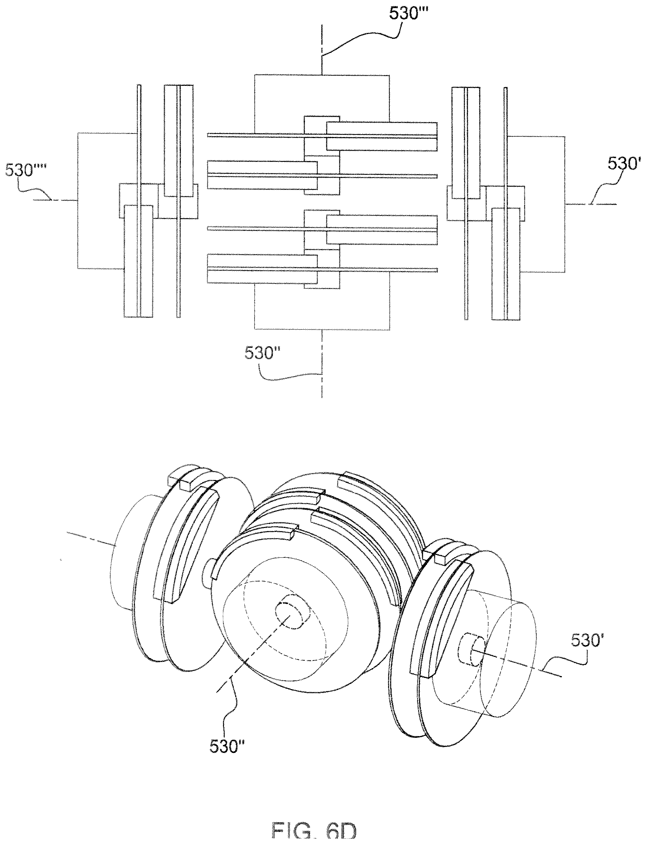

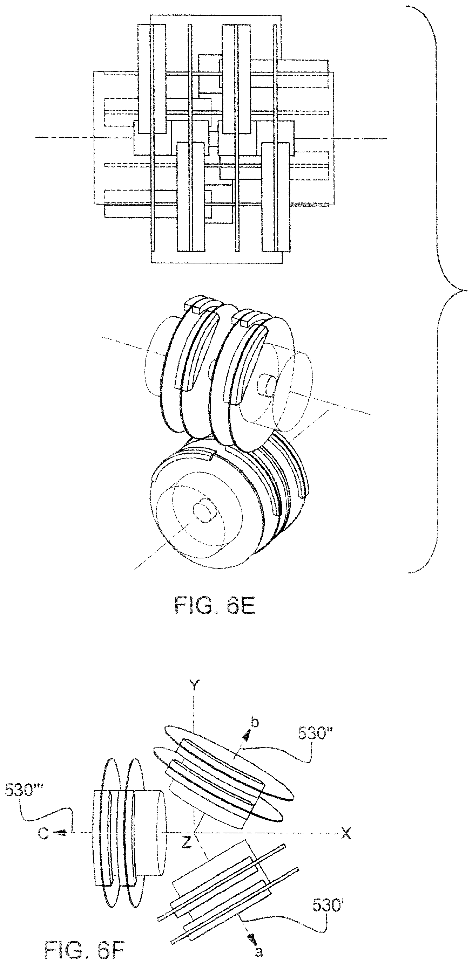

The vehicle 520 includes n nonrotating vehicle body vibration sensors 554 and m nonrotating vehicle body circular force generators 530, with $m \geq 2$ and wherein n>m. The vehicle vibration control system controller 411 calculates a rotating reference signal from the vehicle rotating machine member data correlating to the relative rotation of the vehicle rotating machine member 522 rotating relative to the nonrotating vehicle body 524, and the first nonrotating vehicle body circular force generator 530 includes a first rotating mass ($mass_{1\_1}$) 534 controllably driven about a first circular force generator axis 530' with a first rotating mass controllable rotating imbalance phase $\Phi_{1\_1}$ and a second corotating mass ($mass_{1\_2}$) 536 controllably driven about the first circular force generator axis 530' with a second rotating mass controllable rotating imbalance phase $\Phi_{1\_2}$, with the imbalance phase $\Phi_{1\_1}$ and the imbalance phase $\Phi_{1\_2}$ controlled in reference to the rotating reference signal. The vehicle 520 includes a second nonrotating vehicle body circular force generator 530 including a first rotating mass ($mass_{2\_1}$) 534 controllably driven about a second circular force generator axis 530" with a first rotating mass controllable rotating imbalance phase $\Phi_{2\_1}$ and a second corotating mass ($mass_{2\_2}$) 536 controllably driven about the second circular force generator axis 530" with a second rotating mass controllable rotating imbalance phase $\Phi_{2\_2}$, with the imbalance phase $\Phi_{2\_1}$ and the imbalance phase $\Phi_{2\_2}$ controlled in reference to the rotating reference signal, the second nonrotating vehicle body circular force generator 530 oriented relative to the first nonrotating vehicle body circular force generator 530 wherein the second circular force generator axis 530" is nonparallel with the first circular force generator axis 530'. The second nonrotating vehicle body circular force generator 530 oriented relative to the first nonrotating vehicle body circular force generator 530 wherein the second circular force generator axis 530" is oriented orthogonally with the first circular force generator axis 530'. When $m \geq 3$, a third nonrotating vehicle body circular force generator 530 first rotating mass ($mass_{3\_1}$) 534 is controllably driven about a third circular force generator axis 530'" with a first rotating mass controllable rotating imbalance phase $\Phi_{3\_1}$ and a second corotating mass ($mass_{3\_2}$) 536 is controllably driven about the third circular force generator axis 530'" with a second rotating mass controllable rotating imbalance phase $\Phi_{3\_2}$, with the imbalance phase $\Phi_{3\_1}$ and the imbalance phase $\Phi_{3\_2}$ controlled in reference to the rotating reference signal, the third circular force generator axis oriented relative to the second circular force generator axis 530" and the first circular force generator axis 530'. The axis 530', 530", 530'" are nonparallel, and are oriented orthogonally. As illustrated, at least two circular force generator axes are parallel, and at least one nonparallel and orthogonal. FIG. 6 illustrate examples of circular force generator axis 530',530", 530'",530"" orientation. In the examples, the three axis 530', 530", 530'" form a three-dimensional basis whereby controllable force components are created in three dimensions.

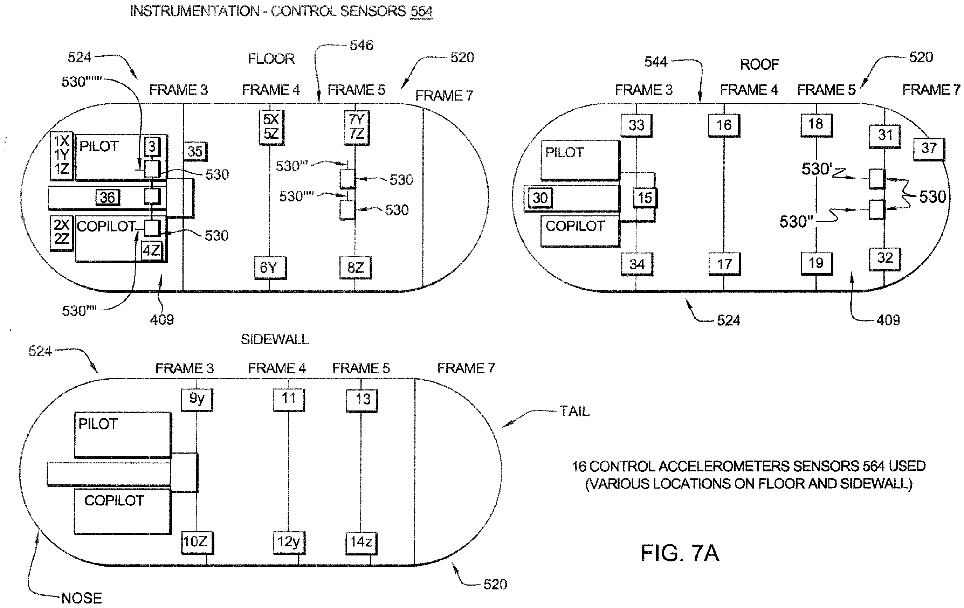

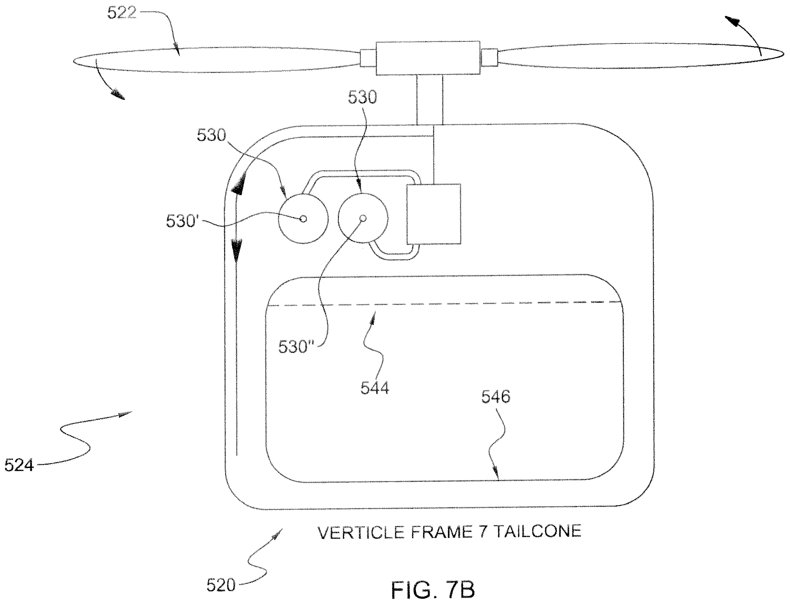

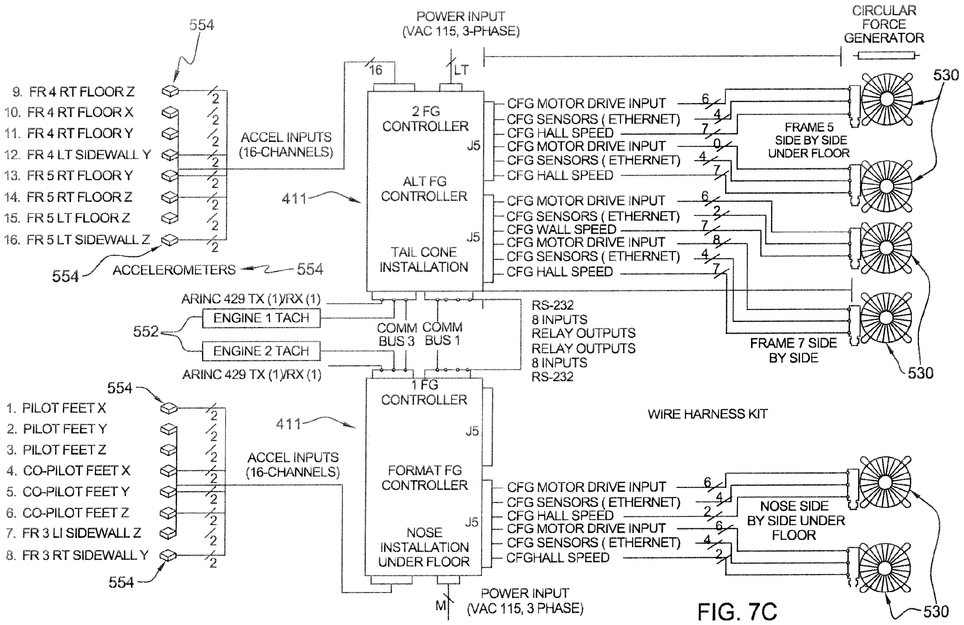

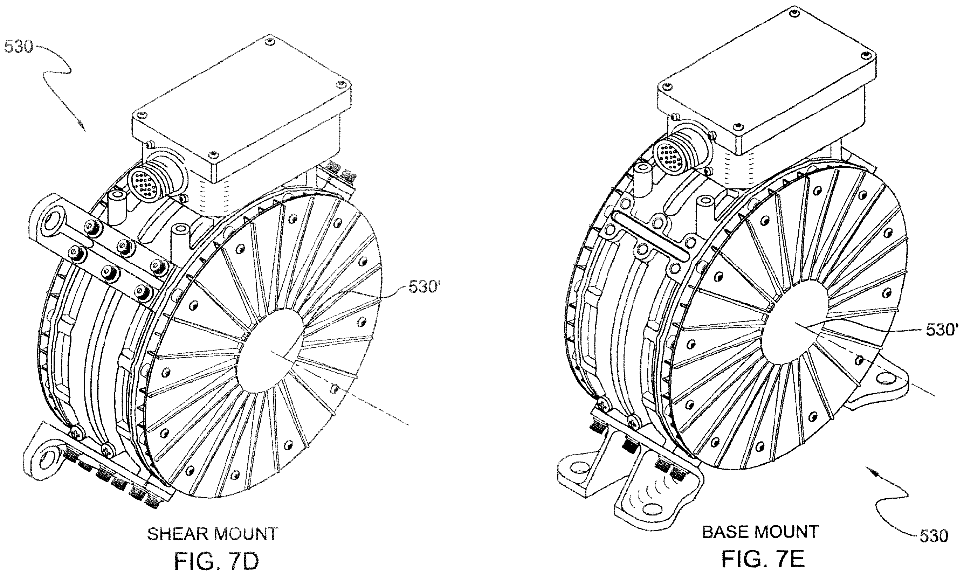

The vehicle 520 is a rotary wing aircraft with a vehicle ceiling and a vehicle floor. The vehicle nonrotating vehicle body 524 includes a vehicle ceiling 544 and a distal vehicle floor 546, the distal vehicle floor below 546 the vehicle ceiling 544 under normal parking, use and flight of the vehicle in the presence of gravity. The vehicle 520 includes n nonrotating vehicle body vibration sensors 554 and m nonrotating vehicle body circular force generators 530 with n>m. The vehicle vibration control system controller 411 calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass ($mass_{1\_1}$) 534 controllably driven about a first rotating mass axis 534' with a first rotating mass controllable rotating imbalance phase $\Phi_{1\_1}$ and a second corotating mass ($mass_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator mounted to the vehicle body 524 proximate the vehicle ceiling 544. The vehicle with nonrotating vehicle body circular force generator 530 including a first rotating mass ($mass_{m\_1}$) 534 controllably driven about a first rotating mass axis 534' with a first rotating mass controllable rotating imbalance phase $\Phi_{m\_1}$ and a second corotating mass ($mass_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal, the $m^{th}$ nonrotating vehicle body circular force generator mounted to the vehicle body 524 proximate the vehicle floor 546. A plurality of circular force generators 530 are mounted to the vehicle body frame 524 proximate the floor 546, under the floor 546, proximate the vehicle nose, and/or proximate the vehicle tail. A plurality of circular force generators 530 are mounted to the vehicle body frame 524 proximate the ceiling 544, above the ceiling 544, proximate the vehicle tail, and/or mounted to a vehicle tailcone frame. FIG. 7 illustrates a vehicle vibration control system 409 with two force generators 530 mounted to the tailcone frame 7 proximate the ceiling 544 of a helicopter 520 and with two circular force generators 530 mounted under the floor 546 in the nose of the helicopter below the pilot and copilot area and with two circular force generators 530 mounted under the floor 546 to the helicopter frame 5. The two circular force generators 530 are mounted to the frame as shown in FIG. 7B with shear mounts as shown in FIG. 7D. The two circular force generators 530 in the nose area are mounted under the floor with base mounts as shown in FIG. 7E. Such as illustrated in FIG. 7C, a first forward controller 411 (1 FG Controller) controls the two circular force generators 530 which are mounted under the floor in the forward of the vehicle and a second aft controller 411 (2 FG Controller) controls the four circular force generators 530 mounted proximate the aft of the vehicle.

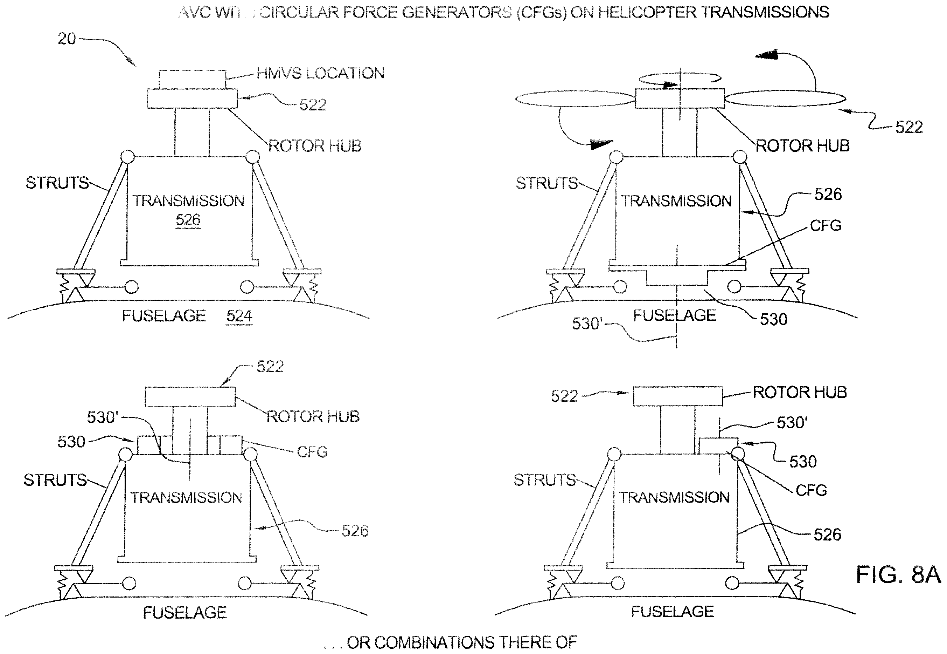

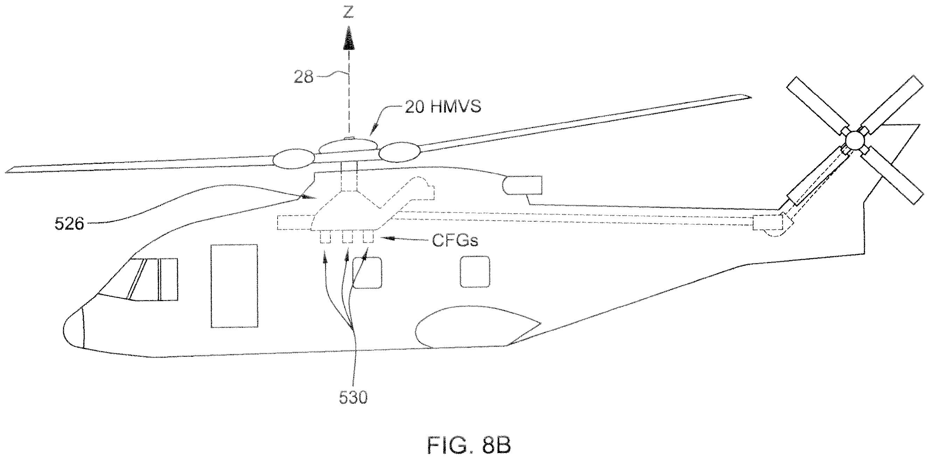

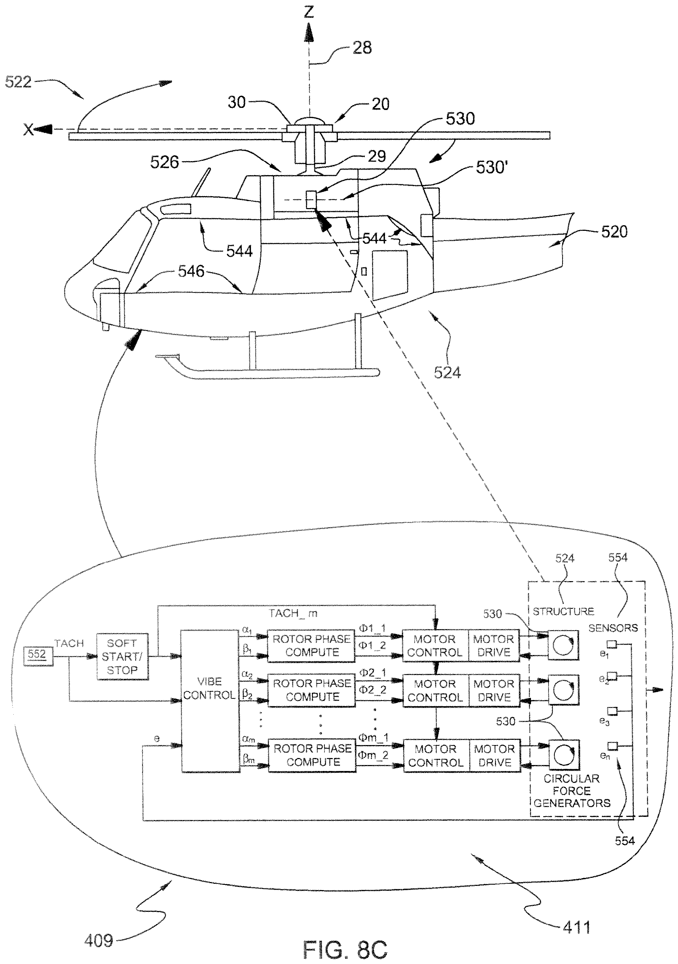

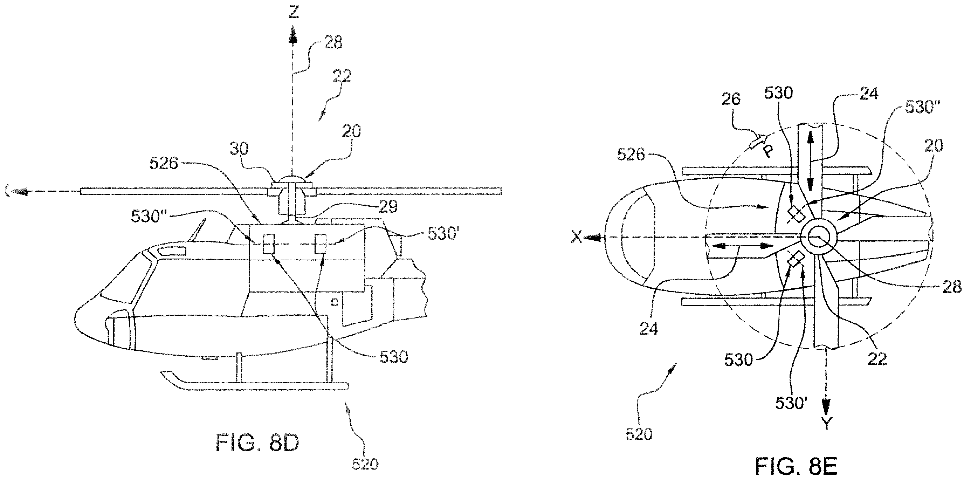

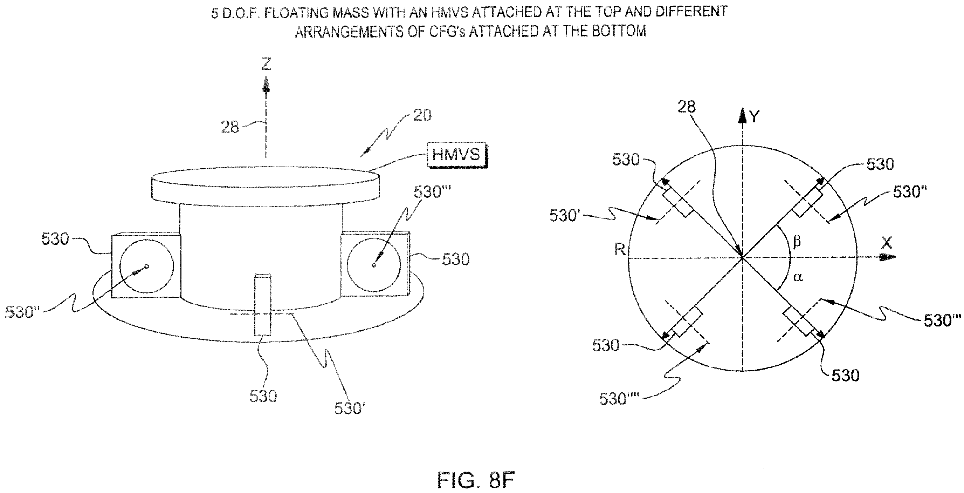

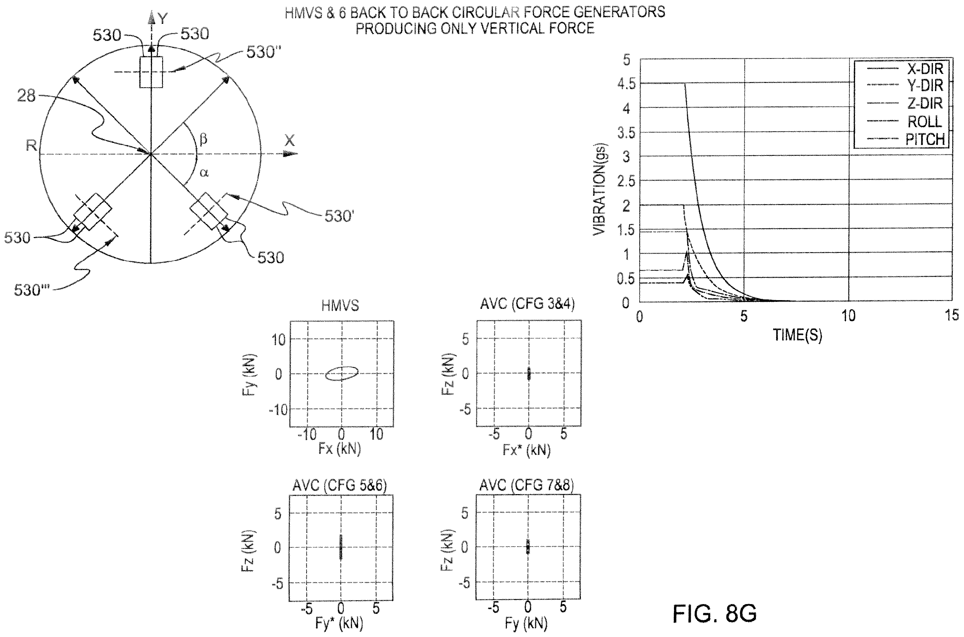

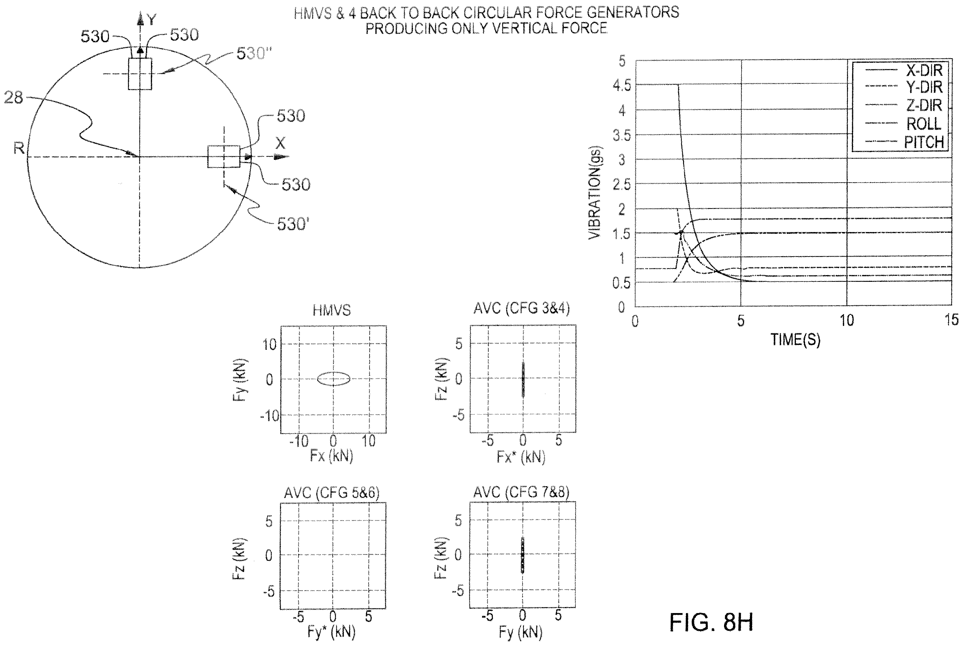

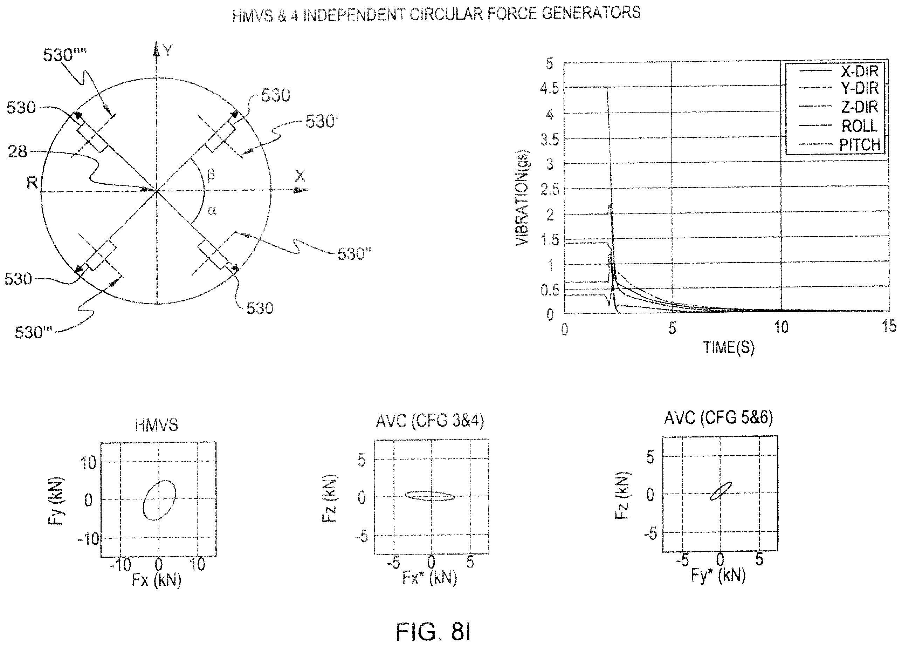

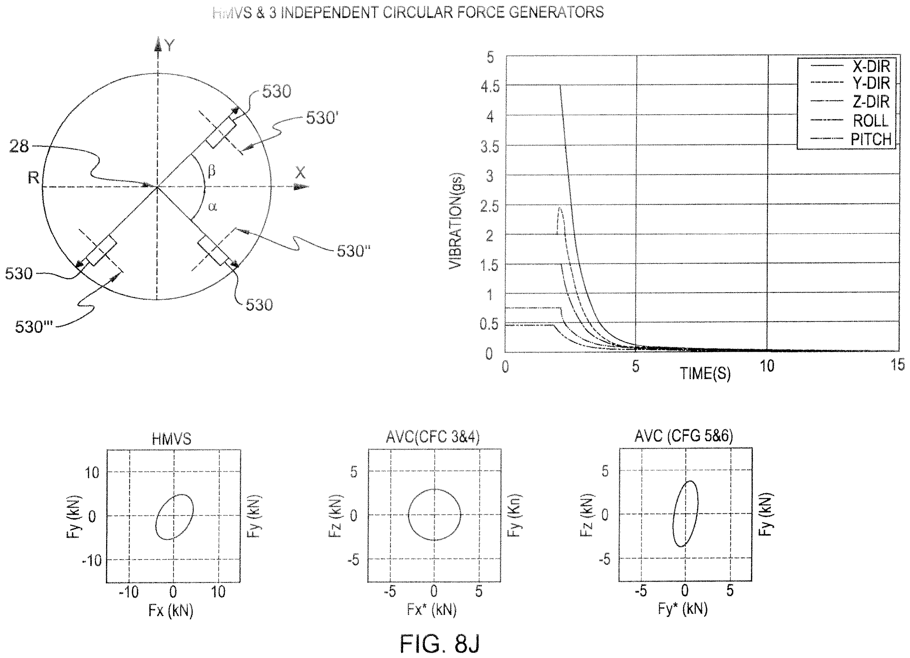

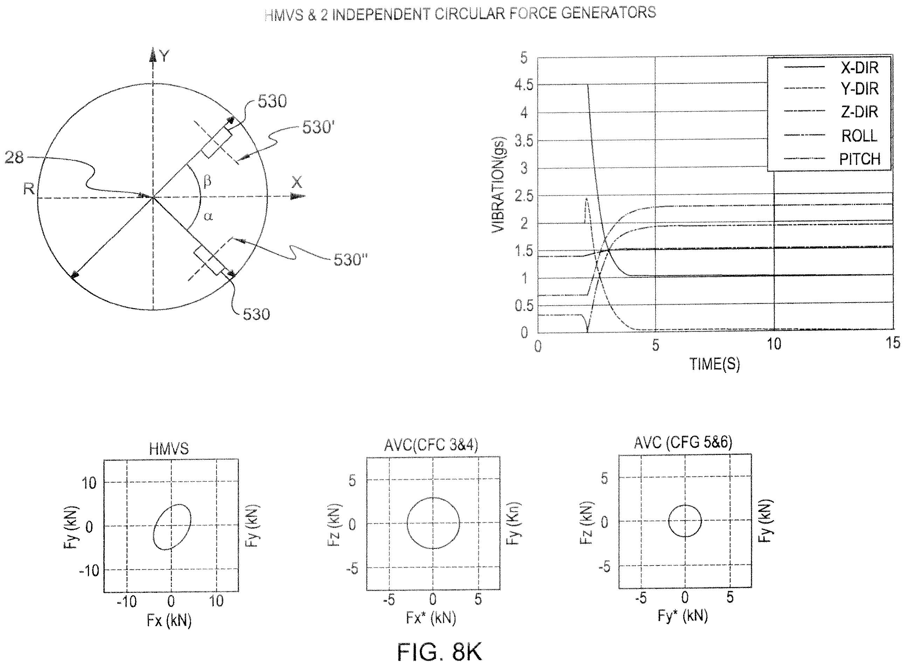

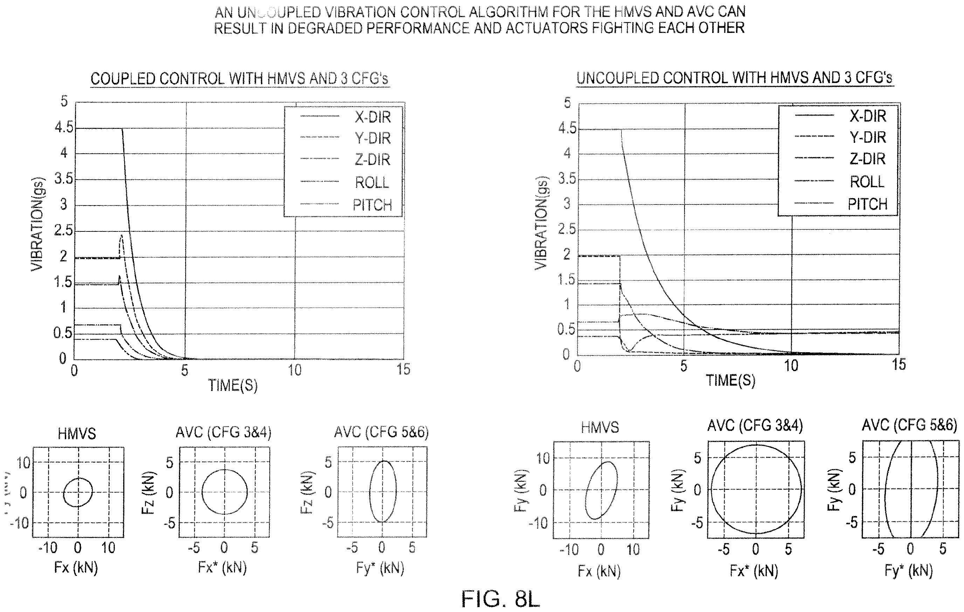

The rotary wing aircraft 520 includes a gear box transmission 526 for transmitting rotational power to the rotating machine member 522. Vehicle engine energy force is transmitted through the transmission 526 to the vehicle motive force propeller helicopter rotor to move it and in turn move the vehicle, with the transmission connected to rotor and transmitting rotating force to the rotor so the rotor turns at the relative rotation rate to the vehicle nonrotating body. The vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 mounted proximate to the vehicle transmission 526A plurality of nonrotating vehicle body circular force generators 530 are mounted adjacent to the transmission 526, and the transmission is above the floor 546 and ceiling 544. FIG. 8 illustrates examples with nonrotating vehicle body circular force generators 530 mounted to the vehicle transmissions 526, with the circular force generator axis 530' oriented relative to the rotation axis of the rotating machine member 522. The circular force generator axis 530' are oriented non-parallel with the rotating machine member rotor hub axis of rotation 28. FIG. 8B-L illustrate examples with the circular force generator axis 530', 530", 530''', and 530'''' are oriented non-parallel with the helicopter rotary wing member rotor hub axis of rotation 28.

The rotary wing aircraft has a nonrotating aerostructure body 524 and a rotating rotary wing hub 522 driven to rotate about a rotating hub center Z axis of rotation 28 by an engine through a main gear box transmission 526. The rotary wing aircraft includes a rotating hub mounted vibration control system 20, the rotating hub mounted vibration control system 20 mounted to the rotating rotary wing hub 522 with the rotating hub mounted vibration control system rotating with the rotating rotary wing hub, the rotating hub mounted vibration control system including a plurality of imbalance mass concentration rotors 38,44,38',44' driven to rotate about the rotating hub center Z axis of rotation 28. The rotary wing aircraft includes a rotary wing aircraft member sensor for outputting rotary wing aircraft member data correlating to the relative rotation of the rotating rotary wing hub member rotating relative to the nonrotating body. The rotary wing aircraft includes at least a first nonrotating vibration sensor, the at least first nonrotating vibration sensor outputting at least first nonrotating body vibration sensor data correlating to vibrations. The rotary wing aircraft includes a nonrotating body circular force generator 530 having a first circular force generator rotating masses axis 530', the at least first nonrotating body circular force generator 530 fixedly coupled with the nonrotating body 524 proximate the gear box transmission 526 with the first circular force generator rotating masses axis 530' perpendicular to the rotating hub center Z axis of rotation 28. The rotary wing aircraft includes at least a second nonrotating body circular force generator 530 having a second circular force generator rotating masses axis 530", the at least second nonrotating body circular force generator 530 fixedly coupled with the nonrotating body 524 proximate the gear box transmission 526 with the second circular force generator rotating masses axis 530" perpendicular to the rotating hub center Z axis of rotation 28. The rotary wing aircraft includes a distributed force generation data communications network link, the distributed force generation data communications system network link linking together at least the first nonrotating body circular force generator 530, the second nonrotating body circular force generator 530, and the rotating hub mounted vibration control system 20 wherein the rotating hub mounted vibration control system and the nonrotating body circular force generators communicate force generation vibration control data through the distributed force generation data communications network, the first nonrotating body circular force generator controlled to produce a first nonrotating body circular force generator rotating force centered about the first nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first non-rotating body vibration sensor is reduced.

The circular force generator rotating masses axis 530', 530", 530''', and 530'''' are perpendicular to the rotating hub center Z axis of rotation 28 with the masses axis not intersecting the Z axis. The circular force generators generate a force plane oriented in a YZ or XZ plane, with the force plane oriented perpendicular to the XY plane of the rotating hub mounted vibration control system 20. The first and second circular force generator rotating masses axis 530' and 530" are non-parallel to each other, with their axis intersecting each other. The second nonrotating body circular force generator is controlled to produce a second nonrotating body circular force generator rotating force centered about the second nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced. The rotary wing aircraft includes a third nonrotating body circular force generator having a third circular force generator rotating masses axis 530''', the third nonrotating body circular force generator fixedly coupled with the nonrotating body proximate the gear box transmission with the third nonrotating body circular force generator rotating masses axis 530''' perpendicular to the rotating hub center Z axis of rotation 28. The third nonrotating body circular force generator is controlled to produce a third nonrotating body circular force generator rotating force centered about the third nonrotating body circular force generator rotating masses axis 530''' with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced. The rotating hub mounted vibration control system, the first nonrotating body circular force generator, second nonrotating body circular force generator, and the third nonrotating body circular force generator are controlled together to provide five degrees of freedom control, with the HMVS rotors rotating in XY planes, and the CFGs rotated in ZY and ZX planes normal to the XY planes. The rotating hub mounted vibration control system including a first rotating body vibration sensor, the rotating hub mounted vibration control system first rotating body vibration sensor outputting first rotating body vibration sensor data into the distributed force generation data communications network link. The aircraft includes a master controller connected to the distributed force generation data communications network link controls the rotating hub mounted vibration control system and the first nonrotating body circular force generator wherein vibrations sensed by the at least a first nonrotating body vibration sensor are minimized. The distributed force generation data communications network link is a serial communications network link. The rotating rotary wing hub has an operational rotation frequency and the rotating hub mounted vibration control system plurality of imbalance mass concentration rotors (38,44,38',44') include a first hub mounted vibration control system rotor with a first imbalance mass concentration, the first hub mounted vibration control system rotor driven to rotate at a first rotation speed greater than the operational rotation frequency of the rotating rotary wing hub, a second hub mounted vibration control system rotor with a second imbalance mass concentration, the second hub mounted vibration control system rotor driven to rotate at the first rotation speed greater than the operational rotation frequency of the rotating rotary wing hub, a third hub mounted vibration control system rotor with a third imbalance mass concentration, the third hub mounted vibration control system rotor driven to rotate at a second rotation speed greater than the operational rotation frequency of the rotating rotary wing hub, a fourth hub mounted vibration control system rotor with a fourth imbalance mass concentration, the fourth hub mounted vibration control system rotor driven to rotate at the second rotation speed greater than the operational rotation frequency of the rotating rotary wing hub. The rotating hub mounted vibration control system plurality of imbalance mass concentration rotors (38,44,38',44') include a first hub mounted vibration control system rotor with a first imbalance mass concentration, the first hub mounted vibration control system rotor driven to rotate at a first rotor speed greater than an operational rotation frequency of the rotating rotary wing hub, a second hub mounted vibration control system rotor with a second imbalance mass concentration, the second hub mounted vibration control system rotor driven to rotate at a second rotor speed greater than the operational rotation frequency of the rotating rotary wing hub. The first circular force generator includes a first rotating mass (mass$_{1\_1}$) controllably driven about the first circular force generator rotating masses axis with a first rotating mass controllable rotating imbalance phase $\Phi_{1\_1}$ and a second corotating mass (mass$_{1\_2}$) controllably driven about the first circular force generator rotating masses axis with a second rotating mass controllable rotating imbalance phase $\Phi_{1\_2}$, and the second circular force generator including a first rotating mass (mass$_{2\_1}$) controllably driven about the second circular force generator rotating masses axis with a first rotating mass controllable rotating imbalance phase $\Phi_{2\_1}$ and a second corotating mass (mass$_{2\_2}$) controllably driven about the second circular force generator rotating masses axis with a second rotating mass controllable rotating imbalance phase $\Phi_{2\_2}$, the second circular force generator oriented relative to the first circular force generator wherein the second circular force generator rotating masses axis is nonparallel with the first circular force generator rotating masses axis.

The aircraft vibration control system is for an aircraft vehicle having a nonrotating aerostructure body and a rotating rotary wing hub driven to rotate about a rotating hub center Z axis of rotation 28 by an engine through a main gear box transmission. The aircraft vibration control system includes a rotating hub mounted vibration control system, the rotating hub mounted vibration control system mounted to the rotating rotary wing hub with the rotating hub mounted vibration control system rotating about the rotating hub center Z axis of rotation 28 with the rotating rotary wing hub. The aircraft vibration control system includes a rotary wing aircraft member sensor for outputting rotary wing aircraft member data correlating to the relative rotation of the rotating rotary wing hub member rotating relative to the nonrotating body. The aircraft vibration control system includes a vibration sensor, the nonrotating body vibration sensor outputting at least first nonrotating body vibration sensor data correlating to vibrations. The aircraft vibration control system includes at least a first nonrotating body force generator and a second nonrotating body force generator, the at least first nonrotating body force generator fixedly coupled with the nonrotating body adjacent the gear box transmission. The first nonrotating body circular force generator has a first circular force generator rotating masses axis, the at least first nonrotating body circular force generator fixedly coupled with the nonrotating body adjacent the gear box transmission with the first circular force generator rotating masses axis perpendicular to the rotating hub center Z axis of rotation 28. The second nonrotating body circular force generator having a second circular force generator rotating masses axis, the at least second nonrotating body circular force generator fixedly coupled with the nonrotating body adjacent the gear box transmission with the second circular force generator rotating masses axis perpendicular to the rotating hub center Z axis of rotation 28. The first circular force generator rotating masses axis is nonparallel to the second circular force generator rotating masses axis. The aircraft vibration control system includes a distributed force generation data communications network link, the distributed force generation data communications network link linking together at least the first and second nonrotating body force generators and the rotating hub mounted vibration control system wherein the rotating hub mounted vibration control system and the first nonrotating body force generator communicate through the distributed force generation data communications network. The first nonrotating body circular force generator is controlled to produce a first nonrotating body circular force generator rotating force centered about the first nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body, and the second nonrotating body circular force generator controlled to produce a second nonrotating body circular force generator rotating force centered about the second nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body. The rotating hub mounted vibration control system includes at least a first hub mounted vibration control system rotor with a first imbalance mass concentration, the first hub mounted vibration control system rotor driven to rotate at a first rotation speed greater than an operational rotation frequency of the rotating rotary wing hub, and at least a second hub mounted vibration control system rotor with a second imbalance mass concentration, the second hub mounted vibration control system rotor driven to rotate at the first rotation speed greater than the operational rotation frequency of the rotating rotary wing hub, wherein the vibration sensed by the at least first nonrotating body vibration sensor is reduced. The circular force generator rotating masses axis are perpendicular to the rotating hub center Z axis of rotation 28 with the masses axis not intersecting the Z axis, with force planes in a YZ or XZ plane, force planes perpendicular to the XY HMVS plane. The first and second circular force generator rotating masses axis are non-parallel to each other, preferably with the axis intersecting each other. The third nonrotating body circular force generator having a third circular force generator rotating masses axis, the third nonrotating body circular force generator fixedly coupled with the nonrotating body proximate the gear box transmission with the third nonrotating body circular force generator rotating masses axis perpendicular to the rotating hub center Z axis of rotation 28, the third nonrotating body circular force generator controlled to produce a third nonrotating body circular force generator rotating force centered about the third nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced.

The method of controlling aircraft vibrations in a rotary wing aircraft having a nonrotating aerostructure body and a rotating rotary wing hub driven to rotate about a rotating hub center Z axis of rotation 28 by an engine through a main gear box transmission includes providing a rotating hub mounted vibration control system, the rotating hub mounted vibration control system mounted to the rotating rotary wing hub with the rotating hub mounted vibration control system rotating about the rotating hub center Z axis of rotation 28 with the rotating rotary wing hub. The rotating hub mounted vibration control system includes a first hub mounted vibration control system rotor with a first imbalance mass concentration, and a second hub mounted vibration control system rotor with a second imbalance mass concentration. The method includes providing a first nonrotating body force generator, the first nonrotating body force generator fixedly coupled with the nonrotating body adjacent the gear box transmission. The first nonrotating body circular force generator having a first circular force generator rotating masses axis, with the first circular force generator rotating masses axis perpendicular to the rotating hub center Z axis of rotation 28. The method includes providing a second nonrotating body circular force generator having a second circular force generator rotating masses axis, the second nonrotating body circular force generator fixedly coupled with the nonrotating body adjacent the gear box transmission with the second circular force generator rotating masses axis perpendicular to the rotating hub center Z axis of rotation 28, with the first circular force generator rotating masses axis nonparallel to the second circular force generator rotating masses axis. The method includes controlling the first nonrotating vehicle body circular force generator to produce a rotating force with a controllable rotating force magnitude and a controllable rotating force phase. The method includes controlling the second nonrotating vehicle body circular force generator to produce a rotating force with a controllable rotating force magnitude and a controllable rotating force phase. The method includes driving the first hub mounted vibration control system rotor and the second hub mounted vibration control system rotor to control the vibrations. The method includes providing a third nonrotating body circular force generator having a third circular force generator rotating masses axis, the third nonrotating body circular force generator fixedly coupled with the nonrotating body proximate the gear box transmission with the third nonrotating body circular force generator rotating masses axis perpendicular to the rotating hub center Z axis of rotation 28, and controlling the third nonrotating body circular force generator to produce a third nonrotating body circular force generator rotating force centered about the third nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to a rotary wing aircraft member sensor data correlating to the relative rotation of the rotating rotary wing hub rotating relative to the nonrotating body wherein a vibration sensed by an at least first nonrotating body vibration sensor is reduced.

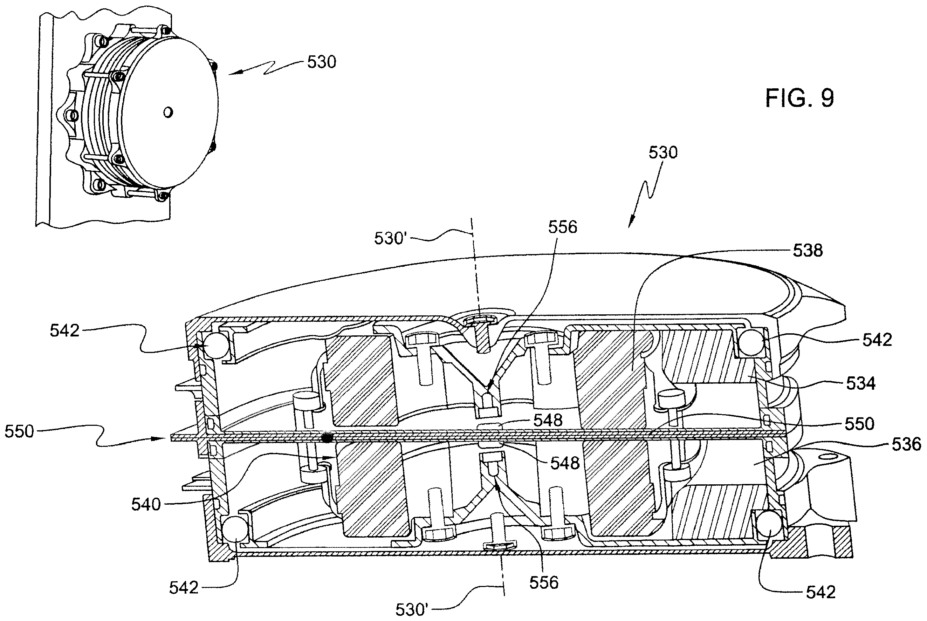

FIG. 5 illustrates the examples of a nonrotating vehicle body circular force generator 530 including first rotating mass ($mass_{1\_1}$) 534 controllably driven about a first rotating mass axis 534' colined with circular force generator axis 530' rotated by motor 538 (with the nonrotating motor winding between the rotating motor rotor and the rotating mass 534) with first rotating mass controllable rotating imbalance phase $\Phi_{1\_1}$ and a second corotating mass ($mass_{1\_2}$) 536 controllably driven about a second rotating mass axis 536' colined with circular force generator axis 530' rotated by motor 540 (with the nonrotating motor winding between the rotating motor rotor and the rotating mass 536) with first rotating mass controllable rotating imbalance phase $\Phi_{1\_2}$. A nonrotating vehicle body circular force generator circuit board 550 is positioned between the first rotating mass ($mass_{1\_1}$) 534 and the second corotating mass ($mass_{1\_2}$) 536, a substantially planar is disposed and aligned between the rotating masses and motors, with the circuit board comprised of a sealed circuit board with a sealed exterior overcoating, with the circuit board plane oriented substantially normal to the circular force generator axis 530' with the board equal distances between the first rotating mass ($mass_{1\_1}$) 534 and the second corotating mass ($mass_{1\_2}$) 536. The circular force generator circuit board 550 extends with an electric lead end into an electronic housing, with the electric lead end connecting the circuit board with at least a first system connector with the outside and the controller 411 and the system 409. The circuit board includes wiring paths to the motor windings and to first and second rotating mass sensors 548 mounted on the circuit board 550. The first and second rotating mass sensors 548 mounted on the circuit board monitor the rotational position of the rotating mass sensor target 556 on the rotor being driven by the motors 538, 540 such that the controller 411 knows the rotational phase position of the rotating masses 534, 536, wherein the first and second rotating mass sensors 548 are comprised of Hall sensor integrated sensor chips for sensing the rotation of a magnetic rotating mass sensor target 556 to provide out through the circuit board to the system controller the rotational position of the rotating mass. The rotating moving mass electronic noncontacting magnetic sensor 548 comprises an integrated circuit semiconductor sensor chip which outputs through the circuitboard 550 into the system 409 and controller 411 the rotational angle phase position of the rotating moving mass that the sensor target 556 is coupled with that the motor driven by the controller is driving. The electronic noncontacting magnetic sensor integrated circuit semiconductor sensor chip has at least two dies, the at least two dies are ASICs (Application Specific Integrated Circuits), the at least two dies are side by side dies in the integrated circuit semiconductor sensor chip. In an example the at least two dies are vertically stacked dies in the integrated circuit semiconductor sensor chip. The integrated circuit semiconductor sensor chip ASIC die includes a magnetoresistive material, with electrical resistance changes in the presence of the magnetic target magnetic field of target 556, with magnetoresistive elements arranged in a Wheatstone bridge. The integrated circuit semiconductor sensor chip ASIC die include a Hall Effect element, a plurality of oriented Hall Effect elements, silicon semiconductor Hall effect elements which detect the magnetic target magnetic field of target 556. The first electronic noncontacting magnetic sensor 548 sensor plane is integrated substantially normal to the circular force generator axis 530'. The second electronic noncontacting magnetic sensor 548 second sensor plane is integrated substantially normal to the circular force generator axis 530'. The motor driven rotor includes a fan magnetic coupling drive for driving air cooling fans, with the magnetic coupling drive provided with a magnetic coupling drive ratio to drive the fan at a predetermined fan speed, such as a 4/rev to provide forced air cooling of the force generator 530. FIG. 9 illustrates a circular force generator axis 530' with the circuit board 550 oriented between the motor driven imbalance masses 534 and 536 with circuit board mounted axis oriented sensor plane chips 548 tracking the rotational position of the motor driven imbalance masses 534 and 536.

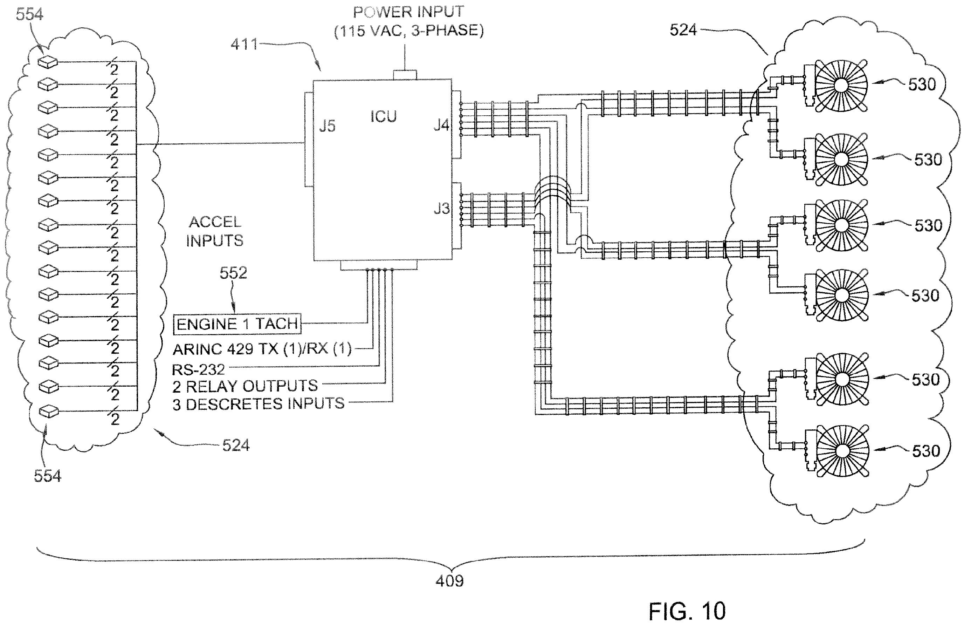

FIG. 10 illustrates a further vibration control system with a block diagram with six circular force generators 530 controlled by a controller 411 with a pluarity of accelerometer nonrotating body vibration sensors 554 and an engine tachometer input sensor 552 for the rotating machine member sensor for inputting vehicle rotating machine member data correlating to the relative rotation of the vehicle rotating machine member rotating relative to the nonrotating vehicle body into the vehicle vibration control system controller. The vehicle vibration control system controller 411 controls the rotation of the corotating masses rotating about circular force generator axes (530', 530", ..., 530"'') to create the controllable rotating forces which rotationally emanate out from the nonrotating vehicle body circular force generators 530 to reduces the vehicle vibrations sensed by the nonrotating body vibration sensors 554.

The vehicle 520 is a helicopter with the vehicle rotating machine member 522 the helicopter rotating rotary wing hub above the nonrotating vehicle body helicopter fuselage frame below, and the helicopter rotating rotary wing hub includes hub mounted vibration control system 20 with at least a first hub mounted motor driven hub mass and at least a second hub mounted motor driven hub mass housed within a hub housing 30, with the mounted vibration control system 20 at least a first hub mounted motor driven hub mass and at least a second hub mounted motor driven hub mass driven to rotate relative to the rotary wing hub while the system 409 generates rotating forces in the body 524 with the circular force generators 530.

The circular force generator 530 includes at least a first rotating externally housed cooling fan having a rotation motion for cooling said circular force generator, said cooling fan rotation motion linked with the rotation of said rotating force. The circular force generator 530 includes at least a first rotating externally housed cooling fan having a rotation motion for cooling the circular force generator 530, the cooling fan rotation motion linked with a rotation of said first rotating mass ($mass_{1\_1}$) or said second corotating mass ($mass_{1\_2}$). The circular force generator 530 includes a magnetically coupled forced air cooling fan magnetically coupled to the rotation of the mass rotor within the generator housing such that no external power is needed to rotate the fan, with a plurality of spaced magnets providing a rotation coupling to power the fan rotation.

The invention includes a vehicle vibration control system for controlling troublesome vibrations in a nonrotating vehicle body having a rotating machine member. The vehicle vibration control system including a vehicle vibration control system controller. The vehicle vibration control system including a rotating machine member sensor, for inputting vehicle rotating machine member data correlating to a relative rotation of the rotating machine member rotating relative to the nonrotating body into the vehicle vibration control system controller. The vehicle vibration control system including at least a first nonrotating vehicle body vibration sensor, the at least first nonrotating vehicle body vibration sensor inputting at least first nonrotating vehicle body vibration sensor data correlating to vehicle vibrations into the vehicle vibration control system controller. The vehicle vibration control system including at least a first nonrotating vehicle body circular force generator, the at least a first nonrotating vehicle body circular force generator for fixedly mounting to the nonrotating vehicle body wherein the at least first nonrotating vehicle body circular force generator is controlled by the controller to produce a rotating force with a controllable rotating force magnitude and a controllable rotating force phase, the controllable rotating force magnitude controlled from a minimal force magnitude up to a maximum force magnitude, and with the controllable rotating force phase controlled in reference to the vehicle rotating machine member sensor data correlating to the relative rotation of the vehicle rotating machine member rotating relative to the nonrotating vehicle body with the vehicle vibration sensed by the at least first nonrotating vehicle body vibration sensor reduced by the controller.

The vehicle vibration control system 409 includes a rotary wing aircraft vehicle vibration control system for controlling troublesome vibrations in a nonrotating vehicle body 524 having a rotating machine member 522, the aircraft vehicle structure frame. The rotating vehicle machine member rotating component 522 producing vibrations and the vibration disturbance at a vibration frequency in the nonrotating vehicle body 524 is the aircraft rotating rotary wing hub. The vehicle vibration control system 409 includes a vehicle vibration control system controller 411 with a vehicle vibration control system processor, with a computer processor with inputs and outputs, and with the control system comprised of multiple connected subsystems. The system includes a vehicle rotating machine member sensor 552, for inputting vehicle rotating machine member data correlating to a relative rotation of the vehicle rotating machine member rotating relative to the nonrotating vehicle body (tach input) into the vehicle vibration control system controller. The rotating machine member sensor 552 is a reference sensor for generating a persistent signal indicative of the vibration disturbance, and senses a harmonic of the rotating speed of the rotating vehicle machine member 522 producing vibrations, and tachometer sensor provides a tach input. The system includes at least a first nonrotating vehicle body vibration sensor 554, the at least first nonrotating vehicle body vibration sensor inputting at least first nonrotating vehicle body vibration sensor data correlating to vehicle vibrations into the vehicle vibration control system controller, with the system having a plurality of vibration sensors 554 distributed throughout the body 524. The sensors 554 are accelerometers providing accel inputs. The system includes at least a first nonrotating vehicle body circular force generator 530, the at least a first nonrotating vehicle body circular force generator 530 for fixedly mounting to the nonrotating vehicle body 524 wherein the at least first nonrotating vehicle body circular force generator 530 is controlled by the controller 411 to produce a rotating force with a controllable rotating force magnitude and a controllable rotating force phase, the controllable rotating force magnitude controlled from a minimal force magnitude up to a maximum force magnitude, (zero magnitude force when masses have a 180° separation opposed position) (maximum force magnitude when masses have a 0° separation position), and with the controllable rotating force phase controlled in reference to the vehicle rotating machine member sensor data correlating to the relative rotation of the vehicle rotating machine member rotating relative to the nonrotating vehicle body (in reference to the tach input) with the vehicle vibration sensed by the at least first nonrotating vehicle body vibration sensor reduced by the controller. The system includes a plurality of nonrotating vehicle body circular force generators 530 controlled by the controller 411 to produce a plurality of rotating forces with the vibration reduced at a frequency correlating to rotating machine member 522, with troublesome vibrations in the body 524 reduced at harmonics of rotating machine member 522. The system controlling harmonic vibrations of the rotating machine member 522 with the generated rotating forces emanating from the circular force generators 530, and with the circular force generators driven rotating moving masses 534 and 536 rotated at a harmonic of the vehicle rotating machine member 522. The system includes n nonrotating vehicle body vibration sensors 554 and m nonrotating vehicle body circular force generators 530 wherein n>m. Wherein the rotating forces generates are controlled by the controller 411 to rotate at a harmonic of the rotating machine member 522 rotating speed, with the system producing circular forces and not calculating for or intentionally producing linear forces, with the system inhibiting and avoiding calculating linear forces and outputting such.

The vehicle vibration control system controller generates a rotating reference signal from the vehicle rotating machine member data correlating to the relative rotation of the vehicle rotating machine member rotating relative to the nonrotating vehicle body. The vehicle vibration control system controller 411 calculates in reference to a rotating reference signal the rotating force to be generated with a real part $\alpha$ and an imaginary part $\beta$. The vibe control subsystem calculates real parts $\alpha_m$ and imaginary parts $\beta_m$ in generating circular force command signals which command/describe desired rotating force vectors, such circular force command signals $\alpha_m \beta_m$ are sent to the rotor phase compute subsystem which in turn computes mass phase signals, which are sent to the motor control/motor drive subsystem which generates motor drive signals that drive the masses around their rotating circular paths, motor drive signals that drive the masses to generate the circular forces motor drive signals for motors 538, 540 to drive the masses 534, 536.

The at least first nonrotating vehicle body circular force generator 530 including at least a first rotating mass(mass$_{1\_1}$) 534 controllably driven about a first rotating mass axis 534' with a first rotating mass controllable rotating imbalance phase $\Phi_{1\_1}$ and at least a second corotating mass (mass$_{1\_2}$) 536 controllably driven about a second rotating mass axis 536' with a second rotating mass controllable rotating imbalance phase $\Phi_{1\_2}$, with the axes are overlapping, with masses adjacent each other, duplicate mass arcs of duplicate arcuate shape and arcuate size oriented about the overlapping axes. The system includes n nonrotating vehicle body vibration sensors 554 and m nonrotating vehicle body circular force generators 530 with n>m, the vehicle vibration control system controller generating a rotating reference signal from the vehicle rotating machine member data correlating to the relative rotation of the vehicle rotating machine member 522 rotating relative to the nonrotating vehicle body 524, and the first nonrotating vehicle body circular force generator 530 includes a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal. The m$^{th}$ nonrotating vehicle body circular force generator 530 includes a first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal.

The first nonrotating vehicle body circular force generator 530 includes a first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$. The first rotating mass (mass$_{1\_1}$) 534 is driven with a first motor 538 and the second corotating mass (mass$_{1\_2}$) is driven with a second motor 540.

The first nonrotating vehicle body circular force generator 530 includes a first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$ with a detent 576 linking between the first rotating mass (mass$_{m\_1}$) and the second corotating mass (mass$_{m\_2}$), and a single motor for driving the first rotating mass (mass$_{m\_1}$), wherein the first rotating mass (mass$_{m\_1}$) comprises a master rotating mass (mass$_{m\_1}$) with a master rotating mass controllable rotating imbalance phase $\Phi_{1\_1}$, and the second corotating mass (mass$_{m\_2}$) comprises a slave corotating mass (mass$_{m\_2}$) with a slave rotating mass controllable rotating imbalance phase $\Phi_{1\_2}$ with the detent controlling the slave rotating mass controllable rotating imbalance phase $\Phi_{1\_2}$ relative to the master rotating mass controllable rotating imbalance phase $\Phi_{1\_1}$.

The system includes n nonrotating vehicle body vibration sensors 554 and m nonrotating vehicle body circular force generators 530, with m $\geq$ 2 and n>m, and the vehicle vibration control system controller calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass (mass$_{1\_1}$) 534 controllably driven about a first circular force generator axis 530' with a first rotating mass controllable rotating imbalance phase $\Phi_{1\_1}$ and a second corotating mass (mass$_{1\_2}$) 536 controllably driven about the first circular force generator axis 530' with a second rotating mass controllable rotating

imbalance phase $\Phi_{1\_2}$, with the imbalance phase $\Phi_{1\_1}$ and the imbalance phase $\Phi_{1\_2}$ controlled in reference to the rotating reference signal. The system includes a second nonrotating vehicle body circular force generator 530 including a first rotating mass (mass$_{2\_1}$) 534 controllably driven about a second circular force generator axis 530" with a first rotating mass controllable rotating imbalance phase $\Phi_{2\_1}$ and a second corotating mass (mass$_{2\_2}$) 536 controllably driven about the second circular force generator axis 530" with a second rotating mass controllable rotating imbalance phase $\Phi_{2\_2}$, with the imbalance phase $\Phi_{2\_1}$ and the imbalance phase $\Phi_{2\_2}$ controlled in reference to the rotating reference signal, with the second nonrotating vehicle body circular force generator 530 oriented relative to the first nonrotating vehicle body circular force generator 530 wherein the second circular force generator axis 530" is nonparallel with the first circular force generator axis 530'. As illustrated, the axes 530' and 530" are oriented orthogonally. When m ≥ 3, a third nonrotating vehicle body circular force generator 530 including a first rotating mass (mass$_{3\_1}$) 534 controllably driven about a third circular force generator axis 530'" with a first rotating mass controllable rotating imbalance phase $\Phi_{3\_1}$ and a second corotating mass (mass$_{3\_2}$) 536 controllably driven about the third circular force generator axis 530'" with a second rotating mass controllable rotating imbalance phase $\Phi_{3\_2}$, with the imbalance phase $\Phi_{3\_1}$ and the imbalance phase $\Phi_{3\_2}$ controlled in reference to the rotating reference signal, the third circular force generator axis oriented relative to the second circular force generator axis and the first circular force generator axis.

The system provides for the placement of nonrotating vehicle body circular force generators 530 proximate the vehicle ceiling and floor. The vehicle nonrotating vehicle body 524 includes a vehicle ceiling 544 and a distal vehicle floor 546, the distal vehicle floor below 546 the vehicle ceiling 544 under normal parking, use and flight of the vehicle in the presence of gravity. The system includes n nonrotating vehicle body vibration sensors 554 and m nonrotating vehicle body circular force generators 530 with n>m. The vehicle vibration control system controller 411 calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 provided for mounting to the vehicle body 524 proximate the vehicle ceiling 544. The vehicle m$^{th}$ nonrotating vehicle body circular force generator 530 including a first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal, the m$^{th}$ nonrotating vehicle body circular force generator 530 provided for mounting to the vehicle body 524 proximate the vehicle floor 546. A plurality of circular force generators 530 are provided for mounting to the vehicle body frame 524 proximate the floor 546, and under the floor 546, and proximate the vehicle nose, and proximate the vehicle tail. A plurality of circular force generators 530 are provided for mounting to the vehicle body frame 524 proximate the ceiling 544, above the ceiling 544, proximate the vehicle tail, and/or to a vehicle tailcone frame.

The system includes controlling vehicle transmission 526 vibrations. The vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 mounted proximate to the vehicle transmission 526. A plurality of nonrotating vehicle body circular force generators 530 are mounted adjacent to the transmission 526, and the transmission is above the floor 546 and ceiling 544. The nonrotating vehicle body circular force generators 530 are mounted to the vehicle transmissions 526, with the circular force generator axis 530' oriented relative to the rotation axis of the rotating machine member 522. The rotary wing aircraft 520 includes a gear box transmission 526 for transmitting rotational power to the rotating machine member 522. Vehicle engine energy force is transmitted through the transmission 526 to the vehicle motive force propeller helicopter rotor to move it and in turn move the vehicle, with the transmission connected to rotor and transmitting rotating force to the rotor so the rotor turns at the relative rotation rate to the vehicle nonrotating body. The vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable

rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 mounted proximate to the vehicle transmission 526. A plurality of nonrotating vehicle body circular force generators 530 are mounted adjacent to the transmission 526, and the transmission is above the floor 546 and ceiling 544. FIG. 8 illustrates examples with nonrotating vehicle body circular force generators 530 mounted to the vehicle transmissions 526, with the circular force generator axis 530' oriented relative to the rotation axis of the rotating machine member 522. The circular force generator axis 530' are oriented non-parallel with the rotating machine member rotor hub axis of rotation 28. FIG. 8B-L illustrate the circular force generator axis 530', 530", 530'", and 530"" are oriented non-parallel with the helicopter rotary wing member rotor hub axis of rotation 28.

The rotary wing aircraft has a nonrotating aerostructure body 524 and a rotating rotary wing hub 522 driven to rotate about a rotating hub center Z axis of rotation 28 by an engine through a main gear box transmission 526. The rotary wing aircraft includes a rotating hub mounted vibration control system 20, the rotating hub mounted vibration control system 20 mounted to the rotating rotary wing hub 522 with the rotating hub mounted vibration control system rotating with the rotating rotary wing hub, the rotating hub mounted vibration control system including a plurality of imbalance mass concentration rotors 38,44,38',44' driven to rotate about the rotating hub center Z axis of rotation 28. The rotary wing aircraft includes a rotary wing aircraft member sensor for outputting rotary wing aircraft member data correlating to the relative rotation of the rotating rotary wing hub member rotating relative to the nonrotating body. The rotary wing aircraft includes at least a first nonrotating vibration sensor, the at least first nonrotating vibration sensor outputting at least first nonrotating body vibration sensor data correlating to vibrations. The rotary wing aircraft includes a nonrotating body circular force generator 530 having a first circular force generator rotating masses axis 530', the at least first nonrotating body circular force generator 530 fixedly coupled with the nonrotating body 524 proximate the gear box transmission 526 with the first circular force generator rotating masses axis 530' perpendicular to the rotating hub center Z axis of rotation 28. The rotary wing aircraft includes at least a second nonrotating body circular force generator 530 having a second circular force generator rotating masses axis 530", the at least second nonrotating body circular force generator 530 fixedly coupled with the nonrotating body 524 proximate the gear box transmission 526 with the second circular force generator rotating masses axis 530" perpendicular to the rotating hub center Z axis of rotation 28. The rotary wing aircraft includes a distributed force generation data communications network link, the distributed force generation data communications system network link linking together at least the first nonrotating body circular force generator 530, the second nonrotating body circular force generator 530, and the rotating hub mounted vibration control system 20 wherein the rotating hub mounted vibration control system and the nonrotating body circular force generators communicate force generation vibration control data through the distributed force generation data communications network, the first nonrotating body circular force generator controlled to produce a first nonrotating body circular force generator rotating force centered about the first nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first non-rotating body vibration sensor is reduced.

The circular force generator rotating masses axis 530', 530", 530'", and 530"" are perpendicular to the rotating hub center Z axis of rotation 28 with the masses axis not intersecting the Z axis. The circular force generators generate a force plane oriented in a YZ or XZ plane, with the force plane oriented perpendicular to the XY plane of the rotating hub mounted vibration control system 20. The first and second circular force generator rotating masses axis 530' and 530" are non-parallel to each other, with their axis intersecting each other. The second nonrotating body circular force generator is controlled to produce a second nonrotating body circular force generator rotating force centered about the second nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced. The rotary wing aircraft includes a third nonrotating body circular force generator having a third circular force generator rotating masses axis 530'", the third nonrotating body circular force generator fixedly coupled with the nonrotating body proximate the gear box transmission with the third nonrotating body circular force generator rotating masses axis 530'" perpendicular to the rotating hub center Z axis of rotation 28. The third nonrotating body circular force generator is controlled to produce a third nonrotating body circular force generator rotating force centered about the third nonrotating body circular force generator rotating masses axis 530'" with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced. The rotating hub mounted vibration control system, the first nonrotating body circular force generator, second nonrotating body circular force generator, and the third nonrotating body circular force generator are controlled together to provide five degrees of freedom control, with the HMVS rotors rotating in XY planes, and the CFGs rotated in ZY and ZX planes normal to the XY planes. The rotating hub mounted vibration control system including a first rotating body vibration sensor, the rotating hub mounted vibration control system first rotating body vibration sensor outputting first rotating body vibration sensor data into the distributed force generation data communications network link. The aircraft includes a master controller connected to the distributed force generation data communications network link controls the rotating hub mounted vibration control system and the first nonrotating body circular force generator wherein vibrations sensed by the at least a first nonrotating body vibration sensor are minimized. The distributed force generation data communications network link is a serial communications network link. The rotating rotary wing hub has an operational rotation frequency and the rotating hub mounted vibration control system plurality of imbalance mass concentration rotors (38,44,38',44') include a first hub mounted vibration control system rotor with a first imbalance mass concentration, the first hub mounted vibration control system rotor driven to rotate at a first rotation speed greater than the operational rotation frequency of the rotating rotary wing hub, a second hub mounted vibration control system rotor with a second imbalance mass concentration, the second hub mounted vibration control system rotor driven to rotate at the first rotation speed greater than the operational rotation frequency of the rotating rotary wing hub, a third hub mounted vibration control system rotor with a third imbalance mass concentration, the third hub mounted vibration control system rotor driven to rotate at a second rotation speed greater than the operational rotation frequency of the rotating rotary wing hub, a fourth hub mounted vibration control system rotor with a fourth imbalance mass concentration, the fourth hub mounted vibration control system rotor driven to rotate at the second rotation speed greater than the operational rotation frequency of the rotating rotary wing hub. The rotating hub mounted vibration control system plurality of imbalance mass concentration rotors (38,44,38',44') include a first hub mounted vibration control system rotor with a first imbalance mass concentration, the first hub mounted vibration control system rotor driven to rotate at a first rotor speed greater than an operational rotation frequency of the rotating rotary wing hub, a second hub mounted vibration control system rotor with a second imbalance mass concentration, the second hub mounted vibration control system rotor driven to rotate at a second rotor speed greater than the operational rotation frequency of the rotating rotary wing hub. The first circular force generator includes a first rotating mass ($mass_{1\_1}$) controllably driven about the first circular force generator rotating masses axis with a first rotating mass controllable rotating imbalance phase $\Phi_{1\_1}$ and a second corotating mass ($mass_{1\_2}$) controllably driven about the first circular force generator rotating masses axis with a second rotating mass controllable rotating imbalance phase $\Phi_{1\_2}$, and the second circular force generator including a first rotating mass ($mass_{2\_1}$) controllably driven about the second circular force generator rotating masses axis with a first rotating mass controllable rotating imbalance phase $\Phi_{2\_1}$ and a second corotating mass ($mass_{2\_2}$) controllably driven about the second circular force generator rotating masses axis with a second rotating mass controllable rotating imbalance phase $\Phi_{2\_2}$, the second circular force generator oriented relative to the first circular force generator wherein the second circular force generator rotating masses axis is nonparallel with the first circular force generator rotating masses axis.

The aircraft vibration control system is for an aircraft vehicle having a nonrotating aerostructure body and a rotating rotary wing hub driven to rotate about a rotating hub center Z axis of rotation 28 by an engine through a main gear box transmission. The aircraft vibration control system includes a rotating hub mounted vibration control system, the rotating hub mounted vibration control system mounted to the rotating rotary wing hub with the rotating hub mounted vibration control system rotating about the rotating hub center Z axis of rotation 28 with the rotating rotary wing hub. The aircraft vibration control system includes a rotary wing aircraft member sensor for outputting rotary wing aircraft member data correlating to the relative rotation of the rotating rotary wing hub member rotating relative to the nonrotating body. The aircraft vibration control system includes a vibration sensor, the nonrotating body vibration sensor outputting at least first nonrotating body vibration sensor data correlating to vibrations. The aircraft vibration control system includes at least a first nonrotating body force generator and a second nonrotating body force generator, the at least first nonrotating body force generator fixedly coupled with the nonrotating body adjacent the gear box transmission. The first nonrotating body circular force generator has a first circular force generator rotating masses axis, the at least first nonrotating body circular force generator fixedly coupled with the nonrotating body adjacent the gear box transmission with the first circular force generator rotating masses axis perpendicular to the rotating hub center Z axis of rotation 28. The second nonrotating body circular force generator having a second circular force generator rotating masses axis, the at least second nonrotating body circular force generator fixedly coupled with the nonrotating body adjacent the gear box transmission with the second circular force generator rotating masses axis perpendicular to the rotating hub center Z axis of rotation 28. The first circular force generator rotating masses axis is nonparallel to the second circular force generator rotating masses axis. The aircraft vibration control system includes a distributed force generation data communications network link, the distributed force generation data communications network link linking together at least the first and second nonrotating body force generators and the rotating hub mounted vibration control system wherein the rotating hub mounted vibration control system and the first nonrotating body force generator communicate through the distributed force generation data communications network. The first nonrotating body circular force generator is controlled to produce a first nonrotating body circular force generator rotating force centered about the first nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body, and the second nonrotating body circular force generator controlled to produce a second nonrotating body circular force generator rotating force centered about the second nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body. The rotating hub mounted vibration control system includes at least a first hub mounted vibration control system rotor with a first imbalance mass concentration, the first hub mounted vibration control system rotor driven to rotate at a first rotation speed greater than an operational rotation frequency of the rotating rotary wing hub, and at least a second hub mounted vibration control system rotor with a second imbalance mass concentration, the second hub mounted vibration control system rotor driven to rotate at the first rotation speed greater than the operational rotation frequency of the rotating rotary wing hub, wherein the vibration sensed by the at least first nonrotating body vibration sensor is reduced. The circular force generator rotating masses axis are perpendicular to the rotating hub center Z axis of rotation 28 with the masses axis not intersecting the Z axis, with force planes in a YZ or XZ plane, preferably force planes perpendicular to the XY HMVS plane. The first and second circular force generator rotating masses axis are non-parallel to each other, with the axis intersecting each other. The third nonrotating body circular force generator having a third circular force generator rotating masses axis, the third nonrotating body circular force generator fixedly coupled with the nonrotating body proximate the gear box transmission with the third nonrotating body circular force generator rotating masses axis perpendicular to the rotating hub center Z axis of rotation 28, the third nonrotating body circular force generator controlled to produce a third nonrotating body circular force generator rotating force centered about the third nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced.

The method of controlling aircraft vibrations in a rotary wing aircraft having a nonrotating aerostructure body and a rotating rotary wing hub driven to rotate about a rotating hub center Z axis of rotation 28 by an engine through a main gear box transmission includes providing a rotating hub mounted vibration control system, the rotating hub mounted vibration control system mounted to the rotating rotary wing hub with the rotating hub mounted vibration control system rotating about the rotating hub center Z axis of rotation 28 with the rotating rotary wing hub. The rotating hub mounted vibration control system includes a first hub mounted vibration control system rotor with a first imbalance mass concentration, and a second hub mounted vibration control system rotor with a second imbalance mass concentration. The method includes providing a first nonrotating body force generator, the first nonrotating body force generator fixedly coupled with the nonrotating body adjacent the gear box transmission. The first nonrotating body circular force generator having a first circular force generator rotating masses axis, with the first circular force generator rotating masses axis perpendicular to the rotating hub center Z axis of rotation 28. The method includes providing a second nonrotating body circular force generator having a second circular force generator rotating masses axis, the second nonrotating body circular force generator fixedly coupled with the nonrotating body adjacent the gear box transmission with the second circular force generator rotating masses axis perpendicular to the rotating hub center Z axis of rotation 28, with the first circular force generator rotating masses axis nonparallel to the second circular force generator rotating masses axis. The method includes controlling the first nonrotating vehicle body circular force generator to produce a rotating force with a controllable rotating force magnitude and a controllable rotating force phase. The method includes controlling the second nonrotating vehicle body circular force generator to produce a rotating force with a controllable rotating force magnitude and a controllable rotating force phase. The method includes driving the first hub mounted vibration control system rotor and the second hub mounted vibration control system rotor to control the vibrations. The method includes providing a third nonrotating body circular force generator having a third circular force generator rotating masses axis, the third nonrotating body circular force generator fixedly coupled with the nonrotating body proximate the gear box transmission with the third nonrotating body circular force generator rotating masses axis perpendicular to the rotating hub center Z axis of rotation 28, and controlling the third nonrotating body circular force generator to produce a third nonrotating body circular force generator rotating force centered about the third nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to a rotary wing aircraft member sensor data correlating to the relative rotation of the rotating rotary wing hub rotating relative to the nonrotating body wherein a vibration sensed by an at least first nonrotating body vibration sensor is reduced.

The invention includes a method of controlling helicopter vibrations. The method includes providing a nonrotating helicopter body below a rotating helicopter rotor member. The method includes providing a vibration control system controller. The method includes providing a rotating helicopter rotor member sensor for inputting rotating member data correlating to a relative rotation of the rotating member rotating relative to the nonrotating body into the vibration control system controller. The method includes providing at least a first nonrotating body vibration sensor, the at least first nonrotating vehicle body vibration sensor inputting at least first nonrotating body vibration sensor data correlating to vehicle vibrations into the vibration control system controller. The method includes providing at least a first nonrotating vehicle body circular force generator. The method includes coupling the at least first nonrotating vehicle body circular force generator to the nonrotating helicopter body. The method includes controlling with the controller the coupled at least first nonrotating vehicle body circular force generator to produce a rotating force upon the nonrotating helicopter body with a controllable rotating force magnitude and a controllable rotating force phase, the controllable rotating force magnitude controlled from a minimal force magnitude up to a maximum force magnitude, and with the controllable rotating force phase controlled in reference to the rotating member sensor data correlating to the relative rotation of the rotating member rotating relative to the nonrotating body with the vibration sensed by the at least first nonrotating vehicle body vibration sensor reduced by the controller.

The method of controlling helicopter vibrations includes providing a nonrotating helicopter body 524 below a rotating helicopter rotor member 522, the helicopter rotating rotary wing hub. The method includes providing a vehicle vibration control system controller 411, preferably with control system subsystems communicating within the vibration control system 409. The method includes providing a vehicle rotating helicopter rotor member sensor 552, for inputting vehicle rotating member data correlating to a relative rotation of the vehicle rotating member rotating relative to the nonrotating vehicle body (e.g., a tach input) into the vibration control system controller 411. The method includes providing at least a first nonrotating body vibration sensor 554, the at least first nonrotating vehicle body vibration sensor inputting at least first nonrotating body vibration sensor data correlating to vibrations into the vibration control system controller 411. The method includes providing at least a first nonrotating vehicle body circular force generator 530. The method includes coupling the at least first nonrotating vehicle body circular force generator 530 to the nonrotating helicopter body 524. The method includes controlling with the controller 411 the coupled at least first nonrotating vehicle body circular force generator 530 to produce a rotating force upon the nonrotating helicopter body 524 with a controllable rotating force magnitude and a controllable rotating force phase, the controllable rotating force magnitude controlled from a minimal force magnitude up to a maximum force magnitude (zero magnitude force when masses 180° separation opposed position and maximum force magnitude when masses 0° separation), and with the controllable rotating force phase controlled in reference to the rotating member sensor data correlating to the relative rotation of the rotating member 522 rotating relative to the nonrotating body 524 with the vibration sensed by the at least first nonrotating vehicle body vibration sensor 554 reduced by the controller 411.

The method includes providing then nonrotating vehicle body vibration sensors 554 and m nonrotating vehicle body circular force generators 530 with n>m.

The method includes the controlling of the rotating force to rotate at a harmonic of the rotating machine member rotating speed, with the system/method producing circular forces while avoiding the calculation and generation of linear forces.

The method includes generating a rotating reference signal from the vehicle rotating machine member data correlating to the relative rotation of the vehicle rotating machine member 522 rotating relative to the nonrotating vehicle body 524.

The method includes calculating, with the controller, in reference to a rotating reference signal, the rotating force with a real part $\alpha$ and an imaginary part $\beta$. The method avoids and inhibits calculating linear forces for controlling the vibrations, preferably with the vibe control subsystem calculating real parts $\alpha_m$ and imaginary parts $\beta_m$ in generating circular force command signals which command/describe desired rotating force vectors, such circular force command signals $\alpha_m \beta_m$ are sent to the rotor phase compute subsystem which in turn computes mass phase signals, which are sent to motor control/motor drive subsystem which generates motor drive signals that drive the masses around their circular paths, motor drive signals that drive the masses to generate the circular forces with the motor drive signals driving the motors 538, 540 of the circular force generator 530.

The method includes providing the at least first nonrotating vehicle body circular force generator 530 with at least a first rotating mass (mass$_{1\_1}$) 534 controllably driven about a first rotating mass axis 534' with a first rotating mass controllable rotating imbalance phase $\Phi_{1\_1}$ and at least a second corotating mass (mass$_{1\_2}$) 536 controllably driven about a second rotating mass axis 536' with a second rotating mass controllable rotating imbalance phase $\Phi_{1\_2}$.

The method includes providing then nonrotating vehicle body vibration sensors 554 and m nonrotating vehicle body circular force generators 530 with n>m, with the vehicle vibration control system controller 411 generating a rotating reference signal from the vehicle rotating machine member data correlating to the relative rotation of the vehicle rotating machine member rotating relative to the nonrotating vehicle body. The first nonrotating vehicle body circular force generator 530 including first rotating mass ($mass_{1\_1}$) 534 controllably driven about a first rotating mass axis 534' with a first rotating mass controllable rotating imbalance phase $\Phi_{1\_1}$ and a second corotating mass ($mass_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal. The $m^{th}$ nonrotating vehicle body circular force generator 530 including a first rotating mass ($mass_{m\_1}$) 534 controllably driven about a first rotating mass axis 534' with a first rotating mass controllable rotating imbalance phase $\Phi_{m\_1}$ and a second corotating mass ($mass_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal.

The method includes providing the first nonrotating vehicle body circular force generator 530 which includes the first rotating mass ($mass_{1\_1}$) 534 with a first rotating mass controllable rotating imbalance phase $\Phi_{1\_1}$ and the second corotating mass ($mass_{1\_2}$) 536 with a second rotating mass controllable rotating imbalance phase $\Phi_{1\_2}$. The first rotating mass ($mass_{1\_1}$) 534 is driven with the first motor 538 and the second corotating mass ($mass_{1\_2}$) 536 is driven with the second motor 540.

The circular force generator 530 which includes the first rotating mass ($mass_{1\_1}$) 534 with a first rotating mass controllable rotating imbalance phase $\Phi_{1\_1}$ and the second corotating mass ($mass_{1\_2}$) 536 with a second rotating mass controllable rotating imbalance phase $\Phi_{1\_2}$, with a detent 576 linking between the first rotating mass ($mass_{m\_1}$) and the second corotating mass ($mass_{m\_2}$), and a motor for driving the first rotating mass ($mass_{m\_1}$), wherein the first rotating mass ($mass_{m\_1}$) comprises a master rotating mass ($mass_{m\_1}$) with a master rotating mass controllable rotating imbalance phase $\Phi_{1\_1}$, and the second corotating mass ($mass_{m\_2}$) comprises a slave corotating mass ($mass_{m\_2}$) with a slave rotating mass controllable rotating imbalance phase $\Phi_{1\_2}$ with the detent controlling the slave rotating mass controllable rotating imbalance phase $\Phi_{1\_2}$ relative to the master rotating mass controllable rotating imbalance phase $\Phi_{1\_1}$.

The method includes providing the n nonrotating vehicle body vibration sensors 554 and m nonrotating vehicle body circular force generators 530, with m $\geq$ 2 and n>m, with the vehicle vibration control system controller generating a rotating reference signal from the vehicle rotating machine member data correlating to the relative rotation of the vehicle rotating machine member rotating relative to the nonrotating vehicle body, with the first nonrotating vehicle body circular force generator 530 including a first rotating mass ($mass_{1\_1}$) 534 controllably driven about a first circular force generator axis 530' with a first rotating mass controllable rotating imbalance phase $\Phi_{1\_1}$ and a second corotating mass ($mass_{1\_2}$) 536 controllably driven about the first circular force generator axis 530' with a second rotating mass controllable rotating imbalance phase $\Phi_{1\_2}$, with the imbalance phase $\Phi_{1\_1}$ and the imbalance phase $\Phi_{1\_2}$ controlled in reference to the rotating reference signal. A second nonrotating vehicle body circular force generator 530 is provided including a first rotating mass ($mass_{2\_1}$) 534 controllably driven about a second circular force generator axis 530" with a first rotating mass controllable rotating imbalance phase $\Phi_{2\_1}$ and a second corotating mass ($mass_{2\_2}$) 536 controllably driven about the second circular force generator axis 530" with a second rotating mass controllable rotating imbalance phase $\Phi_{2\_2}$, with the imbalance phase $\Phi_{2\_1}$ and the imbalance phase $\Phi_{2\_2}$ controlled in reference to the rotating reference signal, with the second nonrotating vehicle body circular force generator 530 oriented relative to the first nonrotating vehicle body circular force generator 530 wherein the second circular force generator axis 530" is nonparallel with the first circular force generator axis 530'. The axes are oriented orthogonally. When m $\geq$ 3, a third nonrotating vehicle body circular force generator 530 is provided including a first rotating mass ($mass_{3\_1}$) 534 controllably driven about a third circular force generator axis 530'" with a first rotating mass controllable rotating imbalance phase $\Phi_{3\_1}$ and a second corotating mass ($mass_{3\_2}$) 536 controllably driven about the third circular force generator axis 530'" with a second rotating mass controllable rotating imbalance phase $\Phi_{3\_2}$, with the imbalance phase $\Phi_{3\_1}$ and the imbalance phase $\Phi_{3\_2}$ controlled in reference to the rotating reference signal, the third circular force generator axis oriented relative to the second circular force generator axis and the first circular force generator axis.

The method includes mounting the circular force generators proximate the vehicle ceiling 544 and the floor 546. The method mounts the nonrotating vehicle body circular force generators 530 proximate the vehicle ceiling and floor. The vehicle nonrotating vehicle body 524 includes a vehicle ceiling 544 and a distal vehicle floor 546, the distal vehicle floor below 546 the vehicle ceiling 544 under normal parking, use and flight of the vehicle in the presence of gravity. As claimed, n nonrotating vehicle body vibration sensors 554 and m nonrotating vehicle body circular force generators 530 are provided with n>m. The controller 411 calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass ($mass_{1\_1}$) 534 controllably driven about a first rotating mass axis 534' with a first rotating mass controllable rotating imbalance phase $\Phi_{1\_1}$ and a second corotating mass ($mass_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 is mounted to the vehicle body 524 proximate the vehicle ceiling 544. The vehicle $m^{th}$ nonrotating vehicle body circular force generator 530 including a first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal, the $m^{th}$ nonrotating vehicle body circular force generator 530 mounted to the vehicle body 524 proximate the vehicle floor 546. A plurality of circular force generators 530 are mounted to the vehicle body frame 524 proximate the floor 546, and under the floor 546, and proximate the vehicle nose, and proximate the vehicle tail. A plurality of circular force generators 530 are mounted to the vehicle body frame 524 proximate the ceiling 544, above the ceiling 544, proximate the vehicle tail, and/or to a vehicle tailcone frame.

The method includes controlling vehicle transmission 526 vibrations. The vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, method including mounting the first nonrotating vehicle body circular force generator 530 to the vehicle transmission 526. A plurality of nonrotating vehicle body circular force generators 530 are mounted to the transmission 526, and the transmission is above the floor 546 and ceiling 544. The nonrotating vehicle body circular force generators 530 are mounted to the vehicle transmissions 526, with the circular force generator axis 530' oriented relative to the rotation axis of the rotating machine member 522, with the circular force generator axis 530' oriented parallel with the rotating machine member rotor hub axis of rotation.

The rotary wing aircraft 520 includes a gear box transmission 526 for transmitting rotational power to the rotating machine member 522. Vehicle engine energy force is transmitted through the transmission 526 to the vehicle motive force propeller helicopter rotor to move it and in turn move the vehicle, with the transmission connected to rotor and transmitting rotating force to the rotor so the rotor turns at the relative rotation rate to the vehicle nonrotating body. The vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 mounted proximate to the vehicle transmission 526. A plurality of nonrotating vehicle body circular force generators 530 are mounted adjacent to the transmission 526, and the transmission is above the floor 546 and ceiling 544. FIG. 8 illustrates examples with nonrotating vehicle body circular force generators 530 mounted to the vehicle transmissions 526, with the circular force generator axis 530' oriented relative to the rotation axis of the rotating machine member 522. The circular force generator axis 530' are oriented non-parallel with the rotating machine member rotor hub axis of rotation 28. FIG. 8B-L illustrate examples with the circular force generator axis 530', 530", 530'", and 530"" are oriented non-parallel with the helicopter rotary wing member rotor hub axis of rotation 28.

The rotary wing aircraft has a nonrotating aerostructure body 524 and a rotating rotary wing hub 522 driven to rotate about a rotating hub center Z axis of rotation 28 by an engine through a main gear box transmission 526. The rotary wing aircraft includes a rotating hub mounted vibration control system 20, the rotating hub mounted vibration control system 20 mounted to the rotating rotary wing hub 522 with the rotating hub mounted vibration control system rotating with the rotating rotary wing hub, the rotating hub mounted vibration control system including a plurality of imbalance mass concentration rotors 38,44,38',44' driven to rotate about the rotating hub center Z axis of rotation 28. The rotary wing aircraft includes a rotary wing aircraft member sensor for outputting rotary wing aircraft member data correlating to the relative rotation of the rotating rotary wing hub member rotating relative to the nonrotating body. The rotary wing aircraft includes at least a first nonrotating vibration sensor, the at least first nonrotating vibration sensor outputting at least first nonrotating body vibration sensor data correlating to vibrations. The rotary wing aircraft includes a nonrotating body circular force generator 530 having a first circular force generator rotating masses axis 530', the at least first nonrotating body circular force generator 530 fixedly coupled with the nonrotating body 524 proximate the gear box transmission 526 with the first circular force generator rotating masses axis 530' perpendicular to the rotating hub center Z axis of rotation 28. The rotary wing aircraft includes at least a second nonrotating body circular force generator 530 having a second circular force generator rotating masses axis 530", the at least second nonrotating body circular force generator 530 fixedly coupled with the nonrotating body 524 proximate the gear box transmission 526 with the second circular force generator rotating masses axis 530" perpendicular to the rotating hub center Z axis of rotation 28.

The rotary wing aircraft includes a distributed force generation data communications network link, the distributed force generation data communications system network link linking together at least the first nonrotating body circular force generator 530, the second nonrotating body circular force generator 530, and the rotating hub mounted vibration control system 20 wherein the rotating hub mounted vibration control system and the nonrotating body circular force generators communicate force generation vibration control data through the distributed force generation data communications network, the first nonrotating body circular force generator controlled to produce a first nonrotating body circular force generator rotating force centered about the first nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first non-rotating body vibration sensor is reduced.

The circular force generator rotating masses axis 530', 530", 530''', and 530'''' are perpendicular to the rotating hub center Z axis of rotation 28 with the masses axis not intersecting the Z axis. The circular force generators generate a force plane oriented in a YZ or XZ plane, with the force plane oriented perpendicular to the XY plane of the rotating hub mounted vibration control system 20. The first and second circular force generator rotating masses axis 530' and 530" are non-parallel to each other, with their axis intersecting each other. The second nonrotating body circular force generator is controlled to produce a second nonrotating body circular force generator rotating force centered about the second nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced. The rotary wing aircraft includes a third nonrotating body circular force generator having a third circular force generator rotating masses axis 530''', the third nonrotating body circular force generator fixedly coupled with the nonrotating body proximate the gear box transmission with the third nonrotating body circular force generator rotating masses axis 530''' perpendicular to the rotating hub center Z axis of rotation 28. The third nonrotating body circular force generator is controlled to produce a third nonrotating body circular force generator rotating force centered about the third nonrotating body circular force generator rotating masses axis 530''' with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced. The rotating hub mounted vibration control system, the first nonrotating body circular force generator, second nonrotating body circular force generator, and the third nonrotating body circular force generator are controlled together to provide five degrees of freedom control, with the HMVS rotors rotating in XY planes, and the CFGs rotated in ZY and ZX planes normal to the XY planes. The rotating hub mounted vibration control system including a first rotating body vibration sensor, the rotating hub mounted vibration control system first rotating body vibration sensor outputting first rotating body vibration sensor data into the distributed force generation data communications network link. The aircraft includes a master controller connected to the distributed force generation data communications network link controls the rotating hub mounted vibration control system and the first nonrotating body circular force generator wherein vibrations sensed by the at least a first nonrotating body vibration sensor are minimized. The distributed force generation data communications network link is a serial communications network link. The rotating rotary wing hub has an operational rotation frequency and the rotating hub mounted vibration control system plurality of imbalance mass concentration rotors (38,44,38',44') include a first hub mounted vibration control system rotor with a first imbalance mass concentration, the first hub mounted vibration control system rotor driven to rotate at a first rotation speed greater than the operational rotation frequency of the rotating rotary wing hub, a second hub mounted vibration control system rotor with a second imbalance mass concentration, the second hub mounted vibration control system rotor driven to rotate at the first rotation speed greater than the operational rotation frequency of the rotating rotary wing hub, a third hub mounted vibration control system rotor with a third imbalance mass concentration, the third hub mounted vibration control system rotor driven to rotate at a second rotation speed greater than the operational rotation frequency of the rotating rotary wing hub, a fourth hub mounted vibration control system rotor with a fourth imbalance mass concentration, the fourth hub mounted vibration control system rotor driven to rotate at the second rotation speed greater than the operational rotation frequency of the rotating rotary wing hub. The rotating hub mounted vibration control system plurality of imbalance mass concentration rotors (38,44,38',44') include a first hub mounted vibration control system rotor with a first imbalance mass concentration, the first hub mounted vibration control system rotor driven to rotate at a first rotor speed greater than an operational rotation frequency of the rotating rotary wing hub, a second hub mounted vibration control system rotor with a second imbalance mass concentration, the second hub mounted vibration control system rotor driven to rotate at a second rotor speed greater than the operational rotation frequency of the rotating rotary wing hub. The first circular force generator includes a first rotating mass ($mass_{1\_1}$) controllably driven about the first circular force generator rotating masses axis with a first rotating mass controllable rotating imbalance phase $\Phi_{1\_1}$ and a second corotating mass ($mass_{1\_2}$) controllably driven about the first circular force generator rotating masses axis with a second rotating mass controllable rotating imbalance phase $\Phi_{1\_2}$, and the second circular force generator including a first rotating mass ($mass_{2\_1}$) controllably driven about the second circular force generator rotating masses axis with a first rotating mass controllable rotating imbalance phase $\Phi_{2\_1}$ and a second corotating mass ($mass_{2\_2}$) controllably driven about the second circular force generator rotating masses axis with a second rotating mass controllable rotating imbalance phase $\Phi_{2\_2}$, the second circular force generator oriented relative to the first circular force generator wherein the second circular force generator rotating masses axis is nonparallel with the first circular force generator rotating masses axis.

The aircraft vibration control system is for an aircraft vehicle having a nonrotating aerostructure body and a rotating rotary wing hub driven to rotate about a rotating hub center Z axis of rotation 28 by an engine through a main gear box transmission. The aircraft vibration control system includes a rotating hub mounted vibration control system, the rotating hub mounted vibration control system mounted to the rotating rotary wing hub with the rotating hub mounted vibration control system rotating about the rotating hub center Z axis of rotation 28 with the rotating rotary wing hub. The aircraft vibration control system includes a rotary wing aircraft member sensor for outputting rotary wing aircraft member data correlating to the relative rotation of the rotating rotary wing hub member rotating relative to the nonrotating body. The aircraft vibration control system includes a vibration sensor, the nonrotating body vibration sensor outputting at least first nonrotating body vibration sensor data correlating to vibrations. The aircraft vibration control system includes at least a first nonrotating body force generator and a second nonrotating body force generator, the at least first nonrotating body force generator fixedly coupled with the nonrotating body adjacent the gear box transmission. The first nonrotating body circular force generator has a first circular force generator rotating masses axis, the at least first nonrotating body circular force generator fixedly coupled with the nonrotating body adjacent the gear box transmission with the first circular force generator rotating masses axis perpendicular to the rotating hub center Z axis of rotation 28. The second nonrotating body circular force generator having a second circular force generator rotating masses axis, the at least second nonrotating body circular force generator fixedly coupled with the nonrotating body adjacent the gear box transmission with the second circular force generator rotating masses axis perpendicular to the rotating hub center Z axis of rotation 28. The first circular force generator rotating masses axis is nonparallel to the second circular force generator rotating masses axis. The aircraft vibration control system includes a distributed force generation data communications network link, the distributed force generation data communications network link linking together at least the first and second nonrotating body force generators and the rotating hub mounted vibration control system wherein the rotating hub mounted vibration control system and the first nonrotating body force generator communicate through the distributed force generation data communications network. The first nonrotating body circular force generator is controlled to produce a first nonrotating body circular force generator rotating force centered about the first nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body, and the second nonrotating body circular force generator controlled to produce a second nonrotating body circular force generator rotating force centered about the second nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body. The rotating hub mounted vibration control system includes at least a first hub mounted vibration control system rotor with a first imbalance mass concentration, the first hub mounted vibration control system rotor driven to rotate at a first rotation speed greater than an operational rotation frequency of the rotating rotary wing hub, and at least a second hub mounted vibration control system rotor with a second imbalance mass concentration, the second hub mounted vibration control system rotor driven to rotate at the first rotation speed greater than the operational rotation frequency of the rotating rotary wing hub, wherein the vibration sensed by the at least first nonrotating body vibration sensor is reduced. The circular force generator rotating masses axis are perpendicular to the rotating hub center Z axis of rotation 28 with the masses axis not intersecting the Z axis, with force planes in a YZ or XZ plane, force planes perpendicular to the XY HMVS plane. The first and second circular force generator rotating masses axis are non-parallel to each other, with the axis intersecting each other. The third nonrotating body circular force generator having a third circular force generator rotating masses axis, the third nonrotating body circular force generator fixedly coupled with the nonrotating body proximate the gear box transmission with the third nonrotating body circular force generator rotating masses axis perpendicular to the rotating hub center Z axis of rotation 28, the third nonrotating body circular force generator controlled to produce a third nonrotating body circular force generator rotating force centered about the third nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced.

The method of controlling aircraft vibrations in a rotary wing aircraft having a nonrotating aerostructure body and a rotating rotary wing hub driven to rotate about a rotating hub center Z axis of rotation 28 by an engine through a main gear box transmission includes providing a rotating hub mounted vibration control system, the rotating hub mounted vibration control system mounted to the rotating rotary wing hub with the rotating hub mounted vibration control system rotating about the rotating hub center Z axis of rotation 28 with the rotating rotary wing hub. The rotating hub mounted vibration control system includes a first hub mounted vibration control system rotor with a first imbalance mass concentration, and a second hub mounted vibration control system rotor with a second imbalance mass concentration. The method includes providing a first nonrotating body force generator, the first nonrotating body force generator fixedly coupled with the nonrotating body adjacent the gear box transmission. The first nonrotating body circular force generator having a first circular force generator rotating masses axis, with the first circular force generator rotating masses axis perpendicular to the rotating hub center Z axis of rotation 28. The method includes providing a second nonrotating body circular force generator having a second circular force generator rotating masses axis, the second nonrotating body circular force generator fixedly coupled with the nonrotating body adjacent the gear box transmission with the second circular force generator rotating masses axis perpendicular to the rotating hub center Z axis of rotation 28, with the first circular force generator rotating masses axis nonparallel to the second circular force generator rotating masses axis. The method includes controlling the first nonrotating vehicle body circular force generator to produce a rotating force with a controllable rotating force magnitude and a controllable rotating force phase. The method includes controlling the second nonrotating vehicle body circular force generator to produce a rotating force with a controllable rotating force magnitude and a controllable rotating force phase. The method includes driving the first hub mounted vibration control system rotor and the second hub mounted vibration control system rotor to control the vibrations. The method includes providing a third nonrotating body circular force generator having a third circular force generator rotating masses axis, the third nonrotating body circular force generator fixedly coupled with the nonrotating body proximate the gear box transmission with the third nonrotating body circular force generator rotating masses axis perpendicular to the rotating hub center Z axis of rotation 28, and controlling the third nonrotating body circular force generator to produce a third nonrotating body circular force generator rotating force centered about the third nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to a rotary wing aircraft member sensor data correlating to the relative rotation of the rotating rotary wing hub rotating relative to the nonrotating body wherein a vibration sensed by an at least first nonrotating body vibration sensor is reduced.

The invention includes a method of controlling vibrations. The method includes providing a nonrotating structure body having a rotating machine member. The method includes providing a vibration control system controller. The method includes providing a rotating machine member sensor, for inputting rotating member data correlating to a relative rotation of the rotating member rotating relative to the nonrotating body into the vibration control system controller. The method includes providing at least a first nonrotating body vibration sensor, the at least first nonrotating body vibration sensor inputting at least first nonrotating body vibration sensor data correlating to vibrations into the vibration control system controller. The method includes providing at least a first nonrotating body circular force generator. The method includes coupling the at least first nonrotating vehicle body circular force generator to the nonrotating structure body. The method includes controlling with the controller the coupled at least first nonrotating body circular force generator to produce a rotating force with a controllable rotating force magnitude and a controllable rotating force phase, the controllable rotating force magnitude controlled from a minimal force magnitude up to a maximum force magnitude, and with the controllable rotating force phase controlled relative to the rotating member sensor data correlating to the relative rotation of the rotating member rotating relative to the nonrotating body with the vibration sensed by the at least first nonrotating vehicle body vibration sensor reduced by the controller.

The method of controlling vibrations includes providing nonrotating structure body 524 having a rotating machine member 522. The method includes providing vibration control system controller 411 with a vibration control system processor, a computer with inputs and outputs, to control the control system with communicating subsystems. The method includes providing the rotating machine member sensor 552 for inputting rotating member data correlating to a relative rotation of the vehicle rotating member rotating relative to the nonrotating vehicle body (e.g., a tach input) into the vibration control system controller 411. The method includes providing the nonrotating body vibration sensors 554, the first nonrotating body vibration sensors 554 inputting at vibration sensor data correlating to vehicle vibrations into the vehicle vibration control system controller 411. The method includes providing at least a first nonrotating vehicle body circular force generator 530. The method includes coupling the nonrotating vehicle body circular force generator 530 to the nonrotating structure body 524. The method includes controlling with the controller 411 the coupled at least first nonrotating body circular force generators 530 to produce rotating forces with controllable rotating force magnitude and controllable rotating force phase, the controllable rotating force magnitude controlled from a minimal force magnitude up to a maximum force magnitude (0 magnitude force when masses 180° separation opposed position, maximum force magnitude when masses 0° separation), and with the controllable rotating force phase controlled relative to the rotating member sensor data correlating to the relative rotation of the rotating member rotating relative to the nonrotating body (tach input) with the vibration sensed by the at least first nonrotating vehicle body vibration sensor reduced by the controller 411.

The method includes providing then nonrotating vehicle body vibration sensors and m nonrotating vehicle body circular force generators wherein n>m.

The method includes controlling the rotating force to rotate at a harmonic of the rotating machine member rotating speed.

The method includes generating a rotating reference signal from the vehicle rotating machine member data correlating to the relative rotation of the vehicle rotating machine member rotating relative to the nonrotating vehicle body. The method includes calculating in reference to a rotating reference signal the rotating force with a real part $\alpha$ and an imaginary part $\beta$. The method avoids and inhibits calculating linear forces for controlling vibrations, with vibe control subsystem, within the controller 411, calculating real parts $\alpha_m$ and imaginary parts $\beta_m$ in generating circular force command signals which command/describe desired rotating force vectors, such circular force command signals $\alpha_m$ $\beta_m$ are sent to the rotor phase compute subsystem which in turn computes mass phase signals, which are sent to motor control/motor drive subsystem which generates motor drive signals that drive the masses around their circular paths, motor drive signals that drive the motors 538, 540 that drive the masses 534, 536 to generate the circular forces.

Providing the at least first nonrotating vehicle body circular force generators 530 includes providing the at least first rotating mass (mass$_{1\_1}$) 534 controllably driven about a first rotating mass axis 534' with a first rotating mass controllable rotating imbalance phase $\Phi_{1\_1}$ and the at least second corotating mass (mass$_{1\_2}$) 536 controllably driven about second rotating mass axis 536' with a second rotating mass controllable rotating imbalance phase $\Phi_{1\_2}$.

As claimed, n nonrotating vehicle body vibration sensors 554 and m nonrotating vehicle body circular force generators 530 with n>m are provided, the first nonrotating vehicle body circular force generator 530 including first rotating mass (mass$_{1\_1}$) 534 controllably driven about a first rotating mass axis 534' with a first rotating mass controllable rotating imbalance phase $\Phi_{1\_1}$ and second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to a rotating reference signal, and the m$^{th}$ nonrotating vehicle body circular force generator 530 including first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal.

The method includes providing nonrotating vehicle body circular force generators 530 with the first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$. The method includes providing the motor 538 with the first rotating mass (mass$_{1\_1}$) 534 driven with the first motor 538 and providing the second motor 540 with the second corotating mass (mass$_{1\_2}$) 536 driven with the second motor 540.

The method includes providing nonrotating vehicle body circular force generators 530 with the first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$ with a detent 576 linking between the first rotating mass (mass$_{m\_1}$) and the second corotating mass (mass$_{m\_2}$), and a motor for driving the first rotating mass (mass$_{m\_1}$), wherein the first rotating mass (mass$_{m\_1}$) comprises a master rotating mass (mass$_{m\_1}$) with a master rotating mass controllable rotating imbalance phase $\Phi_{1\_1}$, and the second corotating mass (mass$_{m\_2}$) comprises a slave corotating mass (mass$_{m\_2}$) with a slave rotating mass controllable rotating imbalance phase $\Phi_{1\_2}$ with the detent controlling the slave rotating mass controllable rotating imbalance phase $\Phi_{1\_2}$ relative to the master rotating mass controllable rotating imbalance phase $\Phi_{1\_1}$ with the one motor driving both, wherein the detents are magnetically detented.

The method includes providing the n nonrotating vehicle body vibration sensors 554 and m nonrotating vehicle body circular force generators 530, with m $\geq$ 2 and n>m, with the vehicle vibration control system controller generating a rotating reference signal from the vehicle rotating machine member data correlating to the relative rotation of the vehicle rotating machine member rotating relative to the nonrotating vehicle body, with the first nonrotating vehicle body circular force generator 530 including a first rotating mass (mass$_{1\_1}$) 534 controllably driven about a first circular force generator axis 530' with a first rotating mass controllable rotating imbalance phase $\Phi_{1\_1}$ and a second corotating mass (mass$_{1\_2}$) 536 controllably driven about the first circular force generator axis 530' with a second rotating mass controllable rotating imbalance phase $\Phi_{1\_2}$, with the imbalance phase $\Phi_{1\_1}$ and the imbalance phase $\Phi_{1\_2}$ controlled in reference to the rotating reference signal. A second nonrotating vehicle body circular force generator 530 is provided including a first rotating mass ($mass_{2\_1}$) 534 controllably driven about a second circular force generator axis 530" with a first rotating mass controllable rotating imbalance phase $\Phi_{2\_1}$ and a second corotating mass ($mass_{2\_2}$) 536 controllably driven about the second circular force generator axis 530" with a second rotating mass controllable rotating imbalance phase $\Phi_{2\_2}$, with the imbalance phase $\Phi_{2\_1}$ and the imbalance phase $\Phi_{2\_2}$ controlled in reference to the rotating reference signal, with the second nonrotating vehicle body circular force generator 530 oriented relative to the first nonrotating vehicle body circular force generator 530 wherein the second circular force generator axis 530" is nonparallel with the first circular force generator axis 530'. The axes are oriented orthogonally. When m ≥ 3, a third nonrotating vehicle body circular force generator 530 is provided including a first rotating mass ($mass_{3\_1}$) 534 controllably driven about a third circular force generator axis 530'" with a first rotating mass controllable rotating imbalance phase $\Phi_{3\_1}$ and a second corotating mass ($mass_{3\_2}$) 536 controllably driven about the third circular force generator axis 530'" with a second rotating mass controllable rotating imbalance phase $\Phi_{3\_2}$, with the imbalance phase $\Phi_{3\_1}$ and the imbalance phase $\Phi_{3\_2}$ controlled in reference to the rotating reference signal, the third circular force generator axis oriented relative to the second circular force generator axis and the first circular force generator axis.

The method includes mounting the circular force generators proximate the vehicle ceiling 544 and the floor 546. The method mounts the nonrotating vehicle body circular force generators 530 proximate the vehicle ceiling and floor. The vehicle nonrotating vehicle body 524 includes a vehicle ceiling 544 and a distal vehicle floor 546, the distal vehicle floor below 546 the vehicle ceiling 544 under normal parking, use and flight of the vehicle in the presence of gravity. As illustrated, n nonrotating vehicle body vibration sensors 554 and m nonrotating vehicle body circular force generators 530 are provided with n>m. The controller 411 calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass ($mass_{1\_1}$) 534 controllably driven about a first rotating mass axis 534' with a first rotating mass controllable rotating imbalance phase $\Phi_{1\_1}$ and a second corotating mass ($mass_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 is mounted to the vehicle body 524 proximate the vehicle ceiling 544. The vehicle m$^{th}$ nonrotating vehicle body circular force generator 530 including a first rotating mass ($mass_{m\_1}$) 534 controllably driven about a first rotating mass axis 534' with a first rotating mass controllable rotating imbalance phase $\Phi_{m\_1}$ and a second corotating mass ($mass_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal, the m$^{th}$ nonrotating vehicle body circular force generator 530 mounted to the vehicle body 524 proximate the vehicle floor 546. A plurality of circular force generators 530 are mounted to the vehicle body frame 524 proximate the floor 546, and under the floor 546, and proximate the vehicle nose, and proximate the vehicle tail. A plurality of circular force generators 530 are mounted to the vehicle body frame 524 proximate the ceiling 544, above the ceiling 544, proximate the vehicle tail, and/or to a vehicle tailcone frame.

The method includes controlling vehicle transmission 526 vibrations. The vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass ($mass_{1\_1}$) 534 controllably driven about a first rotating mass axis 534' with a first rotating mass controllable rotating imbalance phase $\Phi_{1\_1}$ and a second corotating mass ($mass_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, method including mounting the first nonrotating vehicle body circular force generator 530 to the vehicle transmission 526. A plurality of nonrotating vehicle body circular force generators 530 are mounted to the transmission 526, and the transmission is above the floor 546 and ceiling 544. The nonrotating vehicle body circular force generators 530 are mounted to the vehicle transmissions 526, with the circular force generator axis 530' oriented relative to the rotation axis of the rotating machine member 522.

The rotary wing aircraft 520 includes a gear box transmission 526 for transmitting rotational power to the rotating machine member 522. Vehicle engine energy force is transmitted through the transmission 526 to the vehicle motive force propeller helicopter rotor to move it and in turn move the vehicle, with the transmission connected to rotor and transmitting rotating force to the rotor so the rotor turns at the relative rotation rate to the vehicle nonrotating body. The vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass ($mass_{1\_1}$) 534 controllably driven about a first rotating mass axis 534' with a first rotating mass controllable rotating imbalance phase $\Phi_{1\_1}$ and a second corotating mass ($mass_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 mounted proximate to the vehicle transmission 526. A plurality of nonrotating vehicle body circular force generators 530 are mounted adjacent to the transmission 526, and the transmission is above the floor 546 and ceiling 544. FIG. 8 illustrates examples with nonrotating vehicle body circular force generators 530 mounted to the vehicle transmissions 526, with the circular force generator axis 530' oriented relative to the rotation axis of the rotating machine member 522. The circular force generator axis 530' are oriented non-parallel with the rotating machine member rotor hub axis of rotation 28. FIG. 8B-L illustrate examples with the circular force generator axis 530', 530", 530"', and 530"" are oriented non-parallel with the helicopter rotary wing member rotor hub axis of rotation 28.

The rotary wing aircraft has a nonrotating aerostructure body 524 and a rotating rotary wing hub 522 driven to rotate about a rotating hub center Z axis of rotation 28 by an engine through a main gear box transmission 526. The rotary wing aircraft includes a rotating hub mounted vibration control system 20, the rotating hub mounted vibration control system 20 mounted to the rotating rotary wing hub 522 with the rotating hub mounted vibration control system rotating with the rotating rotary wing hub, the rotating hub mounted vibration control system including a plurality of imbalance mass concentration rotors 38,44,38',44' driven to rotate about the rotating hub center Z axis of rotation 28. The rotary wing aircraft includes a rotary wing aircraft member sensor for outputting rotary wing aircraft member data correlating to the relative rotation of the rotating rotary wing hub member rotating relative to the nonrotating body. The rotary wing aircraft includes at least a first nonrotating vibration sensor, the at least first nonrotating vibration sensor outputting at least first nonrotating body vibration sensor data correlating to vibrations. The rotary wing aircraft includes a nonrotating body circular force generator 530 having a first circular force generator rotating masses axis 530', the at least first nonrotating body circular force generator 530 fixedly coupled with the nonrotating body 524 proximate the gear box transmission 526 with the first circular force generator rotating masses axis 530' perpendicular to the rotating hub center Z axis of rotation 28. The rotary wing aircraft includes at least a second nonrotating body circular force generator 530 having a second circular force generator rotating masses axis 530", the at least second nonrotating body circular force generator 530 fixedly coupled with the nonrotating body 524 proximate the gear box transmission 526 with the second circular force generator rotating masses axis 530" perpendicular to the rotating hub center Z axis of rotation 28. The rotary wing aircraft includes a distributed force generation data communications network link, the distributed force generation data communications system network link linking together at least the first nonrotating body circular force generator 530, the second nonrotating body circular force generator 530, and the rotating hub mounted vibration control system 20 wherein the rotating hub mounted vibration control system and the nonrotating body circular force generators communicate force generation vibration control data through the distributed force generation data communications network, the first nonrotating body circular force generator controlled to produce a first nonrotating body circular force generator rotating force centered about the first nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first non-rotating body vibration sensor is reduced.

The circular force generator rotating masses axis 530', 530", 530"', and 530"" are perpendicular to the rotating hub center Z axis of rotation 28 with the masses axis not intersecting the Z axis. The circular force generators generate a force plane oriented in a YZ or XZ plane, with the force plane oriented perpendicular to the XY plane of the rotating hub mounted vibration control system 20. The first and second circular force generator rotating masses axis 530' and 530" are non-parallel to each other, with their axis intersecting each other. The second nonrotating body circular force generator is controlled to produce a second nonrotating body circular force generator rotating force centered about the second nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced. The rotary wing aircraft includes a third nonrotating body circular force generator having a third circular force generator rotating masses axis 530"', the third nonrotating body circular force generator fixedly coupled with the nonrotating body proximate the gear box transmission with the third nonrotating body circular force generator rotating masses axis 530"' perpendicular to the rotating hub center Z axis of rotation 28. The third nonrotating body circular force generator is controlled to produce a third nonrotating body circular force generator rotating force centered about the third nonrotating body circular force generator rotating masses axis 530"' with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced. The rotating hub mounted vibration control system, the first nonrotating body circular force generator, second nonrotating body circular force generator, and the third nonrotating body circular force generator are controlled together to provide five degrees of freedom control, with the HMVS rotors rotating in XY planes, and the CFGs rotated in ZY and ZX planes normal to the XY planes. The rotating hub mounted vibration control system including a first rotating body vibration sensor, the rotating hub mounted vibration control system first rotating body vibration sensor outputting first rotating body vibration sensor data into the distributed force generation data communications network link. The aircraft includes a master controller connected to the distributed force generation data communications network link controls the rotating hub mounted vibration control system and the first nonrotating body circular force generator wherein vibrations sensed by the at least a first nonrotating body vibration sensor are minimized. The distributed force generation data communications network link is a serial communications network link. The rotating rotary wing hub has an operational rotation frequency and the rotating hub mounted vibration control system plurality of imbalance mass concentration rotors (38,44,38',44') include a first hub mounted vibration control system rotor with a first imbalance mass concentration, the first hub mounted vibration control system rotor driven to rotate at a first rotation speed greater than the operational rotation frequency of the rotating rotary wing hub, a second hub mounted vibration control system rotor with a second imbalance mass concentration, the second hub mounted vibration control system rotor driven to rotate at the first rotation speed greater than the operational rotation frequency of the rotating rotary wing hub, a third hub mounted vibration control system rotor with a third imbalance mass concentration, the third hub mounted vibration control system rotor driven to rotate at a second rotation speed greater than the operational rotation frequency of the rotating rotary wing hub, a fourth hub mounted vibration control system rotor with a fourth imbalance mass concentration, the fourth hub mounted vibration control system rotor driven to rotate at the second rotation speed greater than the operational rotation frequency of the rotating rotary wing hub. The rotating hub mounted vibration control system plurality of imbalance mass concentration rotors (38,44,38',44') include a first hub mounted vibration control system rotor with a first imbalance mass concentration, the first hub mounted vibration control system rotor driven to rotate at a first rotor speed greater than an operational rotation frequency of the rotating rotary wing hub, a second hub mounted vibration control system rotor with a second imbalance mass concentration, the second hub mounted vibration control system rotor driven to rotate at a second rotor speed greater than the operational rotation frequency of the rotating rotary wing hub. The first circular force generator includes a first rotating mass ($mass_{1\_1}$) controllably driven about the first circular force generator rotating masses axis with a first rotating mass controllable rotating imbalance phase $\Phi_{1\_1}$ and a second corotating mass ($mass_{1\_2}$) controllably driven about the first circular force generator rotating masses axis with a second rotating mass controllable rotating imbalance phase $\Phi_{1\_2}$, and the second circular force generator including a first rotating mass ($mass_{2\_1}$) controllably driven about the second circular force generator rotating masses axis with a first rotating mass controllable rotating imbalance phase $\Phi_{2\_1}$ and a second corotating mass ($mass_{2\_2}$) controllably driven about the second circular force generator rotating masses axis with a second rotating mass controllable rotating imbalance phase $\Phi_{2\_2}$, the second circular force generator oriented relative to the first circular force generator wherein the second circular force generator rotating masses axis is nonparallel with the first circular force generator rotating masses axis.

The aircraft vibration control system is for an aircraft vehicle having a nonrotating aerostructure body and a rotating rotary wing hub driven to rotate about a rotating hub center Z axis of rotation 28 by an engine through a main gear box transmission. The aircraft vibration control system includes a rotating hub mounted vibration control system, the rotating hub mounted vibration control system mounted to the rotating rotary wing hub with the rotating hub mounted vibration control system rotating about the rotating hub center Z axis of rotation 28 with the rotating rotary wing hub. The aircraft vibration control system includes a rotary wing aircraft member sensor for outputting rotary wing aircraft member data correlating to the relative rotation of the rotating rotary wing hub member rotating relative to the nonrotating body. The aircraft vibration control system includes a vibration sensor, the nonrotating body vibration sensor outputting at least first nonrotating body vibration sensor data correlating to vibrations. The aircraft vibration control system includes at least a first nonrotating body force generator and a second nonrotating body force generator, the at least first nonrotating body force generator fixedly coupled with the nonrotating body adjacent the gear box transmission. The first nonrotating body circular force generator has a first circular force generator rotating masses axis, the at least first nonrotating body circular force generator fixedly coupled with the nonrotating body adjacent the gear box transmission with the first circular force generator rotating masses axis perpendicular to the rotating hub center Z axis of rotation 28. The second nonrotating body circular force generator having a second circular force generator rotating masses axis, the at least second nonrotating body circular force generator fixedly coupled with the nonrotating body adjacent the gear box transmission with the second circular force generator rotating masses axis perpendicular to the rotating hub center Z axis of rotation 28. The first circular force generator rotating masses axis is nonparallel to the second circular force generator rotating masses axis. The aircraft vibration control system includes a distributed force generation data communications network link, the distributed force generation data communications network link linking together at least the first and second nonrotating body force generators and the rotating hub mounted vibration control system wherein the rotating hub mounted vibration control system and the first nonrotating body force generator communicate through the distributed force generation data communications network. The first nonrotating body circular force generator is controlled to produce a first nonrotating body circular force generator rotating force centered about the first nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body, and the second nonrotating body circular force generator controlled to produce a second nonrotating body circular force generator rotating force centered about the second nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body. The rotating hub mounted vibration control system includes at least a first hub mounted vibration control system rotor with a first imbalance mass concentration, the first hub mounted vibration control system rotor driven to rotate at a first rotation speed greater than an operational rotation frequency of the rotating rotary wing hub, and at least a second hub mounted vibration control system rotor with a second imbalance mass concentration, the second hub mounted vibration control system rotor driven to rotate at the first rotation speed greater than the operational rotation frequency of the rotating rotary wing hub, wherein the vibration sensed by the at least first nonrotating body vibration sensor is reduced. The circular force generator rotating masses axis are perpendicular to the rotating hub center Z axis of rotation 28 with the masses axis not intersecting the Z axis, with force planes in a YZ or XZ plane, force planes perpendicular to the XY HMVS plane. The first and second circular force generator rotating masses axis are non-parallel to each other, with the axis intersecting each other. The third nonrotating body circular force generator having a third circular force generator rotating masses axis, the third nonrotating body circular force generator fixedly coupled with the nonrotating body proximate the gear box transmission with the third nonrotating body circular force generator rotating masses axis perpendicular to the rotating hub center Z axis of rotation 28, the third nonrotating body circular force generator controlled to produce a third nonrotating body circular force generator rotating force centered about the third nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hub rotating relative to the nonrotating body wherein the vibration sensed by the at least first nonrotating body vibration sensor is reduced.

The method of controlling aircraft vibrations in a rotary wing aircraft having a nonrotating aerostructure body and a rotating rotary wing hub driven to rotate about a rotating hub center Z axis of rotation 28 by an engine through a main gear box transmission includes providing a rotating hub mounted vibration control system, the rotating hub mounted vibration control system mounted to the rotating rotary wing hub with the rotating hub mounted vibration control system rotating about the rotating hub center Z axis of rotation 28 with the rotating rotary wing hub. The rotating hub mounted vibration control system includes a first hub mounted vibration control system rotor with a first imbalance mass concentration, and a second hub mounted vibration control system rotor with a second imbalance mass concentration. The method includes providing a first nonrotating body force generator, the first nonrotating body force generator fixedly coupled with the nonrotating body adjacent the gear box transmission. The first nonrotating body circular force generator having a first circular force generator rotating masses axis, with the first circular force generator rotating masses axis perpendicular to the rotating hub center Z axis of rotation 28. The method includes providing a second nonrotating body circular force generator having a second circular force generator rotating masses axis, the second nonrotating body circular force generator fixedly coupled with the nonrotating body adjacent the gear box transmission with the second circular force generator rotating masses axis perpendicular to the rotating hub center Z axis of rotation 28, with the first circular force generator rotating masses axis nonparallel to the second circular force generator rotating masses axis. The method includes controlling the first nonrotating vehicle body circular force generator to produce a rotating force with a controllable rotating force magnitude and a controllable rotating force phase. The method includes controlling the second nonrotating vehicle body circular force generator to produce a rotating force with a controllable rotating force magnitude and a controllable rotating force phase. The method includes driving the first hub mounted vibration control system rotor and the second hub mounted vibration control system rotor to control the vibrations. The method includes providing a third nonrotating body circular force generator having a third circular force generator rotating masses axis, the third nonrotating body circular force generator fixedly coupled with the nonrotating body proximate the gear box transmission with the third nonrotating body circular force generator rotating masses axis perpendicular to the rotating hub center Z axis of rotation 28, and controlling the third nonrotating body circular force generator to produce a third nonrotating body circular force generator rotating force centered about the third nonrotating body circular force generator rotating masses axis with a controllable rotating force magnitude and a controllable rotating force phase, the controllable rotating force magnitude controlled from a minimal force magnitude up to a maximum force magnitude, and with the controllable rotating force phase controlled in reference to a rotary wing aircraft member sensor data correlating to the relative rotation of the rotating rotary wing hub rotating relative to the nonrotating body wherein a vibration sensed by an at least first nonrotating body vibration sensor is reduced.

The invention includes a vibration control system for controlling vibration on a structure responsive to a vibration disturbance at a given frequency. The vibration control system includes a circular force generator for creating a controllable rotating force with controllable magnitude and phase. The vibration control system includes a vibration sensor for generating a vibration signal indicative of vibration of the structure. The vibration control system includes a controller that receives the vibration signal from the vibration sensor and commands the force generator to create said rotating force wherein such vibration of the structure sensed by the sensor is reduced. The vibration control system includes multiple circular force generators and multiple vibration sensors distributed throughout the structure, most with the quantity of vibration sensors greater than the quantity of circular force generators. The vibration control system includes a reference sensor for generating a persistent signal indicative of the vibration disturbance, wherein the reference sensor monitors a rotating machine member that is rotating relative to the structure and producing the vibrations. The controllable rotating force rotates at a given harmonic circular force generating frequency, a harmonic of a rotating machine member that is rotating relative to the structure and producing the vibrations. The controllable rotating force is determined and calculated as circular force described as a real and imaginary part $\alpha$ and $\beta$, with a circular force command signal generated with $\alpha$ and $\beta$. The controllable rotating force is generated with two corotating imbalance moving masses, which are controlled with imbalance phasing $\Phi_1$, $\Phi_2$ with the actual imbalance phasing $\Phi_1$, $\Phi_2$ realizing the commanded $\alpha$, $\beta$ circular force.

The vibration control system 409 for controlling vibration on structure 524 responsive to a vibration disturbance at a given frequency includes a force generator 530 for creating a controllable rotating force with controllable magnitude and phase, a vibration sensor 554 for generating a vibration signal indicative of vibration of the structure 524, a controller 411 that receives the vibration signal from the vibration sensor 554 and commands the force generator 530 to create a rotating force such that vibration is reduced. The system includes the plurality of force generator 530 and vibration sensor 554, with the number of sensors 554 greater than the number of force generators 530. The system includes a reference sensor for generating a persistent signal indicative of the vibration disturbance. The controllable rotating force rotates at the given frequency.

The invention include a vibration control system for controlling a vibration on a structure responsive to a vibration disturbance at a given frequency, said vibration control system including a circular force generator for creating a controllable rotating force with a controllable magnitude and controllable magnitude phase, said vibration control system including a vibration sensor for generating a vibration signal indicative of said vibration of said structure, said vibration control system including a controller that receives said vibration signal from said vibration sensor and commands said circular force generator to create said rotating force wherein such vibration of said structure sensed by said sensor is reduced. The vibration control system 409 includes a plurality of m circular force generators 530 and a plurality n vibration sensors 554 distributed throughout the structure 524, n>m. The vibration control system 409 includes a reference sensor 552 for generating a persistent signal indicative of said vibration disturbance, the reference sensor 552 monitors a rotating machine member 522 that is rotating relative to said structure 524 and producing said vibration. The controllable rotating force rotates at a given harmonic circular force generating frequency. The vibration control system 409 includes a reference sensor 552 which monitors a rotating machine member 522 that is rotating relative to the structure 524, and the given harmonic circular force generating frequency is a harmonic of a harmonic of the monitored rotating machine member 522. The controllable rotating force is determined and calculated with a real and an imaginary part ($\alpha$ and $\beta$). A circular force command signal is generated with a real and an imaginary part ($\alpha$ and $\beta$). The controllable rotating force is generated with two corotating imbalance moving masses 534 and 536.

The methods of controlling vibrations avoids creating linear forces, and instead creates rotating forces, with the methods and systems including the calculation of rotating forces and avoiding the calculation of linear forces. The active vibration control systems include a pair of co-rotating masses, imbalanced rotors that are individually motorized or motorized as a master/slave phased pair, a detented phase pair.

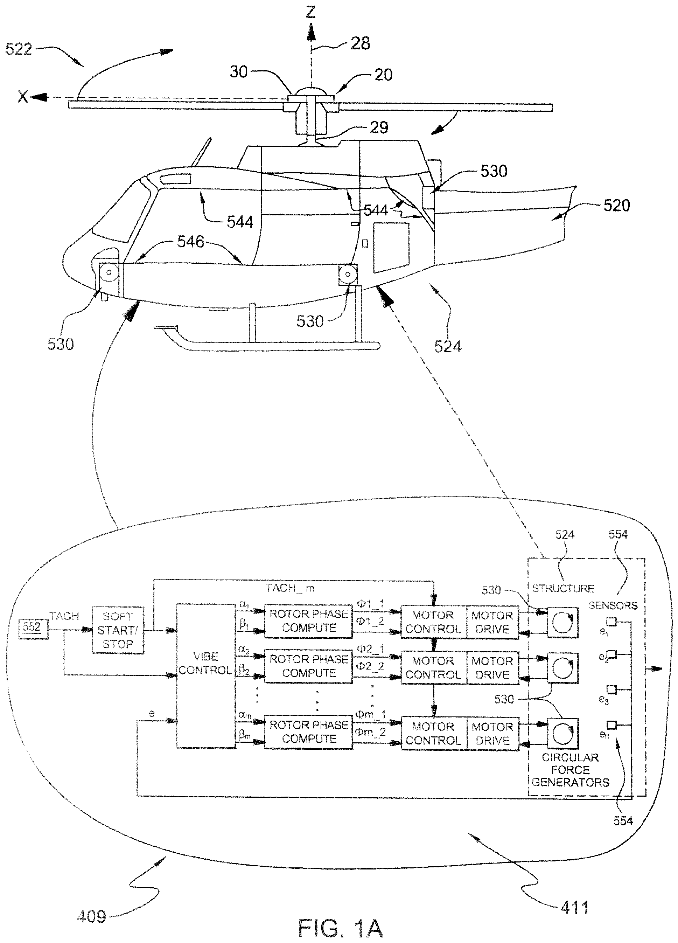

The vibration control actuators of the system/method create circular forces of controllable magnitude and temporal phase. System identification is conducted with circular forces, with parameters that describe a circular force propagating thru the control algorithm of the systems. For example, as shown in FIG. 1, the parameters $\alpha$ and $\beta$ describe the in-phase and out-of-phase components of a circular force. The parameters that describe a circular force are converted into two rotor phases before being sent to the motor control. Rotary forces are computationally converted into rotor phases. The control structure using circular force generators is shown in FIG 1, with FIG. 1B the adaptive circular force algorithm illustrating the operation of the systems. The circular force generator acuators are distributed throughout the vehicle structure, with the circular force generators inputting circular forces into the vehicle nonrotating body structure to reduce vibration.

Consider two co-rotating, co-axial rotors (a circular force generator) with imbalance masses of magnitude $m$ located at a radial distance r from the center of rotation. The angular positions of the masses are given by $\theta_i(t)$ which are measured counter-clockwise from the positive x-axis. The rotors are independently controllable but are synchronized to rotate at the same speed, co.

The net forces in the x and y directions are:

$$F_x(t) = F_0 \left[ \cos(\theta_1(t)) + \cos(\theta_2(t)) \right]$$

$$F_y(t) = F_0 \left[ \sin(\theta_1(t)) + \sin(\theta_2(t)) \right]$$

where $F_0 = mr\omega^2$.

Since the imbalances rotate at the same speed co but different phase angles, their angular positions can be written as:

$$\theta_1 = \omega t + \phi_1 \text{ and } \theta_2 = \omega t + \phi_2$$

Because the actuator generates a circular force of varying magnitude, the force output is written as a circular force. The angle, $\theta_{12}$, and magnitude, $F_{12}$, of this force can be independently controlled. The resultant force components in the x and y directions from this circular force can be written as:

$$F_x(t) = F_{12} \cos(\theta_{12}(t))$$

$$F_y(t) = F_{12} \sin(\theta_{12}(t))$$

where $0 \leq F_{12} \leq 2mr\omega^2$.

The above two formulations for the resultant x and y forces are equivalent. Setting them equal, yields:

$$\alpha = F_{12} \cos(\phi_{12}) = F_0 \left[ \cos(\phi_1) + \cos(\phi_2) \right]$$

$$\beta = F_{12} \sin(\phi_{12}) = F_0 \left[ \sin(\phi_1) + \sin(\phi_2) \right]$$

The new parameters, $\alpha$ and $\beta$, are the in-phase and out-of-phase components, respectfully, of the circular force. In these systems/methods, these components are the values that are adapted in the gradient-descent algorithm, with resulting vehicle vibrations reduced. Adaptations are conducted using these $\alpha$ and $\beta$ force components associated with the circular force actuators.

The method/system includes a saturation control algorithm method and system for saturation conditions when operating the circular force generators. The maximum magnitude of the force generated by a circular actuator is limited to $2F_0$. This limitation is placed within the LMS algorithm to prevent the forces from going beyond the limit of what the actuators can deliver. The magnitude of the force from each circular actuator is calculated as:

$$F_{12} = \sqrt{\alpha^2 + \beta^2}$$

The force components are then limited to what the actuator can actually output using the following equations:

$$\alpha_{out} = \frac{\min(F_{12}, 2F_0)}{F_{12}} \alpha_{in}$$

$$\beta_{out} = \frac{\min(F_{12}, 2F_0)}{F_{12}} \beta_{in}$$

The method/system includes a computing rotor phases algorithm method and system for computing rotor phases when operating the circular force generators. Given alpha and beta from adaptation, the corresponding rotor phase angles must be calculated. This calculation is done in the [Rotor Phase Compute] block in FIG. 1. To calculate these two phase angles, the following equations are solved in the inverse.

$$\alpha = F_0 \left[\cos(\phi_1) + \cos(\phi_2)\right]$$

$$\beta = F_0 \left[\sin(\phi_1) + \sin(\phi_2)\right]$$

Squaring both sides and adding the equations yields:

$$\alpha^2 + \beta^2 = F_0^2 \left(2 + 2\left(\cos(\phi_1)\cos(\phi_2) + \sin(\phi_1)\sin(\phi_2)\right)\right)$$

$$\alpha^2 + \beta^2 = 4F_0^2 \left(\frac{1}{2} + \frac{1}{2}\left(\cos(\phi_1 - \phi_2)\right)\right)$$

$$\alpha^2 + \beta^2 = 4F_0^2 \cos^2\left(\frac{\phi_1 - \phi_2}{2}\right)$$

Another equation can be found by dividing the equations as shown below:

$$\frac{\beta}{\alpha} = \frac{\sin(\phi_1) + \sin(\phi_2)}{\cos(\phi_1) + \cos(\phi_2)} = \frac{2\sin\left(\dfrac{\phi_1 + \phi_2}{2}\right)\cos\left(\dfrac{\phi_1 - \phi_2}{2}\right)}{2\cos\left(\dfrac{\phi_1 + \phi_2}{2}\right)\cos\left(\dfrac{\phi_1 - \phi_2}{2}\right)}$$

$$\frac{\beta}{\alpha} = \tan\left(\frac{\phi_1 + \phi_2}{2}\right)$$

Rewriting these equations gives:

$$\frac{1}{2}\begin{bmatrix} 1 & -1 \\ 1 & 1 \end{bmatrix}\begin{bmatrix} \phi_1 \\ \phi_2 \end{bmatrix} = \begin{bmatrix} \cos^{-1}\dfrac{\sqrt{\alpha^2 + \beta^2}}{2F_0} \\ \tan^{-1}\dfrac{\beta}{\alpha} \end{bmatrix}$$

The solution to the inverse problem is then:

$$\begin{bmatrix} \phi_1 \\ \phi_2 \end{bmatrix} = \begin{bmatrix} 1 & 1 \\ -1 & 1 \end{bmatrix}\begin{bmatrix} \cos^{-1}\dfrac{\sqrt{\alpha^2 + \beta^2}}{2F_0} \\ \tan^{-1}\dfrac{\beta}{\alpha} \end{bmatrix}$$

The active vibration control system uses actuators with two co-rotating imbalanced rotors, to create circular forces of controllable magnitude and temporal phase.

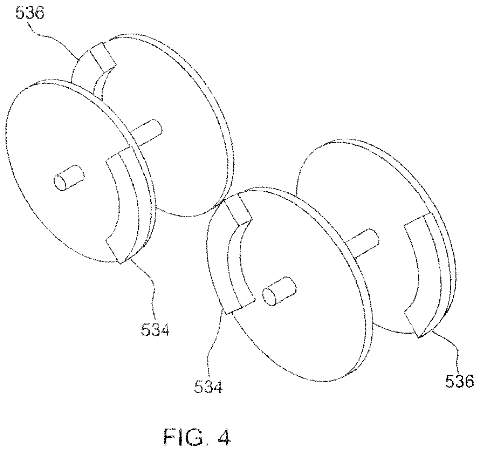

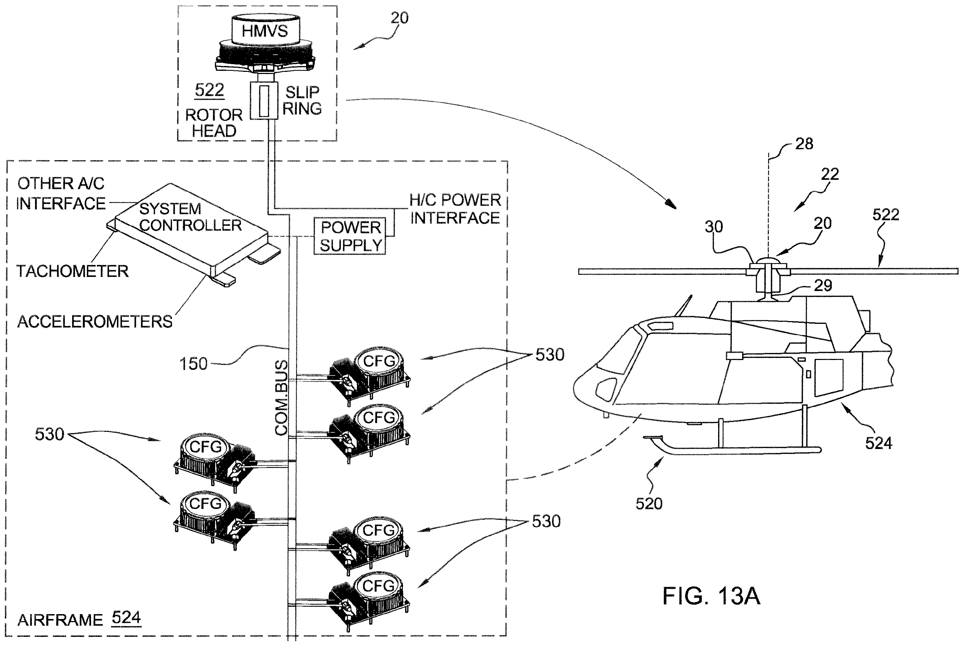

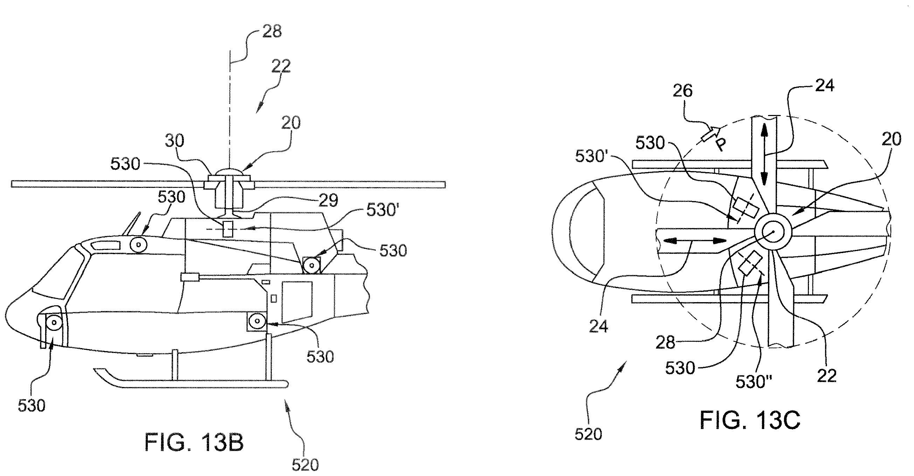

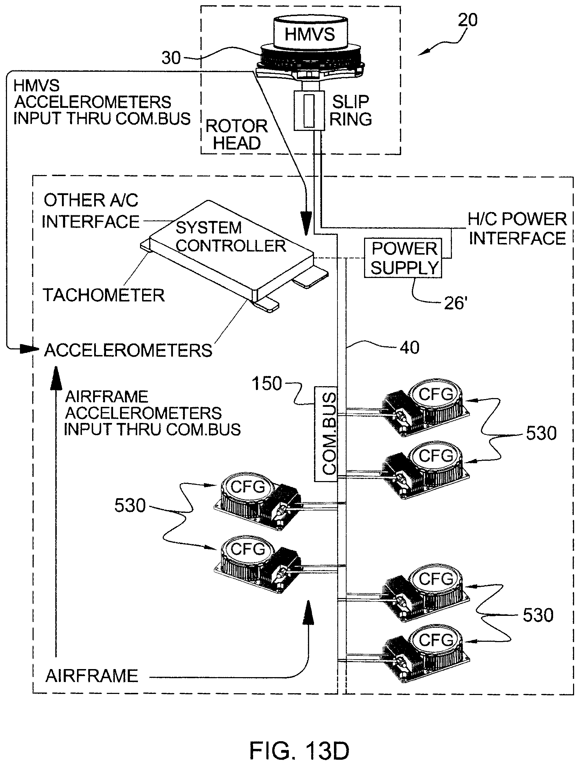

The vehicle 520 is a helicopter with the vehicle rotating machine member 522 the helicopter rotating rotary wing hub above the nonrotating vehicle body helicopter fuselage frame below, and the helicopter rotating rotary wing hub includes hub mounted vibration control system (HMVS) 20 with at least a first hub mounted motor driven hub mass and at least a second hub mounted motor driven hub mass housed within a hub housing 30, with the mounted vibration control system 20 at least a first hub mounted motor driven hub mass and at least a second hub mounted motor driven hub mass driven to rotate relative to the rotary wing hub while the system 409 generates rotating forces in the below rotating hub helicopter aerostructure body 524 with the circular force generators 530. FIG. 1A-8 illustrate examples of helicopters having force generators 530 and the hub mounted vibration control system (HMVS) 20. FIG. 13A-D illustrate additional examples of the rotary wing aircraft vehicle vibration control system with the circular force generators 530 and the hub mounted vibration control system 20 with a communication bus (COM. BUS) 150 for communicating and sending data, control system functions and functionality signals. The communications bus 150 is established to provide a communications link interconnection between the circular force generators 530 generating the circular forces in the nonrotating body 524 and the rotating hub mounted vibration control system at least first hub mounted motor driven hub mass and at least second hub mounted motor driven hub mass. The communication bus is a serial communication bus. The communication bus is chosen from the communication bus group comprised of ARINC-429, ARINC-825(CANbus), and MIL-S-1553. Vibration sensor accelerometers are mounted in both the airframe and the HMVS, and vibration sensor demodulated acceleration data is shared and communicated on the communication bus. Power for airframe body circular force generators 530 and the HMVS 20 does not come through a single power supply, and the power to the circular force generators 530 and the HMVS 20 is provided separately with the communication bus communicating data separated from such electrical power supply delivery. A single system computer controlled controller coordinates both the rotating HMVS rotating hub mounted vibration control system and the airframe body circular force generators 530. The rotating HMVS includes local rotating hub mounted failure control computer controlled electronics for preventing local hub failure, preventing overspeed control. The rotating HMVS and the airframe body circular force generators include local drive electronics, with the local drive electronics acting as nodes on the communications bus. The HMVS, includes a dual frequency HMVS with four hub mounted motor driven hub masses, with two rotating clockwise and two rotating counter-clockwise, the clockwise rotating masses are a node on the bus and the counter-clock-wise rotating masses are another separate note on the bus. The HMVS system controller and the airframe body circular force generators system controllers each have their own system control capability, such that one system can operate without the other. The HMVS receives tachometer information signals from the communication bus, and the HMVS includes a local tachometer signal sensor for locally sensing the tachometer as a backup to loss of the communication bus signal.

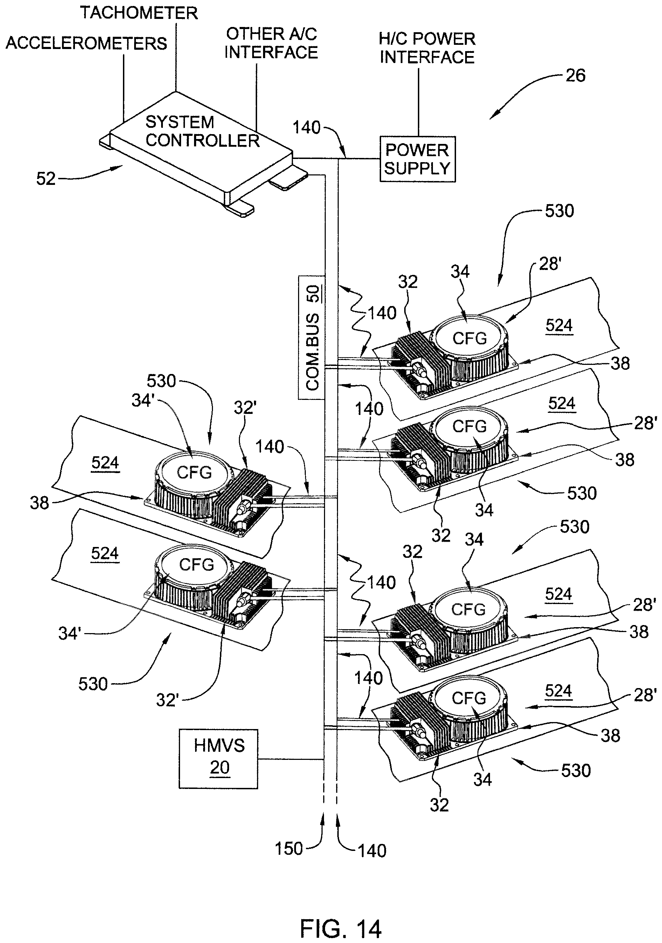

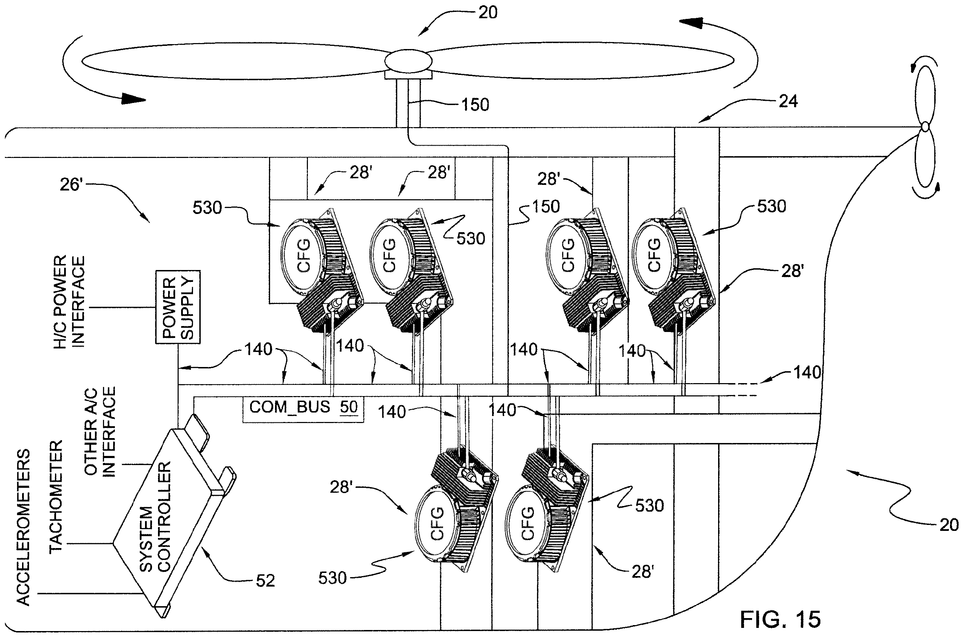

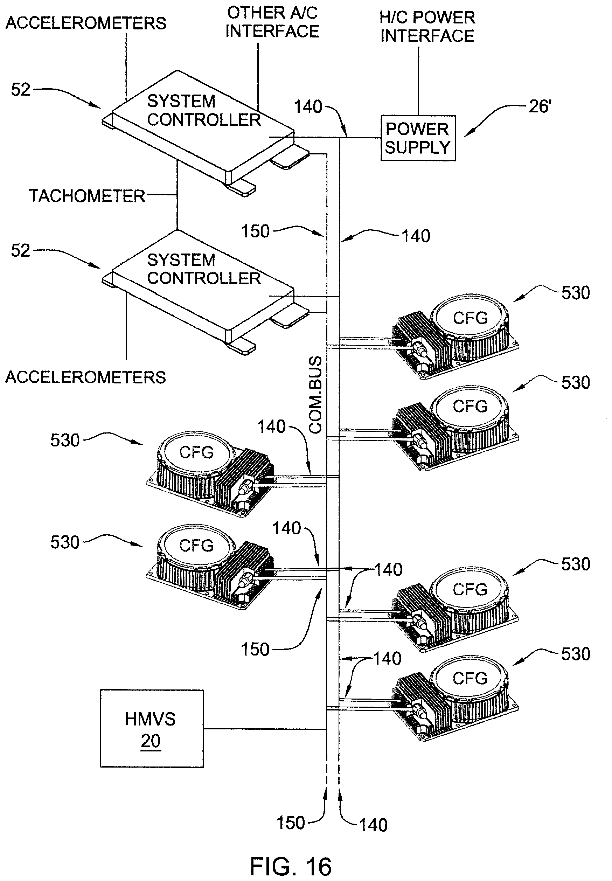

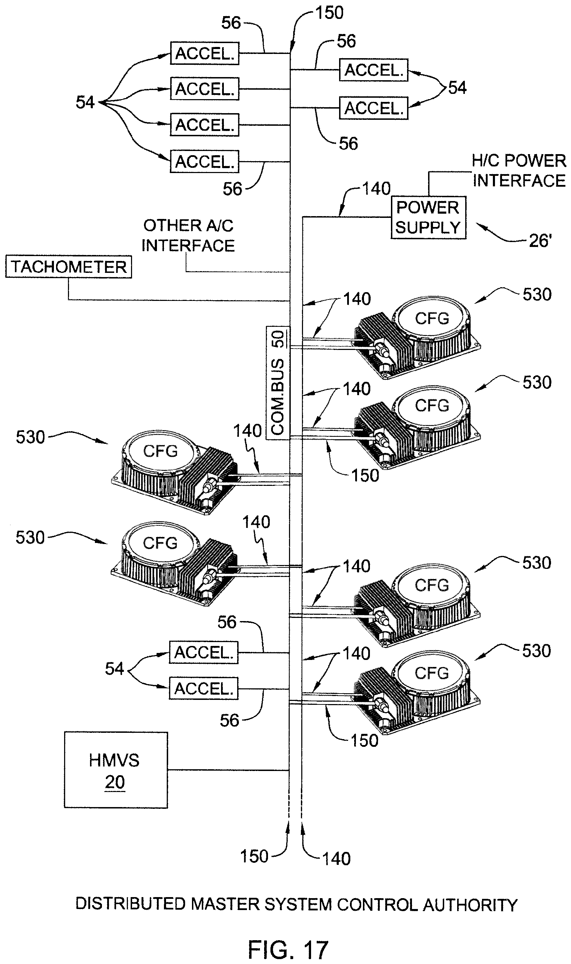

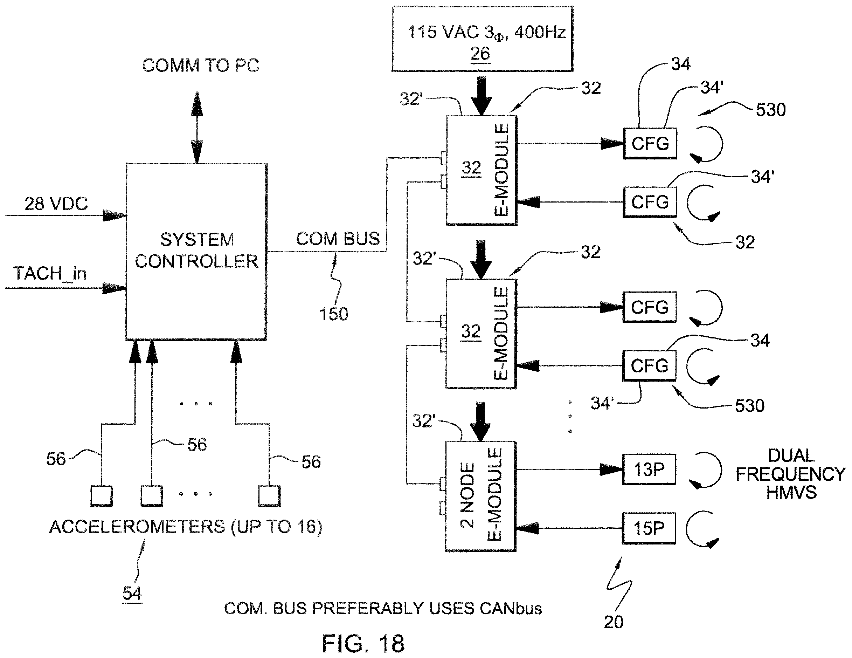

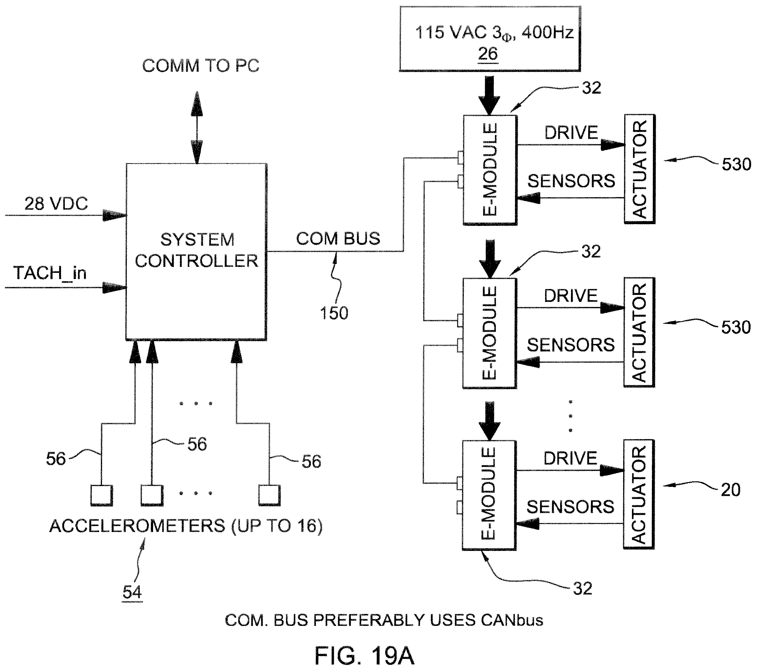

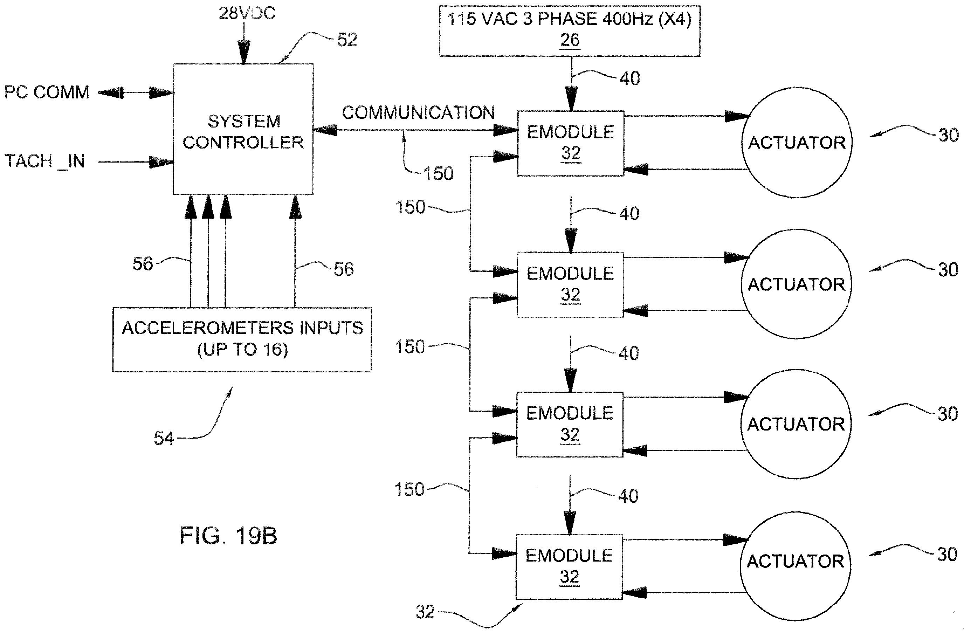

The rotary wing aircraft vehicle vibration control system with the circular force generators 530 and the hub mounted vibration control system 20 with a communication bus (COM. BUS) 150 are shown in FIG. 14-19. The rotary wing aircraft helicopter includes an active vibration control system power converter source 26' for outputting electromagnetic force generator power outputs. The aerostructure nonrotating frame 524 includes a plurality of distributed active vibration control system nodal sites 28' for mounting of force generators wherein generated forces are inputted into the aerostructure to suppress the troublesome vibrations. The aircraft includes at least a first distributed active vibration electromagnetic force generator 530, the first distributed active vibration electromagnetic force generator 530 including a first distributed electronic control system 32 and a first electromagnetically driven mass 34, the first distributed active vibration electromagnetic force generator 530 fixed to the frame aerostructure 524 at a first distributed active vibration control system nodal site 28'. The aircraft includes a plurality of electrical power distribution lines 140, the electrical power distribution lines 140 connecting the electromagnetic force generators 530 with the power source 26' with the electromagnetic force generator power outputs outputted to the electromagnetic force generators. The aircraft includes a distributed expandable force generator data communications network 150, the distributed force generator data communications network 150 linking together the at least first and second distributed electronic control systems 32 wherein the distributed electronic control systems 32 communicate force generator vibration control data through the distributed force generator data communications network 150 independently of the electrical power distribution lines 140 to minimize the troublesome vibrations. Each node has a unique address on the network 150, with the force generating data distributed through the network 150 with the unique network address, the unique node address# along with the force data, such as a magnitude and phase of a force to be generated by the electromagnetic force generator 530 having the unique data communications node network address (or the unique data communications node network address with a real and imaginary force generation values). The distributed expandable force generator data communications network 150 is a wired data communications network, and is comprised of a communication bus and with a harness interface connector connecting each electromagnetic force generator's distributed electronic control system 32 with the network 150, with the distributed electronic control systems 32 both sending and receiving force generating system data through the network 150. The distributed expandable force generator data communications network 150 is a Controller Area Network, with the distributed electronic control systems 32 including microcontrollers communicating with each other through the network along with the microcontrollers in the system controller. The distributed electronic control systems 32 also communicate system health data such as whether a force generator 530 is healthy or not healthy. The force generator network node address and its accompanying force generation data (network node#_magnitude_phase) flows throughout the network 150 and is shared on the network with all network nodes and all electromagnetic force generators 530. The aircraft includes a master system controller 52, the master system controller 52 connected to the distributed force generator data communications network 150 wherein the master system controller 52 provides a plurality of authority commands to the at least first and second distributed electronic control systems 32, with the at least first and second distributed electronic control systems 32 executing a plurality of subordinate local force generator operation commands. The subordinate local force generator operation commands depend on the type of force generator. The force generators 530, are rotating mass force generators, with the subordinate local force generator operation commands commanding electromagnetic motor rotations of corotating electromagnetically driven masses 34 and 36. An electromagnetic force generator's distributed electronic control system 32 receive its network node address and its accompanying force generation data (network node#_magnitude_phase) from which its microcontroller computes electromagnetic motor rotations for the corotating electromagnetically driven masses 34 and 36 to output a desired circular force into aerostructure 524 through the fixing base 38, with the force generators 530 comprised of circular force generators outputting circular forces into aerostructure 524 at their respective fixing base nodal sites 28'. The aircraft includes a migrating master system control authority, the migrating master system control authority movable between the at least first and second distributed electronic control systems 32 of the plurality of force generators 530, with the migrating master system control authority providing a plurality of authority commands to the distributed electronic control systems 32 to execute a plurality of subordinate local force generator operation commands such as with a Migrating Master System Control Authority, without a separate distinct physical head master System Controller. With the migrating master system control authority at any one point in time the system has a master control authority taking up temporary residence in a distributed electronic control system 32, which includes executable software and/or firmware commands that provide a physically headless control system with distributed control of the system with the ability of backup command with migration movement of authority. The system includes distributed networked accelerometers 54, with the distributed networked accelerometers including microcontrollers having accelerometer network links 56 with the distributed expandable force generator data communications network 150. The accelerometers input and output vibration measurement data into the force generator data communications network, with the plurality of accelerometers inputting data into the network (and receiving data from the network) with the accelerometers each having a unique network node address #, with the accelerometers including an accelerometer distributed network electronic control system for data interfacing with the network. The accelerometer network links 56 are wired links, and the accelerometers are powered through the communications bus wired network links 56. Alternatively, the accelerometers are wireless networked accelerometers providing wireless transmission of accelerometer data measurements sent to the network 150 for determination on how to minimize troublesome vibrations with the accelerometers powered by alternative means such as with batteries or with power supplied from aircraft power supply outlets or power supply 26'. The aircraft includes a distributed master system control authority. The distributed master system control authority is distributed among the at least first and second distributed electronic control systems 32 utilizing the network 150 with the distributed master system control authority providing a plurality of authority commands to the individual distributed electronic control systems 32 to execute a plurality of subordinate local force generator operation commands, such as with a Distributed Master System Control Authority. At any one point in time the system has a master control authority spread out in at least two distributed electronic control systems 32, and includes executable software and/or firmware commands that provide a physically headless system with distributed control of the system with backup control with the plurality of distributed electronic control systems 32 on the network 150. The system includes distributed networked accelerometers 54, with the distributed networked accelerometers including microcontrollers having accelerometer network links 56 with the distributed expandable force generator data communications network 150. The accelerometers input and output vibration measurement data into the force generator data communications network, with the plurality of accelerometers inputting data into the network (and receiving data from the network) with the accelerometers each having a unique network node address #, with the accelerometers including an accelerometer distributed network electronic control system for data interfacing with the network. The accelerometer network links 56 are wired links, and the accelerometers are powered through the communications bus wired network links 56. Alternatively, the accelerometers are wireless networked accelerometers providing wireless transmission of accelerometer data measurements sent to the network 150 for determination on how to minimize troublesome vibrations with the accelerometers powered by alternative means such as with batteries or with power supplied from aircraft power supply outlets or power supply 26'. The aircraft includes at least a first distributed networked accelerometer 54. The accelerometer outputs can be inputted directly into the network 150 or into system controller 52. The at least first distributed networked accelerometer 54 has an accelerometer network link 56 with the distributed expandable force generator data communications network 150. The accelerometers are fixed to the aerostructure 524, and measure vibrations in the aerostructure. The accelerometers sense and measure the troublesome vibrations created by the rotating machinery and the forces generated by the actuators and are measurable by the accelerometer. The accelerometer measurements of vibrations are used as control inputs to drive down and minimize the troublesome vibrations. The accelerometers input and output vibration measurement data into the force generator data communications network, with the plurality of accelerometers inputting data into the network (and receiving data from the network) with the accelerometers each having a unique network node address #, with the accelerometers including an accelerometer distributed network electronic control system for data interfacing with the network. The accelerometer network links 56 are wired links, and the accelerometers are powered through the communications bus wired network links 56. Alternatively, the accelerometers are wireless networked accelerometers providing wireless transmission of accelerometer data measurements sent to the network 150 for determination on how to minimize troublesome vibrations with the accelerometers powered by alternative means such as with batteries or with power supplied from aircraft power supply outlets or power supply 26'. The accelerometer data measurements are shared through the network 150 and used in the system controllers, processors, and electronic control systems in the determination of controlling the electromagnetic driving of the moving masses to generate the forces to minimize the troublesome vibrations. The first distributed electronic control system 32 executes a plurality of local force generator operation rotating motor commands to rotate at least its first electromagnetic motor to move its at least first mass, and the second distributed electronic control system 32 executes a plurality of local force generator operation rotating motor commands to rotate at least its first electromagnetic motor to move its at least first mass. The plurality of distributed active vibration force generators 530 are circular force generating distributed active vibration force generators with the distributed electronic control systems 32 executing a plurality of local force generator operation rotating motor control commands. The distributed electronic control systems have a network bus interface with the data communications network bus through which force generation data is communicated, with the distributed electronic control systems executing a plurality of local force generator operation commands.

The invention includes a rotary blade rotary wing aircraft rotating hub mounted rotating assembly vibration control system for a rotary blade rotary wing aircraft rotating hub assembly experiencing a vibration of a plurality of vibration frequencies while rotating at an operational rotation frequency about a rotating assembly center axis of rotation. FIG. 13A-B illustrate a rotary blade rotary wing aircraft rotating hub mounted rotating assembly vibration control system HMVS 20 for a rotary blade rotary wing aircraft rotating hub assembly 22 experiencing a vibration 24 of a plurality of vibration frequencies while rotating at an operational rotation frequency 26 (1P) about a rotating assembly center axis of rotation 28. (As illustrated and labeled the rotating hub assembly is rotating at 1P in a clockwise direction relative to non-rotating aircraft body/ground references).

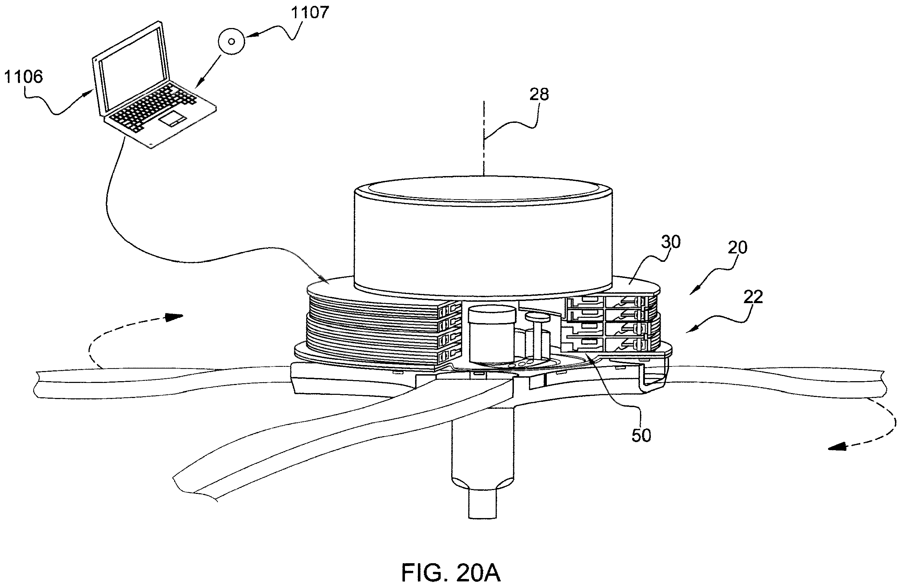

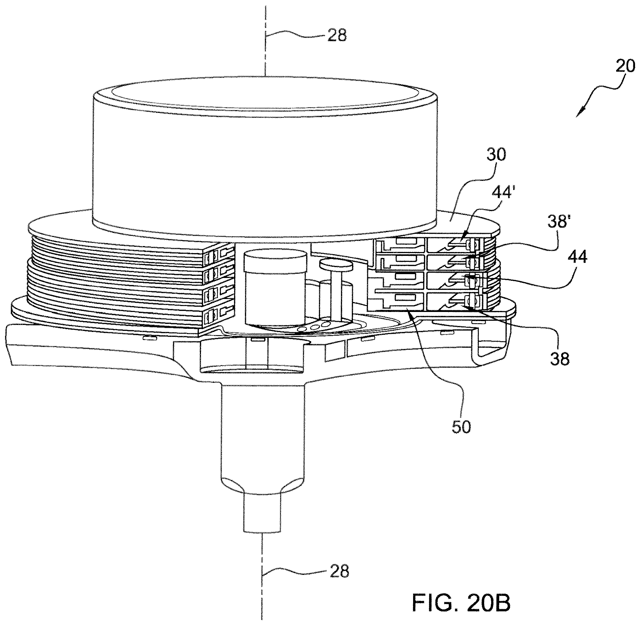

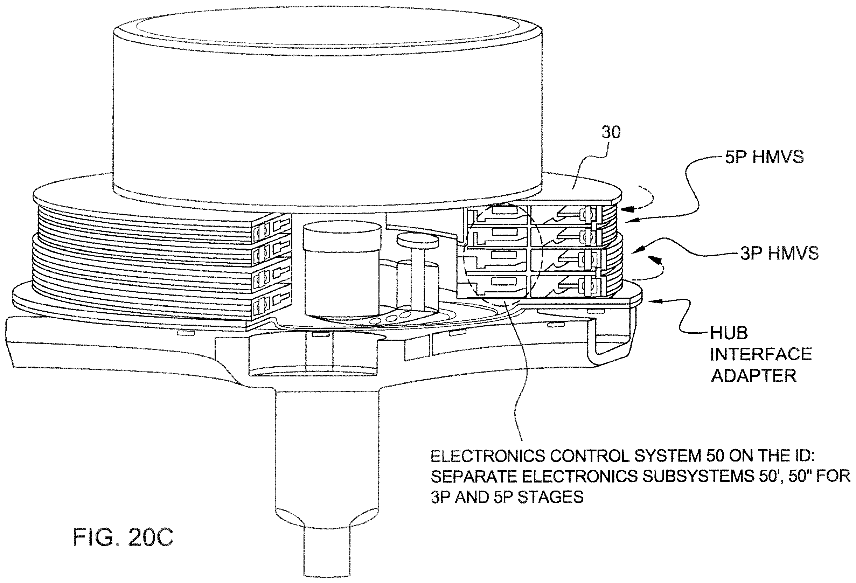

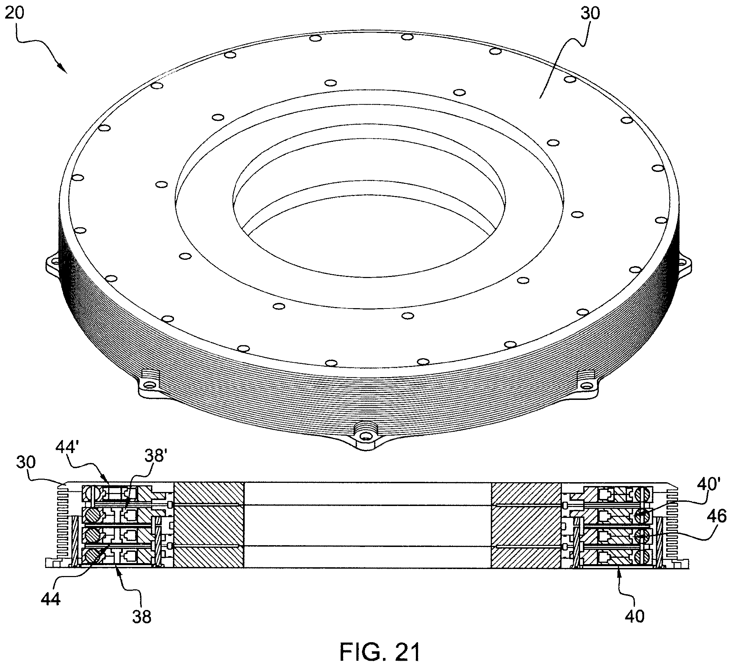

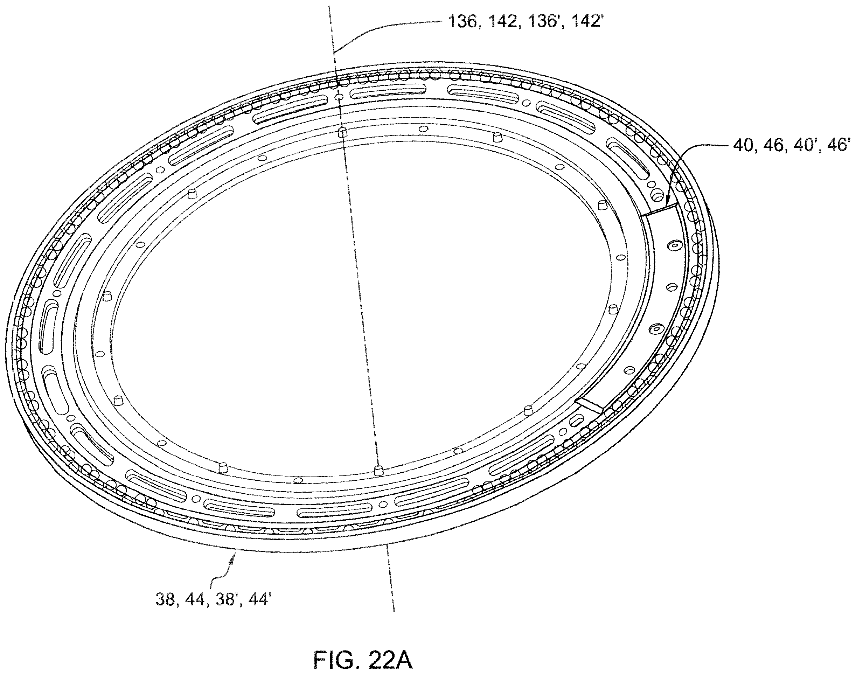

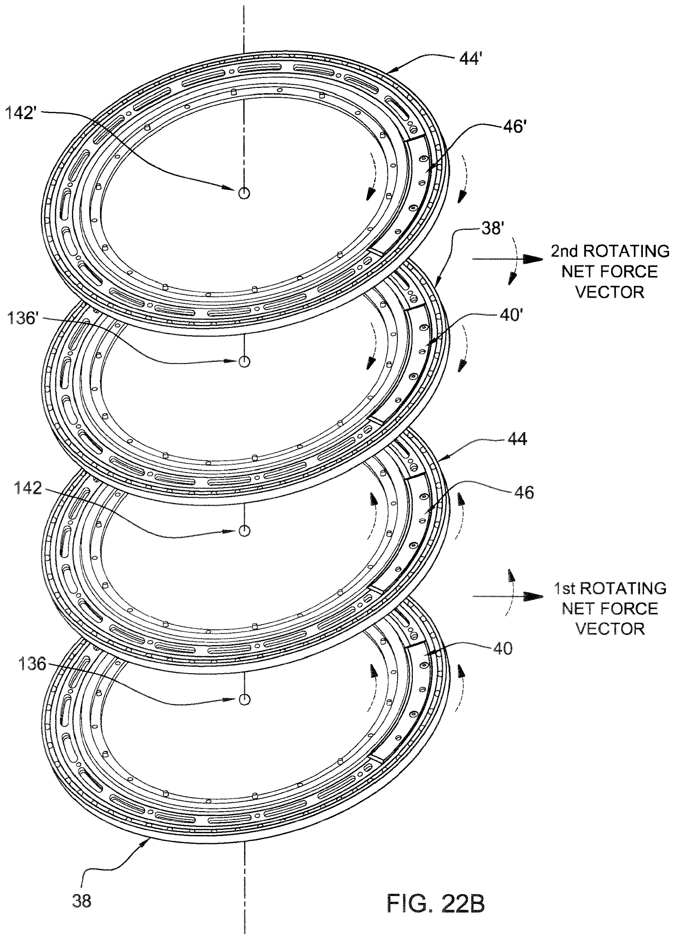

FIG. 20A-C illustrates a hub mounted rotating assembly vibration control system 20 with about a quarter section cut away to reveal the internals housed inside the annular ring housing 30. The helicopter rotating hub mounted vibration control system includes an annular ring housing 30 attachable to the helicopter rotary wing hub and rotating with the helicopter rotary wing hub at the helicopter operational rotation frequency. The helicopter rotating hub mounted vibration control system housing 30 including a first imbalance mass concentration rotor 38, a second imbalance mass concentration rotor 44, a third imbalance mass concentration rotor 38', and a fourth imbalance mass concentration rotor 44'. FIG. 21 illustrates a further rotating assembly vibration control system 20, with a cross section showing the four rotors housed in the housing 30. FIG. 22A-B illustrate the imbalance mass concentration rotors with their mass concentrations 40, 46, 40', 46'. The first imbalance mass concentration rotor 38 has a first imbalance mass concentration rotor center axis of rotation 136 centered on the rotating assembly center axis of rotation 28, the second imbalance mass concentration rotor 44 having a second imbalance mass concentration rotor center axis of rotation 142 centered on the rotating assembly center axis of rotation 28, the third imbalance mass concentration rotor 38' having a third imbalance mass concentration rotor center axis of rotation 136' centered on the rotating assembly center axis of rotation 28, and the fourth imbalance mass concentration rotor 44' having a fourth imbalance mass concentration rotor center axis of rotation 142' centered on the rotating assembly center axis of rotation 28. The first imbalance mass concentration rotor 38 and the second imbalance mass concentration rotor 44 are driven at a first rotation speed greater than the rotating assembly operational rotation frequency 26 (1P) while controlling the rotational position of the first imbalance mass concentration 40 and the second imbalance mass concentration 46 to produce a first rotating net force vector to inhibit a first vibration frequency. As illustrated in FIG. 20-22, the first imbalance mass concentration rotor 38 and the second imbalance mass concentration rotor 44 are driven at a four multiple vibration canceling rotation frequency (4P) counter rotating direction (rotation opposing rotation of the rotating hub assembly) (counterclockwise if hub is rotating clockwise as illustrated). The first and second rotor imbalance mass concentrations 40, 46 are driven at 4P opposing the direction of the rotating hub rotation while controlling the rotational position of the first imbalance mass concentration 40 and the second imbalance mass concentration 46 to produce a first rotating net force vector. The third imbalance mass concentration rotor 38' and the fourth imbalance mass concentration rotor 44' are driven at a second rotation speed greater than the rotating assembly operational rotation frequency 26 (P) while controlling the rotational position of the third imbalance mass concentration 40' and the fourth imbalance mass concentration 46' to produce a second rotating net force vector. The first and second rotating force vectors are controlled to inhibit vibration frequency (4P). As illustrated in FIG. 20-22, the third imbalance mass concentration rotor 38' and the fourth imbalance mass concentration rotor 44' are driven at a four multiple vibration canceling rotation frequency (4P) co-rotating direction rotating with the rotation of the rotating hub assembly (4P rotating in same direction as rotating hub, clockwise if hub is rotating clockwise as illustrated) while controlling the rotational position of the third imbalance mass concentration and the fourth imbalance mass concentration to produce a second rotating net force vector to inhibit a second vibration frequency (5P) with respect to the 1P rotating frame. With the rotor hub rotating at P, and having N blades, the first and second imbalance mass concentrations are rotated at a whole number multiple of P, most NP in the direction opposing the rotor hub rotation, and the third and fourth imbalance mass concentrations are rotated at a whole number multiple of P, most NP in the same direction as the rotor hub rotation. The first imbalance mass concentration is opposingly oriented relative to the second imbalance mass concentration during a starting stopping rotation speed less than the first rotation speed. The third imbalance mass concentration is opposingly oriented relative to the fourth imbalance mass concentration during a starting stopping rotation speed less than the second rotation speed.

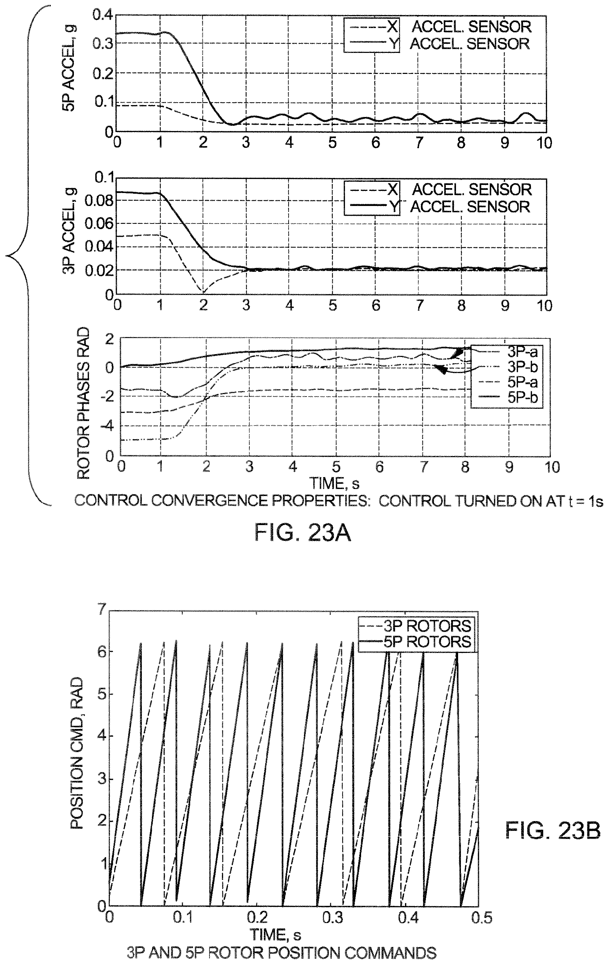

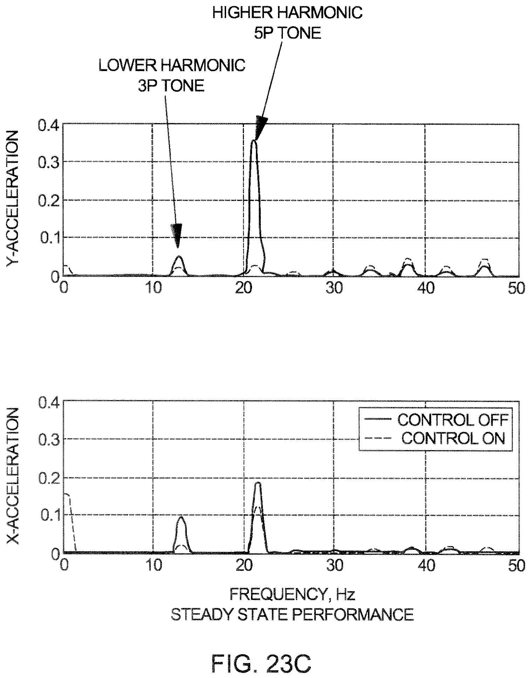

The first vibration frequency is a distinct rotating frame lower harmonic frequency from the second vibration frequency higher harmonic, and the first imbalance mass concentration rotor and the second imbalance mass concentration rotor is driven and controlled independently from the third imbalance mass concentration rotor and the fourth imbalance mass concentration rotor, with the first imbalance mass concentration rotor and the second imbalance mass concentration rotor driven to rotate opposite of the hub assembly and the third and fourth rotors. The first vibration frequency lower harmonic is a distinct lower harmonic frequency 3P tone from the second vibration frequency higher harmonic 5P tone with respect to the 1P rotating frame. FIG. 23A-C show simulated test data showing with the vibration control on the system inhibited the two distinct frequencies; the test was simulated using a stationary helicopter body and rotor hub with vibrations inputted into the rotor hub using controlled linear actuator disturbance force generators to simulate the in-flight helicopter rotating hub vibrations.

The first vibration frequency is a distinct lower harmonic frequency tone from the second vibration frequency tone, and the first imbalance mass concentration rotor rotational position control and the second imbalance mass concentration rotor rotational position control is segregated from the third imbalance mass concentration rotor rotational position control and the fourth imbalance mass concentration rotor rotational position control. The first imbalance mass concentration rotor rotational position control and the second imbalance mass concentration rotor rotational position control is segregated from the third imbalance mass concentration rotor rotational position control and the fourth imbalance mass concentration rotor rotational position control, with the electronics control system 50 comprised of separate subsystems 50', 50".

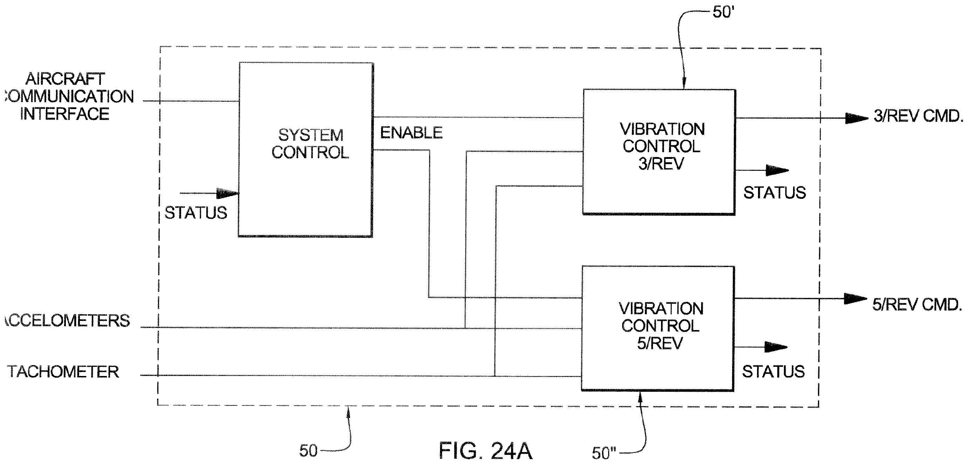

The vibration control system includes a tachometer input and a first rotation speed rotors stage VC controller for controlling the first imbalance mass concentration rotor rotational position and the second imbalance mass concentration rotor rotational position, and a second rotation speed rotors stage VC controller for controlling the third imbalance mass concentration rotor rotational position and the fourth imbalance mass concentration rotor rotational position. FIG. 24A-B illustrates a vibration control system with a tachometer input and a first rotation speed rotors stage VC controller for controlling the first imbalance mass concentration rotor rotational position and the second imbalance mass concentration rotor rotational position with 3/Rev commands (3P commands) to a first motor control loop, and a second rotation speed rotors stage VC controller for controlling the third imbalance mass concentration rotor rotational position and the fourth imbalance mass concentration rotor rotational position with 5/Rev commands (5P commands) to a second motor control loop.

The vibration control system includes a first rotation speed electronics control system subsystem 50' for controlling the first imbalance mass concentration rotor rotational position and the second imbalance mass concentration rotor rotational position, and a second rotation speed electronics control system subsystem 50" for controlling the third imbalance mass concentration rotor rotational position and the fourth imbalance mass concentration rotor rotational position. The vibration control system first rotation speed electronics control system subsystem 50' is a first rotation speed rotors 3P stage VC controller for controlling the first imbalance mass concentration rotor rotational position and the second imbalance mass concentration rotor rotational position, and the second rotation speed electronics control system subsystem 50" is a second rotation speed rotors 5P stage VC controller for controlling the third imbalance mass concentration rotor rotational position and the fourth imbalance mass concentration rotor rotational position.

The vibration control system includes a fault mode control protocol for controlling a rotation of the rotors during a sensed failure of the rotating assembly vibration control system, with the system braking a failed rotor.

The first imbalance mass concentration is opposingly oriented to the second imbalance mass concentration during a first starting stopping rotation speed less than the first rotation speed and the third imbalance mass concentration is opposingly oriented to the fourth imbalance mass concentration during a second starting stopping rotation speed less than the second rotation speed.

The invention includes a rotating vibration control system for a rotating assembly having at least a first vibration frequency operational vibration and at least a second vibration frequency operational vibration. The rotating vibration control system includes a first rotor with a first imbalance mass concentration, the first rotor driven to rotate at a first rotation speed greater than an operational rotation frequency of the rotating assembly, in a counter rotating direction, with rotation opposing rotation of the rotating assembly. The rotating vibration control system includes a second rotor with a second imbalance mass concentration, the second rotor driven to rotate at the first rotation speed greater than an operational rotation frequency of the rotating assembly, in the counter rotating direction, opposing the rotation of the rotating assembly. The rotating vibration control system includes a third rotor with a third imbalance mass concentration, the third rotor driven to rotate at a second rotation speed greater than an operational rotation frequency of the rotating assembly, in a co-rotating direction, rotating with the rotation of the rotating assembly. The rotating vibration control system includes a fourth rotor with a fourth imbalance mass concentration, the fourth rotor driven to rotate at the second rotation speed greater than an operational rotation frequency of the rotating assembly in the co-rotating direction with the rotation of the rotating assembly.

The rotating vibration control system includes at least a first vibration sensor for producing a plurality of first vibration sensor signals. The rotating vibration control system includes at least a second vibration sensor for producing a plurality of second vibration sensor signals. The rotating vibration control system includes a first rotor rotational position sensor. a second rotor rotational position sensor, a third rotor rotational position sensor, and a fourth rotor rotational position sensor, which are shown as Hall effect sensors sensing the four rotor positions. The rotating vibration control system includes a first motor control loop for controlling the rotation of the first rotor and the rotation of the second rotor and receives first stage VC controller motor commands. The rotating vibration control system includes a first vibration control loop first rotation speed stage VC controller for controlling rotors and providing commands to the first motor control loop to minimize the first vibration sensor signals and the second vibration sensor signals. The rotating vibration control system includes a second motor control loop for controlling the rotation of the third rotor and the rotation of the fourth rotor and receives second stage VC controller motor commands. The rotating vibration control system includes a second vibration control loop second rotation speed stage VC controller for controlling rotors and providing commands to the second motor control loop to minimize the first vibration sensor signals and the second vibration sensor signals. The second vibration control loop second stage VC controller commands the second motor control loop independent of the first vibration control loop first stage VC controller.

The motor control loops close a control loop around the respective motors based on respective rotor position feedback derived from the rotor rotational position sensors. The system includes a soft start stop control subsystem, the soft start stop control subsystem providing commands to opposingly orient the first imbalance mass concentration relative to the second imbalance mass concentration, and the third imbalance mass concentration opposing the fourth.

The soft start stop control subsystem includes program instructions to opposingly orient the first imbalance mass concentration relative to the second imbalance mass concentration during a rotation speed ramp up, and the third imbalance mass concentration opposing the fourth.

The soft start stop control subsystem includes program instructions to opposingly orient the first imbalance mass concentration relative to the second imbalance mass concentration during a rotation speed ramp down, and the third imbalance mass concentration opposing the fourth.

The invention includes a rotary wing aircraft rotating hub mounted vibration control system for a rotary wing hub having at least a first and a second vibration frequency while rotating at a rotary wing operational rotation frequency. The rotating hub mounted vibration control system is comprised of: a system housing, the system housing attached to the rotary wing hub and rotating with the rotary wing hub at the operational rotation frequency. The housing has an electronics housing cavity subsystem and an adjacent coaxial rotor housing cavity subsystem, the rotor housing cavity subsystem containing the rotors.

The housing housing a first coaxial ring motor having a first rotor with a first imbalance mass concentration, a second coaxial ring motor having a second rotor with a second imbalance mass concentration.

The housing housing a third coaxial ring motor having a third rotor with a third imbalance mass concentration, a fourth coaxial ring motor having a fourth rotor with a fourth imbalance mass concentration.

The housing housing an electronics control system for controlling the vibration control system, with computer electronics which utilize computer medium to operate and execute program instructions from computer program products, which are storagable on and loadable from computer storage medium.

The electronics control system includes a first rotation speed rotor stage VC controller electronics control subsystem for controlling a rotational position of the first imbalance mass concentration rotor and a rotational position of the second imbalance mass concentration rotor, the first rotation speed rotor stage VC controller electronics control subsystem controlling a speed and a phase of the first coaxial ring motor and the second coaxial ring motor such that the first imbalance mass concentration and the second imbalance mass concentration are directly driven at a whole number multiple vibration canceling rotation frequency greater than the operational rotation frequency wherein the first rotary wing hub vibration frequency is reduced.

The electronics control system includes a second rotation speed rotor stage VC controller electronics control subsystem for controlling a rotational position of the third imbalance mass concentration rotor and a rotational position of the fourth imbalance mass concentration rotor, the second rotation speed rotor stage VC controller electronics control subsystem controlling a speed and a phase of the third coaxial ring motor and the fourth coaxial ring motor such that the third imbalance mass concentration and the fourth imbalance mass concentration are directly driven at a whole number multiple vibration canceling rotation frequency greater than the operational rotation frequency wherein the second helicopter rotary wing hub vibration frequency is reduced.

First rotation speed rotor stage VC controller electronics control subsystem is separate from the second rotation speed rotor stage VC controller electronics control subsystem, two subsystems control their rotors independently of the other rotors, the location of the first and second rotors does not directly depend on the location of the third and fourth.

The first rotation speed rotor stage VC controller electronics control subsystem is physically separate from the second rotation speed rotor stage VC controller electronics control subsystem, stacked in at least two electronics layers, the electronics are housed proximate the center axis of rotation, proximate the housing ID, distal from housing OD. The rotors are stacked in layers, and the electronics subsystems are stacked in layers, the electronics proximate the housing ID and the rotors proximate the housing OD.

A method of controlling a plurality of vibration frequencies of an aircraft with a rotary hub which rotates at an operational rotation frequency is provided. The method includes providing an annular ring housing containing a first coaxial ring motor having a first rotor with a first imbalance mass concentration, a second coaxial ring motor having a second rotor with a second imbalance mass concentration, a third coaxial ring motor having a third rotor with a third imbalance mass concentration, a fourth coaxial ring motor having a fourth rotor with a fourth imbalance mass concentration, and an electronics control system for controlling the vibration control system. The electronics control system computer electronics execute program instructions from computer program products, which are storagable on and loadable from computer storage medium, the electronics control system including a first rotation speed rotor stage VC controller electronics control subsystem for controlling a rotational position of the first imbalance mass concentration rotor and a rotational position of the second imbalance mass concentration rotor, the electronics control system including a second rotation speed rotor stage VC controller electronics control subsystem for controlling a rotational position of the third imbalance mass concentration rotor and a rotational position of the fourth imbalance mass concentration rotor.

The method includes securing the annular ring housing to the rotary hub with the annular ring housing rotating at the operational rotation frequency with the rotary hub, driving the first rotor and the second rotor at a first whole number multiple vibration canceling rotation frequency greater than the operational rotation frequency while controlling the rotational position of the first imbalance mass concentration and the second imbalance mass concentration in order to produce a first rotating net force vector to inhibit a first vibration frequency, and driving the third rotor and the fourth rotor at a second whole number multiple vibration canceling rotation frequency greater than the operational rotation frequency while controlling the rotational position of the third imbalance mass concentration and the fourth imbalance mass concentration in order to produce a second rotating net force vector to inhibit a second vibration frequency.

The first rotation speed rotor stage VC controller electronics control subsystem controls a speed and a phase of the first coaxial ring motor and the second coaxial ring motor such that the first imbalance mass concentration and the second imbalance mass concentration are directly driven at a whole number multiple vibration canceling rotation frequency greater than the operational rotation frequency wherein the first rotary wing hub vibration is reduced independent from the second rotation speed rotor stage VC controller electronics control subsystem controlling the speed and phase of the third coaxial ring motor and the fourth coaxial ring motor such that the third imbalance mass concentration and the fourth imbalance mass concentration are directly driven at a whole number multiple vibration canceling rotation frequency greater than the operational rotation frequency wherein the second helicopter rotary wing hub vibration is reduced.

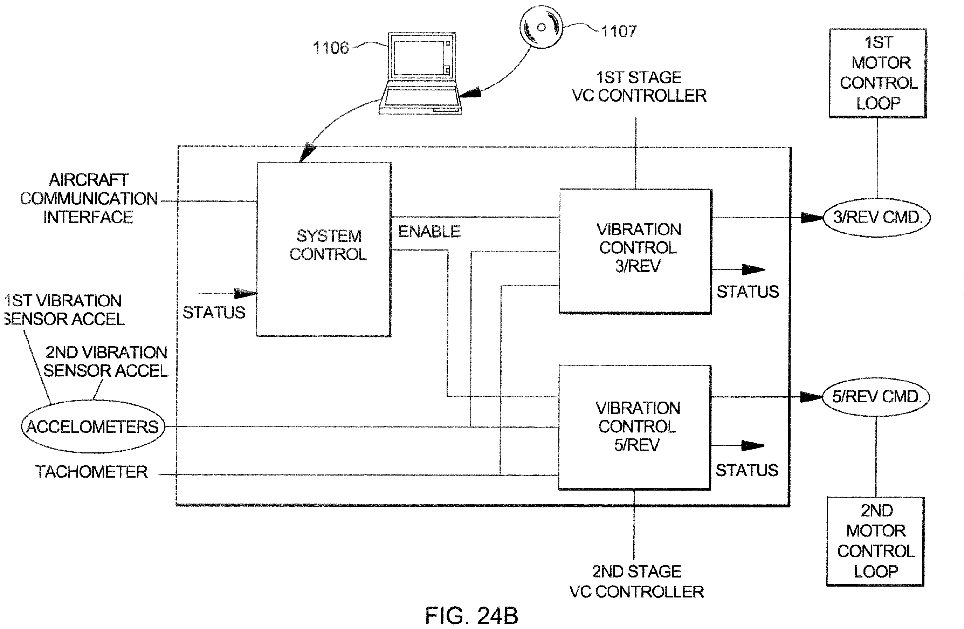

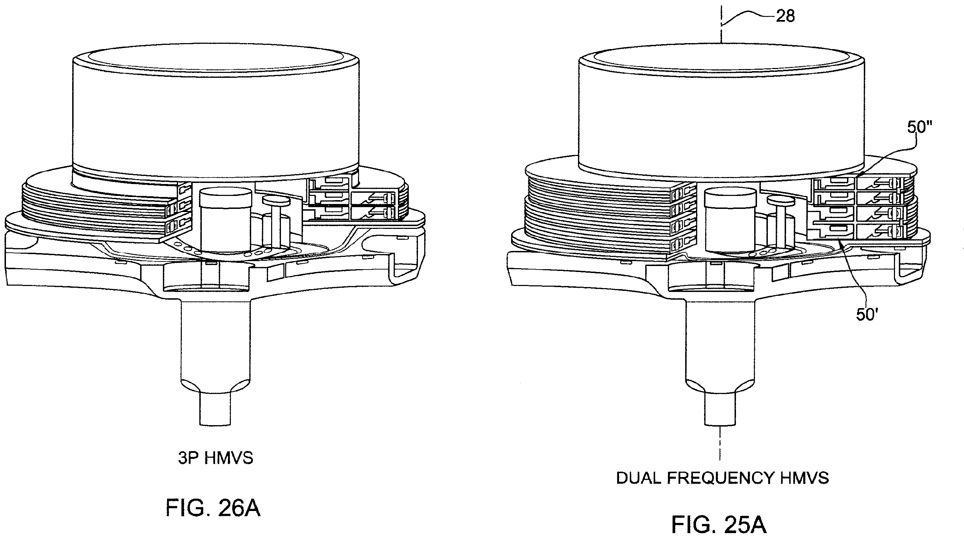

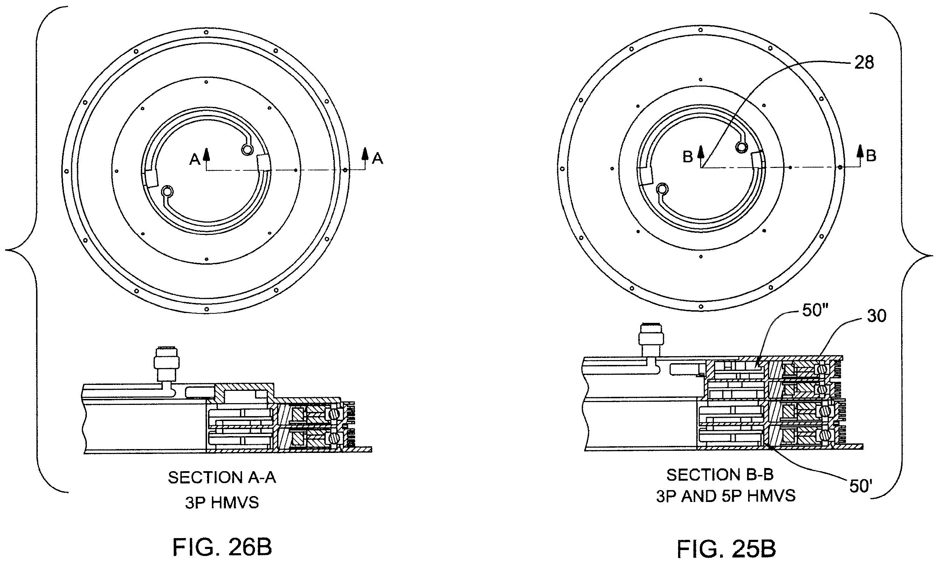

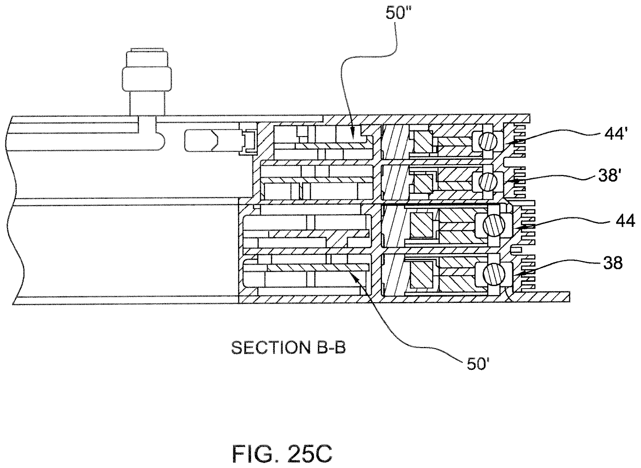

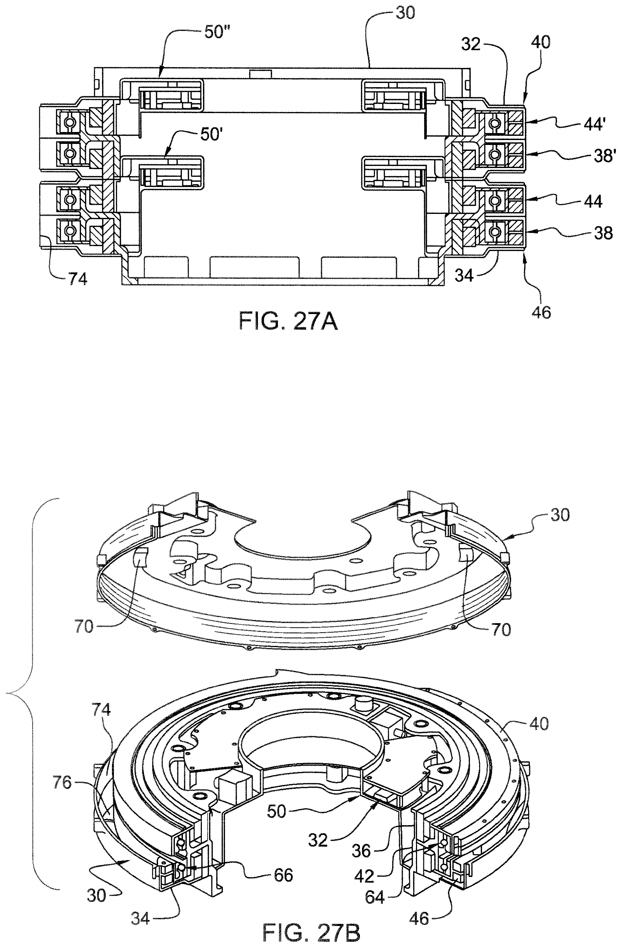

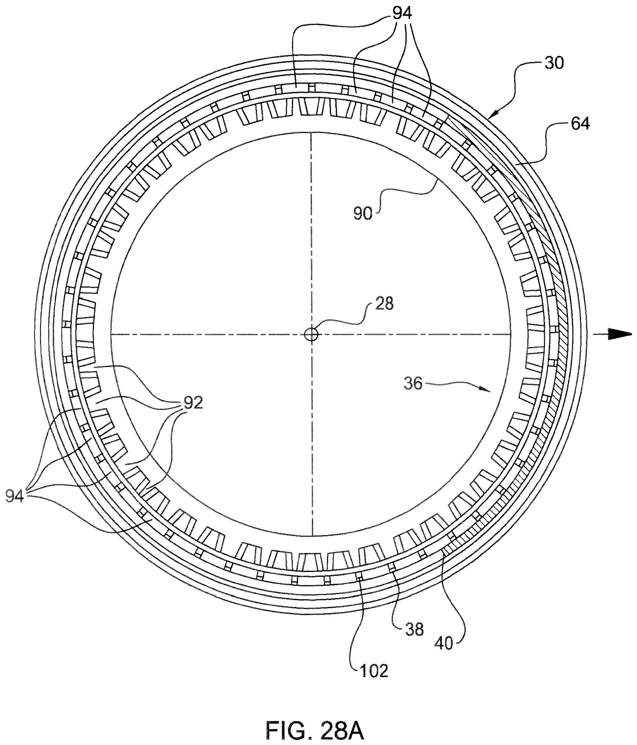

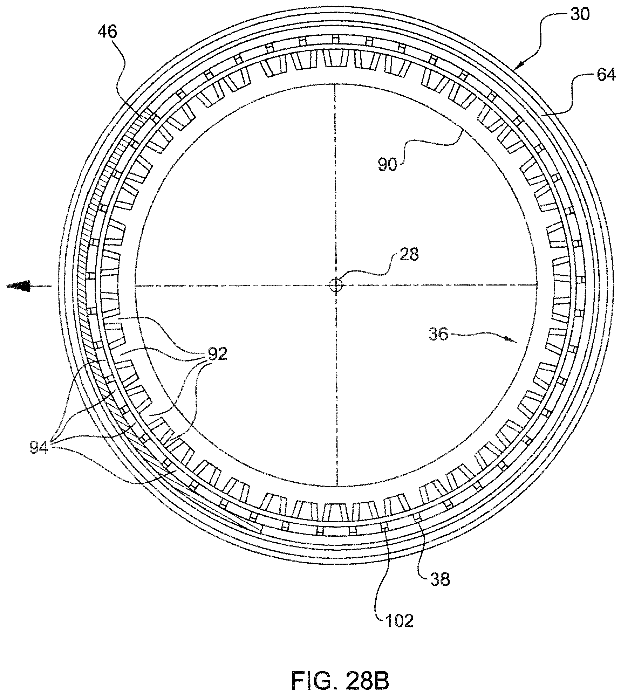

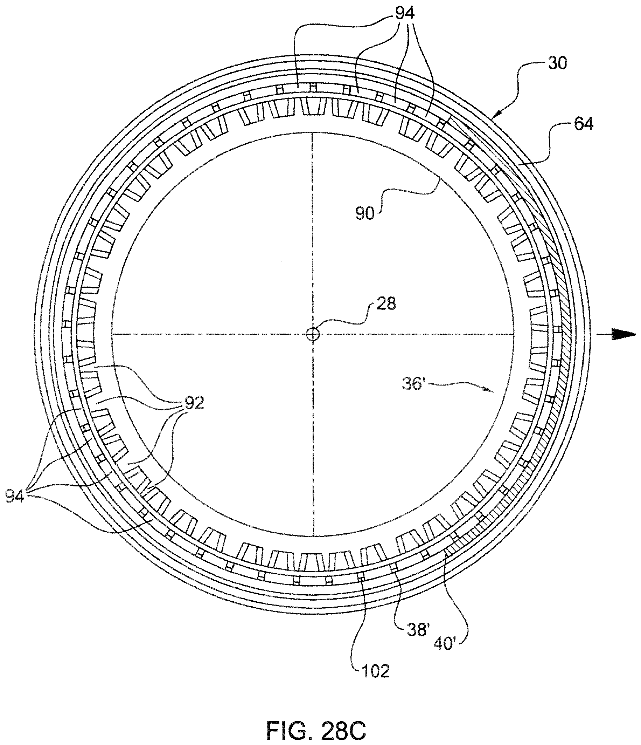

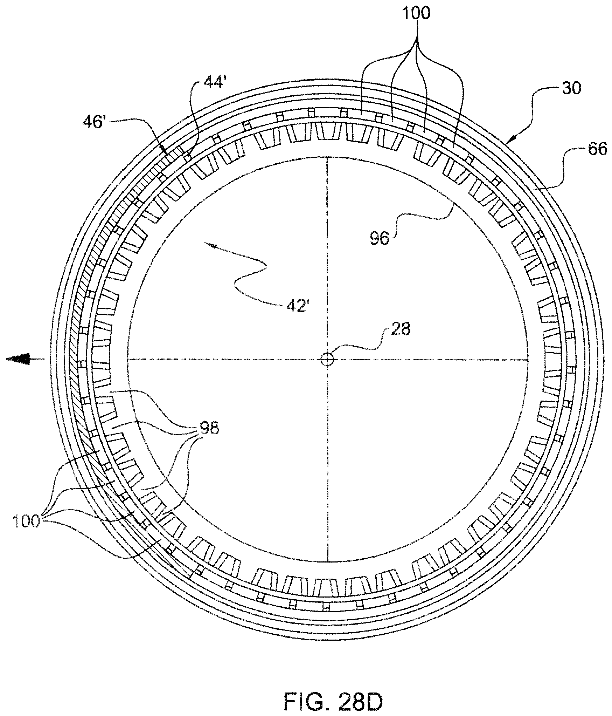

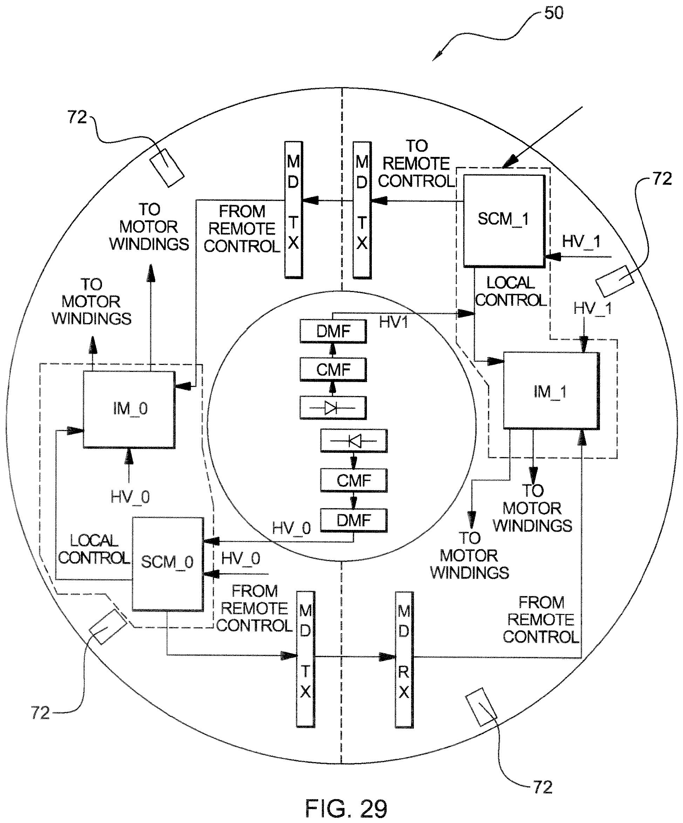

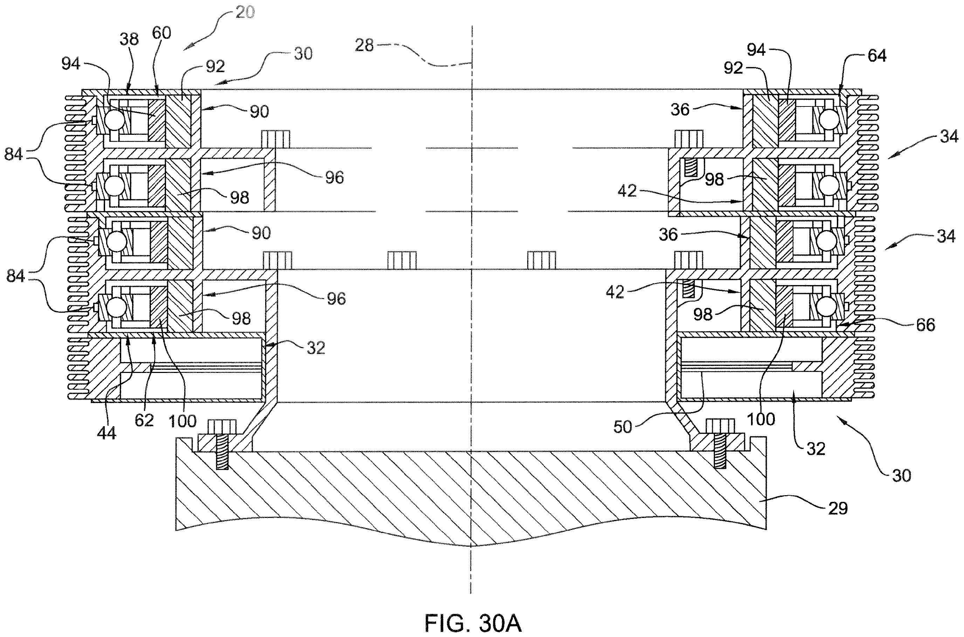

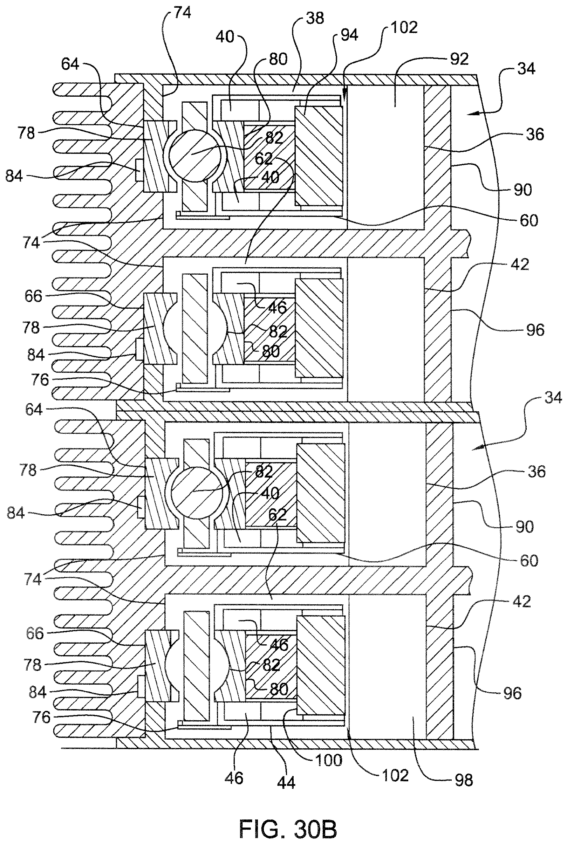

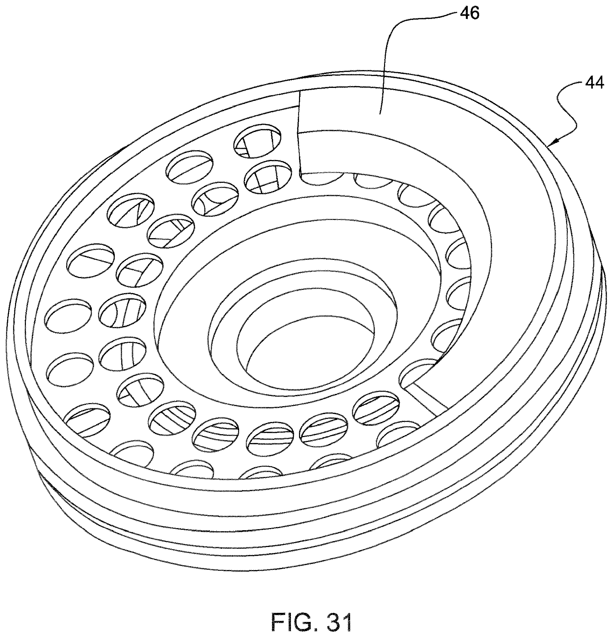

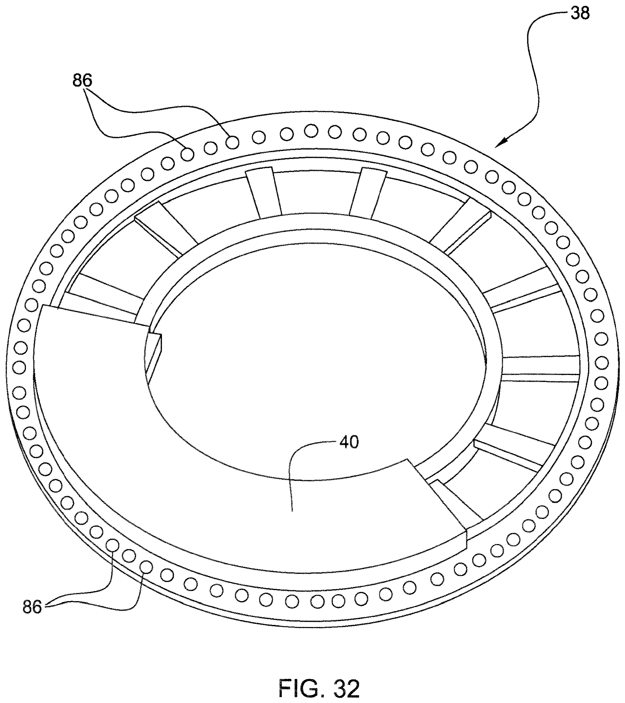

FIG. 25 and 26 further illustrate the invention. FIG. 25A-C show the stacking of the imbalance rotors and motors, and the stacking of the separate electronics control subsystems 50', 50". The stages are vertically stackable and separate, with the electronics controls proximate the axis 28 and the housing ID and the rotor imbalance masses proximate the housing OD and distal from the axis 28. As a comparison between FIG. 25 and 26 shows, the vertically stackable stages are separate, and the first stage is used solely and separate as shown in FIG.25. FIG. 27A-B illustrates the stacking of the stages. FIG. 27B illustrates sensing the position of rotors and the imbalance mass with sensors 70, contained within the housing 30, with the sensors 70 position and mounted to provided position information regarding the rotational position of the imbalance mass being controlled. An inner motor control loop closes a control loop around the motors driving the rotors based on rotor motor position feedback derived from motor position sensors 70, from the rotor magnetic encoder rotor position sensor read heads 70, which are shown as a Hall sensor. The inner loop servos the position of the motor to track commands sent from the vibration control stage VC controller such as the Rev Cmd. In FIG. 24 these commands are in the form of a phase with respect to the provided tachometer signal input. FIG. 28A-D illustrate examples of the invention. FIG. 28A shows a first motor 36 with first imbalance rotor 38 with first imbalance rotor eccentric mass concentration 40. FIG. 28B shows a second motor 42 with second imbalance rotor 44 with second imbalance rotor eccentric mass concentration 46. FIG. 28C shows a third motor 36' with third imbalance rotor 38' with third imbalance rotor eccentric mass concentration 40'. FIG. 28D shows a fourth motor 42' with fourth imbalance rotor 44' with fourth imbalance rotor eccentric mass concentration 46'. FIG. 29 illustrates an example of an electronics control system 50 for housing in the annular housing, with the electronics control system 50 circuit board including orthogonally positioned accelerometers 72, with the vibration sensor accelerometer hardware 72 providing orthogonal acceleration vibration signals. FIG. 30A-B illustrates another example of the invention with the stacking of the rotor stages. In FIG. 30A the electronics control system 50 is shown stacked below the lower rotor. FIG. 31-32 illustrate further examples of imbalance rotors with imbalance mass concentrations.

The invention includes a rotary wing aircraft, the rotary wing aircraft having a nonrotating aerostructure body and a rotating rotary wing hub, the rotary wing aircraft including a vehicle vibration control system, a rotating hub mounted vibration control system, the rotating hub mounted vibration control system mounted to the rotating rotary wing hub with the rotating hub mounted vibration control system rotating with the rotating rotary wing hub, a rotary wing aircraft member sensor for outputting rotary wing aircraft member data correlating to the relative rotation of the rotating rotary wing hub member rotating relative to the nonrotating body,at least a first nonrotating body vibration sensor, the at least first nonrotating body vibration sensor outputting at least first nonrotating body vibration sensor data correlating to vibrations, at least a first nonrotating body circular force generator, the at least a first nonrotating body circular force generator fixedly coupled with the nonrotating body, a distributed force generation data communications network link, the distributed force generation data communications system network link linking together at least the first nonrotating body circular force generator and the rotating hub mounted vibration control system wherein the rotating hub mounted vibration control system and the first nonrotating body circular force generator communicate force generation vibration control data through the distributed force generation data communications network, the at least first nonrotating body circular force generator controlled to produce a rotating force with a controllable rotating force magnitude and a controllable rotating force phase, the controllable rotating force magnitude controlled from a minimal force magnitude up to a maximum force magnitude, and with the controllable rotating force phase controlled in reference to the rotary wing aircraft member sensor data correlating to the relative rotation of the rotating rotary wing hubrotating relative to the nonrotating body wherein the vibration sensed by the at least first nonrotating body vibration sensor is reduced.

The invention includes an aircraft vibration control system, for a aircraft vehicle having a nonrotating aerostructure body and a rotating rotary wing hub, including, a rotating hub mounted vibration control system, the rotating hub mounted vibration control system mounted to the rotating rotary wing hub with the rotating hub mounted vibration control system rotating with the rotating rotary wing hub, a rotary wing aircraft member sensor for outputting rotary wing aircraft member data correlating to the relative rotation of the rotating rotary wing hub member rotating relative to the nonrotating body, at least a first nonrotating body vibration sensor, the at least first nonrotating body vibration sensor outputting at least first nonrotating body vibration sensor data correlating to vibrations, at least a first nonrotating body force generator, the at least first nonrotating body force generator fixedly coupled with the nonrotating body, a distributed force generation data communications network serial link, the distributed force generation data communications system network serial link linking together at least the first nonrotating body force generator and the rotating hub mounted vibration control system wherein the rotating hub mounted vibration control system and the first nonrotating body force generator communicate and share force generation vibration control data through the distributed force generation data communications network, the at least first nonrotating body force generator controlled to produce a force with a controllable magnitude and a controllable phase, the controllable force magnitude controlled from a minimal force magnitude up to a maximum force magnitude, and with the controllable force phase controlled in reference to the rotary wing aircraft member sensor data correlating to the relative rotation of the rotating rotary wing hub rotating relative to the nonrotating body and the rotating hub mounted vibration control system includes at least a first hub mounted vibration control system rotor with a first imbalance mass concentration, the first hub mounted vibration control system rotor driven to rotate at a first rotation speed greater than an operational rotation frequency of the rotating rotary wing hub, and at least a second hub mounted vibration control system rotor with a second imbalance mass concentration, the second hub mounted vibration control system rotor driven to rotate at the first rotation speed greater than the operational rotation frequency of the rotating rotary wing hub, wherein the vibration sensed by the at least first nonrotating body vibration sensor is reduced.

The invention includes an aircraft vibration control system, for a aircraft vehicle having a nonrotating aerostructure body and a rotating rotary wing hub, including, a rotating hub mounted means for controlling vibrations, the rotating hub mounted means for controlling vibrations mounted to the rotating rotary wing hub with the rotating hub mounted means for controlling vibrations rotating with the rotating rotary wing hub, a rotary wing aircraft member sensor for outputting rotary wing aircraft member data correlating to the relative rotation of the rotating rotary wing hub member rotating relative to the nonrotating body, at least a first nonrotating body vibration sensor, the at least first nonrotating body vibration sensor outputting at least first nonrotating body vibration sensor data correlating to vibrations, at least a first nonrotating body force generator, the at least first nonrotating body force generator fixedly coupled with the nonrotating body, a means for linking together the first nonrotating body force generator and the rotating hub mounted means for controlling vibrations wherein the rotating hub mounted means for controlling vibrations and the first nonrotating body force generator communicate and share force generation vibration control data through the means for linking, the at least first nonrotating body force generator controlled to produce a force with a controllable magnitude and a controllable phase, the controllable force magnitude controlled from a minimal force magnitude up to a maximum force magnitude, and with the controllable force phase controlled in reference to the rotary wing aircraft member sensor data correlating to the relative rotation of the rotating rotary wing hub rotating relative to the nonrotating body and, wherein the vibration sensed by the at least first nonrotating body vibration sensor is reduced.

The invention includes a vehicle vibration control system for controlling troublesome vibrations in a nonrotating vehicle body having a rotating machine member, the vehicle vibration control system including a vehicle vibration control system controller, a rotating machine member sensor, for inputting vehicle rotating machine member data correlating to a relative rotation of the rotating machine member rotating relative to the nonrotating body into the vehicle vibration control system controller, at least a first nonrotating vehicle body vibration sensor, the at least first nonrotating vehicle body vibration sensor inputting at least first nonrotating vehicle body vibration sensor data correlating to vehicle vibrations into the vehicle vibration control system controller, at least a first nonrotating vehicle body circular force generator, the at least a first nonrotating vehicle body circular force generator for fixedly mounting to the nonrotating vehicle body wherein the at least first nonrotating vehicle body circular force generator is controlled by the controller to produce a rotating force with a controllable rotating force magnitude and a controllable rotating force phase, the controllable rotating force magnitude controlled from a minimal force magnitude up to a maximum force magnitude, and with the controllable rotating force phase controlled in reference to the vehicle rotating machine member sensor data correlating to the relative rotation of the vehicle rotating machine member rotating relative to the nonrotating vehicle body with the vehicle vibration sensed by the at least first nonrotating vehicle body vibration sensor reduced by the controller, and a hub mounted vibration control system, the hub mounted vibration control system linked with the vehicle vibration control system controller.

The invention includes a method of controlling vibration, the method including, providing at least a first nonrotating vehicle body circular force generator, fixedly mounting the at least first nonrotating vehicle body circular force generator to a nonrotating vehicle body, controlling the at least first nonrotating vehicle body circular force generator to produce a rotating force with a controllable rotating force magnitude and a controllable rotating force phase, providing hub mounted vibration control system, fixedly mounting the hub mounted vibration control system to a rotatable hub of the nonrotating vehicle body, providing distributed force generation data communications network link and linking the hub mounted vibration control system together with the at least first nonrotating vehicle body circular force generator.

The invention includes an aircraft vibration control system, for an aircraft vehicle having a nonrotating aerostructure body and a rotating rotary wing hub driven to rotate about a rotating hub center Z axis of rotation by an engine and transmission, the aircraft vibration control system including, a rotating hub mounted means for controlling vibrations, a rotary wing aircraft member sensor for outputting rotary wing aircraft member data correlating to the relative rotation of the rotating rotary wing hub member rotating relative to the nonrotating body, at least a first nonrotating body vibration sensor, the at least first nonrotating body vibration sensor outputting at least first nonrotating body vibration sensor data correlating to vibrations, at least a first nonrotating body oriented means for generating force and a second nonrotating body oriented means for generating force, the at least first nonrotating body oriented means for generating force for fixedly coupling with the nonrotating body proximate the gear box transmission, the second nonrotating body oriented means for generating force for fixedly coupling with the nonrotating body proximate the gear box transmission, a means for linking together at least the first and second nonrotating body means force and the rotating hub mounted vibration control means wherein the vibration sensed by the at least first nonrotating body vibration sensor is reduced.

**Claims**

1.  An aircraft vibration control system, comprising:

a helicopter (520) having a gear box transmission (526);
a nonrotating aerostructure body (524) of said helicopter (520);
a rotating hub (522) driven by said gear box transmission (526) to rotate about a center Z axis of rotation (28) of said rotating hub (522);
a hub mounted vibration control system (HMVCS) (20), said HMVCS (20) mounted to said rotating hub (522) with said HMVCS (20) rotating about said center Z axis and creating a force in an XY plane, wherein said HMVCS (20) includes:

at least a first HMVCS rotor (38) with a first imbalance mass concentration (40), said first HMVCS rotor (38) driven to rotate at a first rotation speed greater than an operational rotation frequency of said rotating hub (522); and
at least a second HMVCS rotor (44) with a second imbalance mass concentration (46), said second HMVCS rotor (44) driven to rotate at said first rotation speed greater than said operational rotation frequency of said rotating hub (522);

a tachometer sensor (552) providing data correlating to said relative rotation of said rotating hub (522) rotating relative to said nonrotating aerostructure body (524);
at least a first vibration sensor (554) attached to said nonrotating aerostructure body (524), said first vibration sensor (554) outputting vibration sensor data correlating to vibrations of said nonrotating aerostructure body (524),
a vibration control system controller (411) to control at least three circular force generators (CFGs) (530), wherein said vibration controller (411) receives input from said tachometer sensor (552) and said first vibration sensor (554);

wherein the at least three CFGs (530) are fixedly coupled to said nonrotating aerostructure body (524) proximate said gear box transmission (526);

wherein the CFGs (530) rotate in the ZY and ZX planes normal to the XY plane of the HMVCS (20);

said first CFG (530) has a first rotating masses axis (530'), with said first rotating masses axis (530') perpendicular to said center Z axis of rotation (28);

said second CFG (530) has a second rotating masses axis (530"), said second rotating masses axis (530") perpendicular to said center Z axis of rotation (28) and said first rotating masses axis (530') nonparallel to said second rotating masses axis (530");

said third CFG (530) has a third rotating masses axis (530'''),-said third rotating masses axis (530''') perpendicular to said center Z axis of rotation (28);

wherein said vibration control system controller (411) controls said first CFG (530) to produce a first rotating force centered about said first rotating masses axis (530') with a controllable rotating force magnitude and a controllable rotating force phase, said controllable rotating force magnitude controlled from a minimal force magnitude up to a maximum force magnitude, and with said controllable rotating force phase controlled in reference to said aircraft member sensor data correlating to said relative rotation of said rotating hub (522) rotating relative to said nonrotating aerostructure body (524);

wherein said vibration control system controller (411) controls said second CFG (530) to produce a second rotating force centered about said second rotating masses axis (530") with a controllable rotating force magnitude and a controllable rotating force phase, said controllable rotating force magnitude controlled from a minimal force magnitude up to a maximum force magnitude, and with said controllable rotating force phase controlled in reference to said aircraft member sensor data correlating to said relative rotation of said rotating hub (522) rotating relative to said nonrotating aerostructure body (524);

wherein said vibration control system controller (411) controls said third CFG (530) to produce a third rotating force centered about said third rotating masses axis (530''') with a controllable rotating force magnitude and a controllable rotating force phase, said controllable rotating force magnitude controlled from a minimal force magnitude up to a maximum force magnitude, and said controllable rotating force phase controlled in reference to said aircraft member sensor data correlating to said relative rotation of said rotating hub (522) rotating relative to said nonrotating aerostructure body (524);

wherein said HMVCS (20) and said first, second and third force generators (530) are controlled together to provide at least five degrees of freedom of control; and

wherein said vibration sensed by said at least one first vibration sensor (554) is reduced.

2. An aircraft vibration control system (409) as claimed in claim 1, including a distributed data communications network link, said distributed data communications network link linking together at least said first and second CFGs (530) and said HMVCS (20), wherein said HMVCS (20) and said first CFG (530) communicate through said distributed data communications network link.

3. An aircraft vibration control system (409), as claimed in claim 2, said first vibration sensor (554) outputting first rotating body vibration sensor data into said distributed data communications network link.

4. An aircraft vibration control system (409), as claimed in claim 2, wherein a master controller connected to said distributed data communications network link controls said aircraft vibration control system (409) and said first CFG (530) wherein vibrations sensed by said at least a first nonrotating body vibration sensor (554) are minimized.

5. An aircraft vibration control system (409), as claimed in claim 2, wherein said distributed data communications network link is a serial communications network link.

6. An aircraft vibration control system (409) as claimed in claim 2, said first CFG (530) including

a first rotating mass ($mass_{1\_1}$) (534) controllably driven about said first CFG rotating masses axis (530') with a first rotating mass ($mass_{1\_1}$) (534) controllable rotating imbalance phase $\Phi_{1\_1}$ and a second corotating mass ($mass_{1\_2}$) (536) controllably driven about said first CFG rotating masses axis (530') with a second rotating mass controllable rotating imbalance phase $\Phi_{1\_2}$;

said second CFG (530) including a first rotating mass ($mass_{2\_1}$) (534) controllably driven about said second CFG rotating masses axis (530") with a first rotating mass controllable rotating imbalance phase $\Phi_{2\_1}$ and a second corotating mass ($mass_{2\_2}$) (536) controllably driven about said second CFG rotating masses axis (530") with a second rotating mass controllable rotating imbalance phase $\Phi_{2\_2}$, said second CFG (530) oriented relative to said first CFG (530) wherein said second CFG rotating masses axis (530") is nonparallel with said first CFG rotating masses axis (530'); and

said third CFG (530) including a first rotating mass (mass$_{3\_1}$) (534) controllably driven about said third CFG rotating masses axis (530"') with a first rotating mass controllable rotating imbalance phase $\Phi_{3\_1}$ and a second corotating mass (mass$_{3\_2}$) (536) controllably driven about said third CFG rotating masses axis (530"') with a second rotating mass controllable rotating imbalance phase $\Phi_{3\_2}$, said third CFG (530) oriented relative to said first and second CFGs (530), wherein said third CFG rotating masses axis (530"') is oriented relative to said first and second CFGs rotating masses axes (530', 530").

**Patentansprüche**

1. Ein Luftfahrzeug-Vibrationssteuerungssystem, beinhaltend:

einen Helikopter (520), der ein Getriebe (526) aufweist;
einen nichtdrehenden Flugstrukturkörper (524) des Helikopters (520);
eine drehende Nabe (522), die durch das Getriebe (526) angetrieben wird, um sich um eine mittlere Z-Drehachse (28) der drehenden Nabe (522) zu drehen;
ein nabenmontiertes Vibrationssteuerungssystem (HMVCS) (20), wobei das HMVCS (20) an der drehenden Nabe (522) montiert ist, wobei sich das HMVCS (20) um die mittlere Z-Achse dreht und eine Kraft in einer XY-Ebene erzeugt, wobei das HMVCS (20) Folgendes umfasst:

mindestens einen ersten HMVCS-Rotor (38) mit einer ersten Unwuchtmassenkonzentration (40), wobei der erste HMVCS-Rotor (38) angetrieben wird, um sich mit einer ersten Drehgeschwindigkeit zu drehen, die größer als eine Betriebsdrehfrequenz der drehenden Nabe (522) ist; und
mindestens einen zweiten HMVCS-Rotor (44) mit einer zweiten Unwuchtmassenkonzentration (46), wobei der zweite HMVCS-Rotor (44) angetrieben wird, um sich mit der ersten Drehgeschwindigkeit zu drehen, die größer als die Betriebsdrehfrequenz der drehenden Nabe (522) ist;

einen Drehzahlmessersensor (552), der Daten bereitstellt, die mit der relativen Drehung der drehenden Nabe (522), die sich relativ zu dem nichtrotierenden Flugstrukturkörper (524) dreht, korrelieren;
mindestens einen ersten Vibrationssensor (554), der an dem nichtdrehenden Flugstrukturkörper (524) angebracht ist, wobei der erste Vibrationssensor (554) Vibrationssensordaten ausgibt, die mit Vibrationen des nichtdrehenden Flugstrukturkörpers (524) korrelieren,
eine Vibrationssteuerungssystem-Steuereinheit (411) zum Steuern von mindestens drei Kreiskraftgeneratoren (CFGs) (530), wobei die Vibrationssteuereinheit (411) einen Eingang von dem Drehzahlmessersensor (552) und dem ersten Vibrationssensor (554) empfängt;
wobei die mindestens drei CFGs (530) nahe dem Getriebe (526) fest mit dem nichtdrehenden Flugstrukturkörper (524) gekoppelt sind;
wobei sich die CFGs (530) in der ZY- und ZX-Ebene orthogonal zu der XY-Ebene des HMVCS (20) drehen;
der erste CFG (530) eine erste Drehmassenachse (530') aufweist, wobei die erste Drehmassenachse (530') zu der mittleren Z-Drehachse (28) senkrecht ist;
der zweite CFG (530) eine zweite Drehmassenachse (530") aufweist, wobei die zweite Drehmassenachse (530") zu der mittleren Z-Drehachse (28) senkrecht ist und die erste Drehmassenachse (530') zu der zweiten Drehmassenachse (530") nicht parallel ist;
der dritte CFG (530) eine dritte Drehmassenachse (530"') aufweist, wobei die dritte Drehmassenachse (530"') zu der mittleren Z-Drehachse (28) senkrecht ist;
wobei die Vibrationssteuerungssystem-Steuereinheit (411) den ersten CFG (530) steuert, sodass er eine erste Drehkraft mit einer steuerbaren Drehkraftstärke und einer steuerbaren Drehkraftphase produziert, die um die erste Drehmassenachse (530') zentriert ist, wobei die steuerbare Drehkraftstärke von einer minimalen Kraftstärke zu einer maximalen Kraftstärke gesteuert wird und wobei die steuerbare Drehkraftphase in Bezug auf die Luftfahrzeugelementsensordaten, die mit der relativen Drehung der drehenden Nabe (522), die sich relativ zu dem nichtdrehenden Flugstrukturkörper (524) dreht, korrelieren, gesteuert wird;
wobei die Vibrationssteuerungssystem-Steuereinheit (411) den zweiten CFG (530) steuert, sodass er eine zweite Drehkraft mit einer steuerbaren Drehkraftstärke und einer steuerbaren Drehkraftphase produziert, die um die zweite Drehmassenachse (530") zentriert ist, wobei die steuerbare Drehkraftstärke von einer minimalen Kraftstärke zu einer maximalen Kraftstärke gesteuert wird und wobei die steuerbare Drehkraftphase in Bezug auf die Luftfahrzeugelementsensordaten, die mit der relativen Drehung der drehenden Nabe (522), die sich relativ zu dem nichtdrehenden Flugstrukturkörper (524) dreht, korrelieren, gesteuert wird;

wobei die Vibrationssteuerungssystem-Steuereinheit (411) den dritten CFG (530) steuert, sodass er eine dritte Drehkraft mit einer steuerbaren Drehkraftstärke und einer steuerbaren Drehkraftphase produziert, die um die dritte Drehmassenachse (530''') zentriert ist, wobei die steuerbare Drehkraftstärke von einer minimalen Kraftstärke zu einer maximalen Kraftstärke gesteuert wird und die steuerbare Drehkraftphase in Bezug auf die Luftfahrzeugelementsensordaten, die mit der relativen Drehung der drehenden Nabe (522), die sich relativ zu dem nichtdrehenden Flugstrukturkörper (524) dreht, korrelieren, gesteuert wird;

wobei das HMVCS (20) und der erste, der zweite und der dritte Kraftgenerator (530) zusammen gesteuert werden, um mindestens fünf Steuerungsfreiheitsgrade bereitzustellen; und

wobei die durch den mindestens einen ersten Vibrationssensor (554) abgefühlte Vibration reduziert wird.

2. Luftfahrzeug-Vibrationssteuerungssystem (409) gemäß Anspruch 1, umfassend eine verteilte Datenkommunikationsnetzwerkverknüpfung, wobei die verteilte Datenkommunikationsnetzwerkverknüpfung mindestens den ersten und den zweiten CFG (530) und das HMVCS (20) miteinander verknüpft, wobei das HMVCS (20) und der erste CFG (530) über die verteilte Datenkommunikationsnetzwerkverknüpfung kommunizieren.

3. Luftfahrzeug-Vibrationssteuerungssystem (409) gemäß Anspruch 2, wobei der erste Vibrationssensor (554) erste Drehkörper-Vibrationssensordaten in die verteilte Datenkommunikationsnetzwerkverknüpfung ausgibt.

4. Luftfahrzeug-Vibrationsssteuerungssystem (409) gemäß Anspruch 2, wobei eine Master-Steuereinheit, die mit der verteilten Datenkommunikationsnetzwerkverknüpfung verbunden ist, das Luftfahrzeug-Vibrationssteuerungssystem (409) und den ersten CFG (530) steuert, wobei von dem mindestens einen ersten Vibrationssensor (554) des nichtdrehenden Körpers abgefühlte Vibrationen minimiert werden.

5. Luftfahrzeug-Vibrationssteuerungssystem (409) gemäß Anspruch 2, wobei die verteilte Datenkommunikationsnetzwerkverknüpfung eine serielle Kommunikationsnetzwerkverknüpfung ist.

6. Ein Luftfahrzeug-Vibrationssteuerungssystem (409) gemäß Anspruch 2, wobei der erste CFG (530) Folgendes umfasst:

eine erste Drehmasse ($mass_{1\_1}$) (534), die mit einer steuerbaren Drehunwuchtphase $\Phi_{1\_1}$ der ersten Drehmasse ($mass_{1\_1}$) (534) steuerbar um die Drehmassenachse (530') des ersten CFG angetrieben wird, und eine zweite, synchron drehende Masse ($mass_{1\_2}$) (536), die mit einer steuerbaren Drehunwuchtphase $\Phi_{1\_2}$ der zweiten Drehmasse steuerbar um die Drehmassenachse (530') des ersten CFG angetrieben wird;

wobei der zweite CFG (530) eine erste Drehmasse ($mass_{2\_1}$) (534), die mit einer steuerbaren Drehunwuchtphase $\Phi_{2\_1}$ der ersten Drehmasse steuerbar um die Drehmassenachse (530") des zweiten CFG angetrieben wird, und eine zweite,

synchron drehende Masse ($mass_{2\_2}$) (536), die mit einer steuerbaren Drehunwuchtphase $\Phi_{2\_2}$ der zweiten Drehmasse steuerbar um die Drehmassenachse (530") des zweiten CFG angetrieben wird, umfasst, wobei der zweite CFG (530) relativ zu dem ersten CFG (530) ausgerichtet ist, wobei die Drehmassenachse (530") des zweiten CFG zu der Drehmassenachse (530') des ersten CFG nicht parallel ist; und

wobei der dritte CFG (530) eine erste Drehmasse ($mass_{3\_1}$) (534), die mit einer steuerbaren Drehunwuchtphase $\Phi_{3\_1}$ der ersten Drehmasse steuerbar um die Drehmassenachse (530''') des dritten CFG angetrieben wird, und eine zweite, synchron drehende Masse ($mass_{3\_2}$) (536), die mit einer steuerbaren Drehunwuchtphase $\Phi_{3\_2}$ der zweiten Drehmasse steuerbar um die Drehmassenachse (530''') des dritten CFG angetrieben wird, umfasst, wobei der dritte CFG (530) relativ zu dem ersten und dem zweiten CFG (530) ausgerichtet ist, wobei die Drehmassenachse (530''') des dritten CFG relativ zu den Drehmassenachsen (530', 530") des ersten und des zweiten CFG ausgerichtet ist.

## Revendications

1. Un système de contrôle de vibrations d'aéronef, comprenant :

un hélicoptère (520) ayant une transmission à boîte de vitesses (526) ;
un corps d'aérostructure non rotatif (524) dudit hélicoptère (520) ;
un moyeu rotatif (522) entraîné par ladite transmission à boîte de vitesses (526) pour tourner autour d'un axe de rotation de centre Z (28) dudit moyeu rotatif (522) ;

un système de contrôle de vibrations monté sur moyeu (HMVCS) (20), ledit HMVCS (20) étant monté sur ledit moyeu rotatif (522) avec ledit HMVCS (20) qui tourne autour dudit axe de centre Z et qui crée une force dans un plan XY, où ledit HMVCS (20) inclut :

au moins un premier rotor de HMVCS (38) avec une première concentration de masse de déséquilibre (40), ledit premier rotor de HMVCS (38) étant entraîné pour tourner à une première vitesse de rotation supérieure à une fréquence de rotation opérationnelle dudit moyeu rotatif (522) ; et

au moins un deuxième rotor de HMVCS (44) avec une deuxième concentration de masse de déséquilibre (46), ledit deuxième rotor de HMVCS (44) étant entraîné pour tourner à ladite première vitesse de rotation supérieure à ladite

fréquence de rotation opérationnelle dudit moyeu rotatif (522) ;

un capteur tachymétrique (552) fournissant des données en corrélation avec ladite rotation relative dudit moyeu rotatif (522) qui tourne relativement audit corps d'aérostructure non rotatif (524) ;

au moins un premier capteur de vibrations (554) attaché audit corps d'aérostructure non rotatif (524), ledit premier capteur de vibrations (554) sortant des données de capteur de vibrations en corrélation avec des vibrations dudit corps d'aérostructure non rotatif (524),

un contrôleur de système de contrôle de vibrations (411) pour contrôler au moins trois générateurs de force circulaire (CFG) (530), où ledit contrôleur de vibrations (411) reçoit une entrée dudit capteur tachymétrique (552) et dudit premier capteur de vibrations (554) ;

où les au moins trois CFG (530) sont couplés de manière fixe audit corps d'aérostructure non rotatif (524) à proximité de ladite transmission à boîte de vitesses (526) ;

où les CFG (530) tournent dans les plans ZY et ZX normaux au plan XY de l'HMVCS (20) ;

ledit premier CFG (530) a un premier axe de masses rotatives (530'), ledit premier axe de masses rotatives (530') étant perpendiculaire audit axe de rotation de centre Z (28) ;

ledit deuxième CFG (530) a un deuxième axe de masses rotatives (530"), ledit deuxième axe de masses rotatives (530") étant perpendiculaire audit axe de rotation de centre Z (28) et ledit premier axe de masses rotatives (530') étant non parallèle audit deuxième axe de masses rotatives (530") ;

ledit troisième CFG (530) a un troisième axe de masses rotatives (530'''), ledit troisième axe de masses rotatives (530''') étant perpendiculaire audit axe de rotation de centre Z (28) ;

où ledit contrôleur de système de contrôle de vibrations (411) contrôle ledit premier CFG (530) pour produire une première force de rotation centrée autour dudit premier axe de masses rotatives (530') avec une amplitude de force de rotation contrôlable et

une phase de force de rotation contrôlable, ladite amplitude de force de rotation contrôlable étant contrôlée d'une amplitude de force minimale à une amplitude de force maximale, et ladite phase de force de rotation contrôlable étant contrôlée en référence auxdites données de capteur d'élément d'aéronef en corrélation avec ladite rotation relative dudit moyeu rotatif (522) qui tourne relativement audit corps d'aérostructure non rotatif (524) ;

où ledit contrôleur de système de contrôle de vibrations (411) contrôle ledit deuxième CFG (530) pour produire une deuxième force de rotation centrée autour dudit deuxième axe de masses rotatives (530") avec une amplitude de force de rotation contrôlable et

une phase de force de rotation contrôlable, ladite amplitude de force de rotation contrôlable étant contrôlée d'une amplitude de force minimale à une amplitude de force maximale, et ladite phase de force de rotation contrôlable étant contrôlée en référence auxdites données de capteur d'élément d'aéronef en corrélation avec ladite rotation relative dudit moyeu rotatif (522) qui tourne relativement audit corps d'aérostructure non rotatif (524) ;

où ledit contrôleur de système de contrôle de vibrations (411) contrôle ledit troisième CFG (530) pour produire une troisième force de rotation centrée autour dudit troisième axe de masses rotatives (530''') avec une amplitude de force de rotation contrôlable et

une phase de force de rotation contrôlable, ladite amplitude de force de rotation contrôlable étant contrôlée d'une amplitude de force minimale à une amplitude de force maximale, et ladite phase de force de rotation contrôlable étant contrôlée en référence auxdites données de capteur d'élément d'aéronef en corrélation avec ladite rotation relative dudit moyeu rotatif (522) qui tourne relativement audit corps d'aérostructure non rotatif (524) ;

où ledit HMVCS (20) et lesdits premier, deuxième et troisième générateurs de force (530) sont contrôlés conjointement pour fournir au moins cinq degrés de liberté de contrôle ; et

où ladite vibration captée par ledit au moins un premier capteur de vibrations (554) est réduite.

**2.** Un système de contrôle de vibrations d'aéronef (409) tel que revendiqué dans la revendication 1, incluant une liaison de réseau de communications de données distribuées, ladite liaison de réseau de communications de données distribuées reliant ensemble au moins lesdits premier et deuxième CFG (530) et ledit HMVCS (20), où ledit HMVCS (20) et ledit premier CFG (530) communiquent par l'intermédiaire de ladite liaison de réseau de communications de données distribuées.

**3.** Un système de contrôle de vibrations d'aéronef (409), tel que revendiqué dans la revendication 2, ledit premier capteur de vibrations (554) sortant des premières données de capteur de vibrations de corps rotatif dans ladite liaison de réseau de communications de données distribuées.

**4.** Un système de contrôle de vibrations d'aéronef (409), tel que revendiqué dans la revendication 2, où un contrôleur maître connecté à ladite liaison de réseau de communications de données distribuées contrôle ledit système de contrôle de vibrations d'aéronef (409) et ledit premier CFG (530) où des vibrations captées par ledit au moins un premier capteur de vibrations de corps non rotatif (554) sont minimalisées.

**5.** Un système de contrôle de vibrations d'aéronef (409), tel que revendiqué dans la revendication 2, où ladite liaison de réseau de communications de données distribuées est une liaison de réseau de communications en série.

**6.** Un système de contrôle de vibrations d'aéronef (409) tel que revendiqué dans la revendication 2, ledit premier CFG (530) incluant

une première masse rotative ($mass_{1\_1}$) (534) entraînée de manière contrôlable autour dudit axe de masses rotatives de premier CFG (530') avec une phase de déséquilibre rotatif contrôlable $\phi_{1\_1}$ de première masse rotative ($mass_{1\_1}$) (534) et une deuxième masse co-rotative ($mass_{1\_2}$) (536) entraînée de manière contrôlable autour dudit axe de masses rotatives de premier CFG (530') avec une phase de déséquilibre rotatif contrôlable $\phi_{1\_2}$ de deuxième masse rotative ;
ledit deuxième CFG (530) incluant une première masse rotative ($mass_{2\_1}$) (534) entraînée de manière contrôlable autour dudit axe de masses rotatives de deuxième CFG (530") avec une phase de déséquilibre rotatif contrôlable $\phi_{2\_1}$ de première masse rotative et une deuxième masse co-rotative ($mass_{2\_2}$) (536) entraînée de manière contrôlable autour dudit axe de masses rotatives de deuxième CFG (530") avec une phase de déséquilibre rotatif contrôlable $\phi_{2\_2}$ de deuxième masse rotative, ledit deuxième CFG (530) étant orienté relativement audit premier CFG (530) où ledit axe de masses rotatives de deuxième CFG (530") est non parallèle audit axe de masses rotatives de premier CFG (530') ; et
ledit troisième CFG (530) incluant une première masse rotative ($mass_{3\_1}$) (534) entraînée de manière contrôlable autour dudit axe de masses rotatives de troisième CFG (530''') avec une phase de déséquilibre rotatif contrôlable $\phi_{3\_1}$ de première masse rotative et une deuxième masse co-rotative ($mass_{3\_2}$) (536) entraînée de manière contrôlable autour dudit axe de masses rotatives de troisième CFG (530''') avec une phase de déséquilibre rotatif contrôlable $\phi_{3\_2}$ de deuxième masse rotative, ledit troisième CFG (530) étant orienté relativement auxdits premier et deuxième CFG (530), où ledit axe de masses rotatives de troisième CFG (530''') est orienté relativement auxdits axes de masses rotatives de premier et deuxième CFG (530', 530").

FIG. 1A

FIG. 1B

COM. BUS PREFERABLY USES CANbus
CFG (CIRCULAR FORCE GENERATOR) PRODUCES ROTATING FORCE WITH CONTROLLED
ROTATING FORCE MAGNITUDE AND CONTROLLED ROTATING FORCE PHASE

FIG. 2

EP 2 944 568 B1

FIG. 3

FIG. 4

530

FIG. 5A

530

FIG. 5B

FIG. 5C

FIG. 5D

530

530'

FIG. 5E

CONNECTOR
TO SYSTEM

530', 530", 530''', 530''''

530', 530", 530''', 530''''

FIG. 5F

EP 2 944 568 B1

530', 530", 530'''

538

556

540

536

550

538

30'

530

**FIG. 5G**

FIG. 6A

530''''

530'

530''

530''''

530''

530'

FIG. 6B

FIG. 6C

FIG. 6D

FIG. 6E

FIG. 6F

INSTRUMENTATION - CONTROL SENSORS 554

FLOOR

524
530''''''
FRAME 3   FRAME 4   FRAME 5   FRAME 7

546
520

1X
1Y
1Z   PILOT   3   35

5X
5Z

7Y
7Z

530'''   530

530''''   530

36

2X
2Z   COPILOT   4Z   530

6Y   8Z

530''''
409

ROOF

544   520

FRAME 3   FRAME 4   FRAME 5   FRAME 7

33   16   18   31   37

PILOT

30   15

530'   530

COPILOT   530''

34   17   19   32

524   409

SIDEWALL

524

FRAME 3   FRAME 4   FRAME 5   FRAME 7

9y   11   13

PILOT

TAIL

COPILOT

10Z   12y   14z

16 CONTROL ACCELEROMETERS SENSORS 564 USED
(VARIOUS LOCATIONS ON FLOOR AND SIDEWALL)

FIG. 7A

NOSE

520

EP 2 944 568 B1

VERTICLE FRAME 7 TAILCONE

FIG. 7B

FIG. 7C

EP 2 944 568 B1

530'

530

BASE MOUNT
FIG. 7E

530'

SHEAR MOUNT
FIG. 7D

530

65

FIG. 8A

. . . OR COMBINATIONS THERE OF

EP 2 944 568 B1

20 HMVS

CFGs

28

Z

526

530

FIG. 8B

EP 2 944 568 B1

FIG. 8C

68

FIG. 8E

FIG. 8D

5 D.O.F. FLOATING MASS WITH AN HMVS ATTACHED AT THE TOP AND DIFFERENT
ARRANGEMENTS OF CFG's ATTACHED AT THE BOTTOM

FIG. 8F

HMVS & 6 BACK TO BACK CIRCULAR FORCE GENERATORS PRODUCING ONLY VERTICAL FORCE

FIG. 8G

EP 2 944 568 B1

HMVS & 4 BACK TO BACK CIRCULAR FORCE GENERATORS
PRODUCING ONLY VERTICAL FORCE

FIG. 8H

HMVS & 4 INDEPENDENT CIRCULAR FORCE GENERATORS

FIG. 81

HMVS & 3 INDEPENDENT CIRCULAR FORCE GENERATORS

FIG. 8J

EP 2 944 568 B1

FIG. 8K

EP 2 944 568 B1

AN UNCOUPLED VIBRATION CONTROL ALGORITHM FOR THE HMVS AND AVC CAN
RESULT IN DEGRADED PERFORMANCE AND ACTUATORS FIGHTING EACH OTHER

COUPLED CONTROL WITH HMVS AND 3 CFG's

UNCOUPLED CONTROL WITH HMVS AND 3 CFG's

HMVS   AVC (CFG 3&4)   AVC (CFG 5&6)

HMVS   AVC (CFG 3&4)   AVC (CFG 5&6)

FIG. 8L

EP 2 944 568 B1

FIG. 9

FIG. 10

FIG. 11A

FIG. 11B

FIG. 11C

MOTOR BEARINGS

574    574    571    571'    573    572

EP 2 944 568 B1

MOTOR
WINDING
571

572

573 SLAVE ROTATING MASS
IMBALANCE ROTOR (536)

575 BEARING

576 DETENT

574 MASTER ROTATING MASS
IMBALANCE ROTOR (534)

530'

571' MOTOR ROTOR
DRIVEN BY MOTOR WINDINGS AND
SUPPORTED BY BEARINGS 572

FIG. 11D

EP 2 944 568 B1

FIG. 11E

FIG. 11G

FIG. 11F

FIG. 12A

572     575

IMBALANCE
WEIGHT

576          576

SCALLOPED
ALUMINUM

576'

576'          575

ROTOR

STATOR

571"

FIG. 12B

FIG. 12C

FIG. 13A

FIG. 13C

FIG. 13B

FIG. 13D

EP 2 944 568 B1

FIG. 14

89

FIG. 15

FIG. 16

DISTRIBUTED MASTER SYSTEM CONTROL AUTHORITY

FIG. 17

FIG. 18

COM. BUS PREFERABLY USES CANbus

COM. BUS PREFERABLY USES CANbus

FIG. 19A

FIG. 19B

FIG. 20A

FIG. 20B

EP 2 944 568 B1

FIG. 20C

30

5P HMVS

3P HMVS

HUB INTERFACE ADAPTER

ELECTRONICS CONTROL SYSTEM 50 ON THE ID: SEPARATE ELECTRONICS SUBSYSTEMS 50', 50" FOR 3P AND 5P STAGES

EP 2 944 568 B1

FIG. 21

EP 2 944 568 B1

40, 46, 40', 46'

136, 142, 136', 142'

38, 44, 38', 44'

FIG. 22A

2nd ROTATING NET FORCE VECTOR

1st ROTATING NET FORCE VECTOR

FIG. 22B

CONTROL CONVERGENCE PROPERTIES: CONTROL TURNED ON AT t = 1s

FIG. 23A

FIG. 23B

3P AND 5P ROTOR POSITION COMMANDS

FIG. 23C

FIG. 24A

EP 2 944 568 B1

FIG. 24B

EP 2 944 568 B1

DUAL FREQUENCY HMVS

FIG. 25A

3P HMVS

FIG. 26A

28

B

50"

30

50'

SECTION B-B
3P AND 5P HMVS

FIG. 25B

A

SECTION A-A
3P HMVS

FIG. 26B

EP 2 944 568 B1

SECTION B-B

FIG. 25C

FIG. 27A

FIG. 27B

FIG. 28A

FIG. 28B

FIG. 28C

FIG. 28D

FIG. 29

FIG. 30A

FIG. 30B

46

44

FIG. 31

FIG. 32

**EP 2 944 568 B1**

**Patent documents cited in the description**

- US 20100034655 A1
- US 20060083617 A1
- WO 2009126608 A2